# EUROPEAN PATENT APPLICATION

(11) **EP 4 426 041 A1**
(43) Date of publication of application: **04.09.2024**
(21) Application number: 22964024.8
(22) Date of filing: 04.11.2022
(51) Int. Cl.: H04W 72/04

(54) **RESOURCE ALLOCATION METHOD AND APPARATUS, AND ELECTRONIC DEVICE**

(71) Applicant: New H3C Technologies Co., Ltd., Hangzhou, Zhejiang 310052 (CN)
(72) Inventor: ZHOU, Lei, Beijing 100102 (CN); KONG, Lei, Beijing 100102 (CN)
(74) Representative: Grünecker Patent- und Rechtsanwälte PartG mbB
(86) International application number: PCT/CN2022/129851
(87) International publication number: WO 2024/092715

(57) **Abstract**

The present disclosure provides resource assignment methods and apparatuses, and an electronic device. The method includes: sending Bandwidth part (BWP) frequency domain resource configuration information to a User Equipment (UE), where the BWP frequency domain resource configuration information includes a mapping relationship between BWP identifier and BWP frequency domain resource; sending a BWP activation configuration to the UE such that the UE obtains a target BWP identifier configuration pair corresponding to target BWP indication information included in the BWP activation configuration from a BWP activation configuration table, determines a target BWP frequency domain resource associated with the target BWP identifier configuration pair based on the BWP frequency domain resource configuration information, and performs data transmission based on the target BWP frequency domain resource; where the BWP activation configuration table comprises a mapping relationship between BWP indication information and BWP identifier configuration pair. In the technical solutions of the present disclosure, resource utilization rate can be improved.

## Description

### TECHNICAL FIELD

The present disclosure relates to the field of communication technologies and in particular to resource assignment methods and apparatuses and an electronic device.

### BACKGROUND

Time Division Duplex (TDD) systems are widely applied in mobile communication systems such as 5G system. In the TDD systems, a frame structure is divided into a DownLink (DL) slot, an UpLink (UL) slot and a special slot. The DL slot includes a plurality of DL symbols and downlink data is processed on the frequency domain resources corresponding to these DL symbols. The UL slot includes a plurality of UL symbols and uplink data is processed on the frequency domain resources corresponding to these UL symbols. The flexible slot includes at least one Flexible (F) symbol. The F symbol may be used for DL and namely, downlink data is processed on the frequency domain resources corresponding to the F symbol; the F symbol may also be used for UL and namely, uplink data is processed on the frequency domain resources corresponding to the F symbol; the F symbol may also be used for Guard Period (GP), and namely, uplink-downlink switching protection is performed on the frequency domain resources corresponding to the F symbol. The TDD system may work in a Half Duplex (HD) mode, namely, at a same moment, same frequency domain resources can be used only for UL or DL.

### SUMMARY

The present disclosure provides a resource assignment method which is applied to a base station device. The method includes: sending bandwidth part (BWP) frequency domain resource configuration information to a User Equipment (UE), where the BWP frequency domain resource configuration information includes a mapping relationship between BWP identifier and BWP frequency domain resource;

sending a BWP activation configuration to the UE such that the UE obtains a target BWP identifier configuration pair corresponding to target BWP indication information included in the BWP activation configuration from a BWP activation configuration table, determines a target BWP frequency domain resource associated with the target BWP identifier configuration pair based on the BWP frequency domain resource configuration information, and performs data transmission based on the target BWP frequency domain resource; where the BWP activation configuration table includes a mapping relationship between BWP indication information and BWP identifier configuration pair.

The present disclosure provides a resource assignment method, which is applied to a User Equipment (UE). The method includes: receiving Bandwidth part (BWP) frequency domain resource configuration information from a base station device; where the BWP frequency domain resource configuration information includes a mapping relationship between BWP identifier and BWP frequency domain resource;
obtaining a BWP activation configuration table; where the BWP activation configuration table includes a mapping relationship between BWP indication information and BWP identifier configuration pair;
receiving a BWP activation configuration from the base station device and obtaining a target BWP identifier configuration pair corresponding to target BWP indication information included in the BWP activation configuration from the BWP activation configuration table, and based on the BWP frequency domain resource configuration information, determining a target BWP frequency domain resource associated with the target BWP identifier configuration pair; based on the target BWP frequency domain resource, performing data transmission.

The present disclosure provides a resource assignment apparatus, which is applied to a base station device. The apparatus includes: a determining module, configured to determine Bandwidth part (BWP) frequency domain resource configuration information; where the BWP frequency domain resource configuration information includes a mapping relationship between BWP identifier and BWP frequency domain resource; a sending module, configured to send the BWP frequency domain resource configuration information to a User Equipment (UE), and send a BWP activation configuration to the UE, such that the UE obtains a target BWP identifier configuration pair corresponding to target BWP indication information included in the BWP activation configuration from a BWP activation configuration table, determines a target BWP frequency domain resource associated with the target BWP identifier configuration pair based on the BWP frequency domain resource configuration information, and performs data transmission based on the target BWP frequency domain resource; where the BWP activation configuration table includes a mapping relationship between BWP indication information and BWP identifier configuration pair.

The present disclosure provides a resource assignment apparatus, which is applied to a User Equipment (UE). The apparatus includes: a receiving module, configured to receive Bandwidth Part (BWP) frequency domain resource configuration information from a base station device; where the BWP frequency domain resource configuration information includes a mapping relationship between BWP identifier and BWP frequency domain resource; obtain a BWP activation configuration table; where the BWP activation configuration table includes a mapping relationship between BWP indication information and BWP identifier configuration pair; receive a BWP activation configuration from the base station device; an obtaining module, configured to obtain a target BWP identifier configuration pair corresponding to target BWP indication information included in the BWP activation configuration from the BWP activation configuration table, and based on the BWP frequency domain resource configuration information, determine a target BWP frequency domain resource associated with the target BWP identifier configuration pair;
a transmission module, configured to, based on the target BWP frequency domain resource, perform data transmission.

The present disclosure provides an electronic device, which includes a processor and a machine readable storage medium, where the machine readable storage medium stores machine executable instructions executable by the processor; the processor is configured to execute the machine executable instructions to perform the above resource assignment methods.

It can be seen from the above technical solutions, that flexible Bandwidth part (BWP) configuration is used in single carriers, and flexible downlink frequency domain resource and uplink frequency domain resource are configured for the UE by using the BWPs to support the data transmission of the TDD system. In this way, the resource utilization rate, the network coverage and the network capacity are increased; the uplink transmission resource and the cell coverage scope are increased; the uplink transmission delay is reduced and the uplink transmission capacity is increased.

### BRIEF DESCRIPTION OF DRAWINGS

FIG. 1 is a flowchart illustrating a resource assignment method according to an embodiment of the present disclosure.
FIG. 2 is a flowchart illustrating a resource assignment method according to an embodiment of the present disclosure.
FIGS. 3A to 3G are schematic diagrams illustrating BWP frequency domain resource configuration according to embodiments of the present disclosure.
FIGS. 4A to 4D are schematic diagrams illustrating BWP switching according to an embodiment of the present disclosure.
FIG. 5 is a schematic diagram illustrating a frequency-domain relationship of a subband frequency domain resource according to an embodiment of the present disclosure.
FIGS. 6A to 6D are schematic diagrams illustrating a matching relationship of BWP frequency domain resource and subband frequency domain resource.

### DETAILED DESCRIPTION

The terms used herein are used to only describe particular embodiments rather than limit the present disclosure. The singular forms such as "a", 'said", and "the" used in the present disclosure and the appended claims are also intended to include multiple, unless the context clearly indicates otherwise. It is also to be understood that the term "and/or" as used herein refers to and includes any or all possible combinations of one or more associated listed items. It is to be understood that, although the terms "first," "second," "third," and the like may be used in the present disclosure to describe various information, such information should not be limited to these terms. These terms are only used to distinguish one category of information from another. For example, without departing from the scope of the present disclosure, first information may be referred as second information; and similarly, the second information may also be referred as the first information. Depending on the context, the term "if' as used herein may be interpreted as "when" or "upon" or "in response to determining".

In the TDD system, a frame structure is divided into a DL slot, a UL slot and an F slot. The DL slot includes multiple DL symbols and downlink data is processed on the frequency domain resources corresponding to these DL symbols. The UL slot includes multiple UL symbols and uplink data is processed on the frequency domain resources corresponding to these UL symbols. The F slot includes at least one F symbol, which can be used for DL, for UL, or for GP. Currently, the TDD system can work in a Half Duplex (HD) mode, namely, at a same moment, a same frequency domain resource can be used only for UpLink (UL) or DownLink (DL). In order to use the frequency domain resource more flexibly and increase the resource utilization rate, the TDD system may also work in a Full-Duplex (FD) mode, namely, at a same moment, a same frequency domain resource can be used for UL and DL simultaneously, and in other words, uplink data and downlink data are processed on the same frequency domain resource at the same time. In the TDD system, once the frame structure is determined, the User Equipment (UE) can perform data reception and transmission based on the frame structure and the frame structure is divided into DL slot, UL slot and F slot. For a UE adopting the HD mode, a base station device (e.g. gNB and the like) schedules the UE to perform transmission or reception based on the frame structure. For a UE adopting the FD mode, the base station device schedules the UE to perform transmission, reception or simultaneous transmission and reception based on the frame structure. In conclusion, a base station device can configure a frame structure and notify the frame structure to a UE such that the UE obtains the frame structure to perform data reception and transmission correctly. From another perspective, after the UE knows the frame structure, the UE can obtain a possible inter-UE interference and thus use an interference cancellation technology to mitigate the interference and improve communication reliability. In an example, in a TDD system, for the frame structure mainly of downlink transmission, more DL slots are usually configured, which leads to fewer ULslots. Thus, the uplink transmission rate is limited and the transmission delay of the uplink data is increased. The larger delay of the uplink transmission is detrimental to the uplink services.

In an example of the present disclosure, there is provided a resource assignment method in which flexible downlink frequency domain resource and uplink frequency domain resource are configured for a UE based on BWP so that uplink data can be transmitted on the uplink frequency domain resource. Namely, the method can configure the uplink frequency domain resource by using downlink slot or F slot and then transmit the uplink data on the uplink frequency domain resource, so as to increase the uplink transmission rate and reduce the transmission delay of the uplink data. Furthermore, the method can configure the downlink frequency domain resource by using uplink slot or flexible slot and then transmit downlink data on the downlink frequency domain resource so as to increase the downlink transmission rate and reduce the transmission delay of the downlink data.

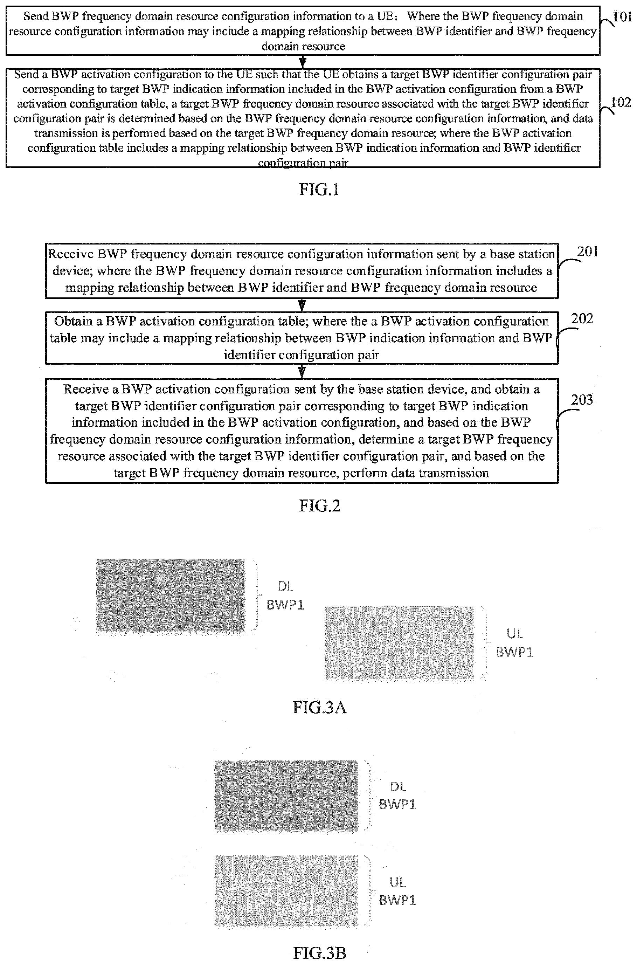

In an example of the present disclosure, there is provided a resource assignment method, which is applied to a base station device. As shown in FIG. 1, FIG. 1 is a flowchart illustrating the resource assignment method. The method includes the following blocks.

At block 101, BWP frequency domain resource configuration information is sent to a UE, where the BWP frequency domain resource configuration information may include a mapping relationship between BWP identifier and BWP frequency domain resource;

In an example, for each BWP identifier in the mapping relationship between BWP identifier and BWP frequency domain resource, the BWP identifier corresponds to K BWP frequency domain resources, where K is a positive integer; if K is greater than 1, the K BWP frequency domain resources are K discontinuous BWP frequency domain resources or K continuous BWP frequency domain resources.

In an example, in the mapping relationship between BWP identifier and BWP frequency domain resource, if a downlink BWP and an uplink BWP correspond to a same BWP identifier, the BWP frequency domain resource of the downlink BWP corresponding to the BWP identifier is identical to or different from the BWP frequency domain resource of the uplink BWP corresponding to the BWP identifier.

In an example, if the downlink BWP and the uplink BWP correspond to a same BWP identifier and the BWP identifier corresponds to at least two BWP frequency domain resources of the downlink BWP, the at least two BWP frequency domain resources of the downlink BWP corresponding to the BWP identifier may be discontinuous BWP frequency domain resources; and/or, if the downlink BWP and the uplink BWP correspond to a same BWP identifier and the BWP identifier corresponds to at least two BWP frequency domain resources of the uplink BWP, the at least two BWP frequency domain resources of the uplink BWP corresponding to the BWP identifier may be discontinuous BWP frequency domain resources.

In an example, for a first BWP identifier and a second BWP identifier in the mapping relationship between BWP identifier and BWP frequency domain resource, a number of BWPs corresponding to the first BWP identifier may be identical to or different from a number of BWPs corresponding to the second BWP identifier; where the first BWP identifier corresponds to at least one BWP frequency domain resource of the downlink BWP, or the first BWP identifier corresponds to at least one BWP frequency domain resource of the uplink BWP, or the first BWP identifier corresponds to at least one BWP frequency domain resource of the downlink BWP and at least one BWP frequency domain resource of the uplink BWP; the second BWP identifier corresponds to at least one BWP frequency domain resource of the downlink BWP and the second BWP identifier corresponds to at least one BWP frequency domain resource of the uplink BWP.

In an example, the first BWP identifier corresponds to one BWP frequency domain resource of the downlink BWP, or the first BWP identifier corresponds to one BWP frequency domain resource of the uplink BWP, or the first BWP identifier corresponds to one BWP frequency domain resource of the downlink BWP and one BWP frequency domain resource of the uplink BWP. The second BWP identifier corresponds to at least two BWP frequency domain resources of the downlink BWP and at least one BWP frequency domain resource (e.g. one BWP frequency domain resource) of the uplink BWP, and the at least two BWP frequency domain resources of the downlink BWP are discontinuous BWP frequency domain resources; or, the second BWP identifier corresponds to at least one BWP frequency domain resource (e.g. one BWP frequency domain resource) of the downlink BWP and at least two BWP frequency domain resources of the uplink BWP, and the at least two BWP frequency domain resources of the uplink BWP are discontinuous BWP frequency domain resources.

At block 102, a BWP activation configuration is sent to the UE such that the UE obtains a target BWP identifier configuration pair corresponding to target BWP indication information included in the BWP activation configuration from a BWP activation configuration table, a target BWP frequency domain resource associated with the target BWP identifier configuration pair is determined based on the BWP frequency domain resource configuration information, and data transmission is performed based on the target BWP frequency domain resource; where the BWP activation configuration table includes a mapping relationship between BWP indication information and BWP identifier configuration pair.

In an example, before sending the BWP activation configuration to the UE, a BWP activation configuration table may be sent to the UE by a Radio Resource Control (RRC) message.

In an example, for each BWP identifier configuration pair in the BWP activation configuration table, the BWP identifier configuration pair may be used to indicate a BWP identifier of a downlink BWP and a BWP identifier of an uplink BWP; where if the target BWP identifier configuration pair is used to indicate the first BWP identifier of the downlink BWP and the second BWP identifier of the uplink BWP, and the first BWP identifier and the second BWP identifier may be same or different, the target BWP frequency domain resource may include the BWP frequency domain resource of the downlink BWP corresponding to the first BWP identifier and the BWP frequency domain resource of the uplink BWP corresponding to the second BWP identifier.

In an example, for each BWP identifier configuration pair in the BWP activation configuration table, the BWP identifier configuration pair includes a first configuration pair and a second configuration pair; the first configuration pair is used to indicate the BWP identifier of the downlink BWP and the BWP identifier of the uplink BWP, and the downlink BWP and the uplink BWP are used for a downlink slot or symbol, an uplink slot or symbol and a flexible slot or symbol; the second configuration pair is used to indicate the BWP identifier of the downlink BWP and the BWP identifier of the uplink BWP, and the downlink BWP and the uplink BWP are used for a subband full duplex (SBFD) slot or symbol.

In the downlink slot or symbol, the uplink slot or symbol, and the flexible slot or symbol, if the first configuration pair in the target BWP identifier configuration pair is used to indicate the first BWP identifier of the downlink BWP and the second BWP identifier of the uplink BWP, the target BWP frequency domain resource includes the BWP frequency domain resource of the downlink BWP corresponding to the first BWP identifier and the BWP frequency domain resource of the uplink BWP corresponding to the second BWP identifier; in the SBFD slot or symbol, if the second configuration pair in the target BWP identifier configuration pair is used to indicate a third BWP identifier of the downlink BWP and a fourth BWP identifier of the uplink BWP, the target BWP frequency domain resource includes the BWP frequency domain resource of the downlink BWP corresponding to the third BWP identifier and the BWP frequency domain resource of the uplink BWP corresponding to the fourth BWP identifier.

In an example, sending the BWP activation configuration to the UE may include but is not limited to: sending the BWP activation configuration to the UE by a Downlink Control Information (DCI) message; or, sending the BWP activation configuration to the UE by a Media Access Control-Control Element (MAC-CE) message; or, sending the BWP activation configuration to the UE by an RRC message.

In an example, the BWP activation configuration includes a switching flag and target BWP indication information; if the switching flag is a first value, the UE is indicated to obtain the target BWP identifier configuration pair corresponding to the target BWP indication information from the BWP activation configuration table; if the switching flag is a second value, the UE is indicated not to obtain the target BWP identifier configuration pair corresponding to the target BWP indication information from the BWP activation configuration table.

In an example, the BWP activation configuration includes the target BWP indication information; if the target BWP indication information is a target value, the UE is indicated not to obtain the target BWP identifier configuration pair corresponding to the target BWP indication information from the BWP activation configuration table; if the target BWP indication information is not the target value, the UE is indicated to obtain the target BWP identifier configuration pair corresponding to the target BWP indication information from the BWP activation configuration table.

In an example, after sending the BWP activation configuration to the UE, within a BWP switching time, if the BWP frequency domain resource corresponding to the UE changes, an updated BWP activation configuration is sent to the UE, such that the UE obtains the target BWP identifier configuration pair corresponding to updated target BWP indication information included in the updated BWP activation configuration from the BWP activation configuration table, and based on the BWP frequency domain resource configuration information, the target BWP frequency domain resource associated with the target BWP identifier configuration pair is determined.

In an example, SBFD frequency domain resource configuration information may be further sent to the UE, where the SBFD frequency domain resource configuration information includes a subband frequency domain resource such that the UE determines an available frequency domain resource based on the target BWP frequency domain resource and the subband frequency domain resource, and performs data transmission based on the available frequency domain resource.

In an example, based on the target BWP frequency domain resource and the subband frequency domain resource corresponding to the UE, an available frequency domain resource corresponding to the UE is determined, and based on the available frequency domain resource, performing data transmission with the UE.

In an example, the target BWP frequency domain resource includes the BWP frequency domain resource of the downlink BWP and/or the BWP frequency domain resource of the uplink BWP; the subband frequency domain resource includes at least one of a downlink subband frequency domain resource, an uplink subband frequency domain resource and a guard subband frequency domain resource, on the basis:

for a downlink symbol for SBFD transmission, if the subband frequency domain resource includes the uplink subband frequency domain resource, and the remaining frequency domain resource other than the uplink subband frequency domain resource in the downlink symbol is a downlink subband frequency domain resource, then: if there is an overlapping frequency domain resource between the BWP frequency domain resource of the downlink BWP and the downlink subband frequency domain resource, the overlapping frequency domain resource is determined as the available frequency domain resource corresponding to the UE; if there is an overlapping frequency domain resource between the BWP frequency domain resource of the uplink BWP and the uplink subband frequency domain resource, the overlapping frequency domain resource is determined as the available frequency domain resource corresponding to the UE; if there is no overlapping frequency domain resource between the BWP frequency domain resource of the downlink BWP and the downlink subband frequency domain resource, it is prohibited to determine the available frequency domain resource corresponding to the UE; if there is no overlapping frequency domain resource between the BWP frequency domain resource of the uplink BWP and the uplink subband frequency domain resource, it is prohibited to determine the available frequency domain resource corresponding to the UE.

If the subband frequency domain resource includes the downlink subband frequency domain resource, and the remaining frequency domain resource other than the downlink subband frequency domain resource in the downlink symbol is a downlink subband frequency domain resource, the BWP frequency domain resource of the downlink BWP and/or the downlink subband frequency domain resource is determined as the available frequency domain resource corresponding to the UE.

For an uplink symbol for SBFD transmission, if the subband frequency domain resource includes the downlink subband frequency domain resource, and the remaining frequency domain resource other than the downlink subband frequency domain resource in the uplink symbol is an uplink subband frequency domain resource, then: if there is an overlapping frequency domain resource between the BWP frequency domain resource of the downlink BWP and the downlink subband frequency domain resource, the overlapping frequency domain resource is determined as the available frequency domain resource corresponding to the UE; if there is an overlapping frequency domain resource between the BWP frequency domain resource of the uplink BWP and the uplink subband frequency domain resource, the overlapping frequency domain resource is determined as the available frequency domain resource corresponding to the UE; if there is no overlapping frequency domain resource between the BWP frequency domain resource of the downlink BWP and the downlink subband frequency domain resource, it is prohibited to determine the available frequency domain resource corresponding to the UE; if there is no overlapping frequency domain resource between the BWP frequency domain resource of the uplink BWP and the uplink subband frequency domain resource, it is prohibited to determine the available frequency domain resource corresponding to the UE. If the subband frequency domain resource includes the uplink subband frequency domain resource, and the remaining frequency domain resource other than the uplink subband frequency domain resource in the uplink symbol is an uplink subband frequency domain resource, the BWP frequency domain resource of the uplink BWP and/or the uplink subband frequency domain resource is determined as the available frequency domain resource corresponding to the UE.

For a Flexible symbol for SBFD transmission, if the subband frequency domain resource inlcudes the downlink subband frequency domain resource and the remaining frequency domain resource other than the downlink subband frequency domain resource in the Flexible symbol is an uplink subband frequency domain resource, then: if there is an overlapping frequency domain resource between the BWP frequency domain resource of the downlink BWP and the downlink subband frequency domain resource, the overlapping frequency domain resource is determined as the available frequency domain resource corresponding to the UE; if there is an overlapping frequency domain resource between the BWP frequency domain resource of the uplink BWP and the uplink subband frequency domain resource, the overlapping frequency domain resource is determined as the available frequency domain resource corresponding to the UE; if there is no overlapping frequency domain resource between the BWP frequency domain resource of the downlink BWP and the downlink subband frequency domain resource, it is prohibited to determine the available frequency domain resource corresponding to the UE; if there is no overlapping frequency domain resource between the BWP frequency domain resource of the uplink BWP and the uplink subband frequency domain resource, it is prohibited to determine the available frequency domain resource corresponding to the UE. If the subband frequency domain resource includes the downlink subband frequency domain resource and the remaining frequency domain resource other than the downlink subband frequency domain resource in the Flexible symbol is a downlink subband frequency domain resource, the BWP frequency domain resource of the downlink BWP and/or the downlink subband frequency domain resource is determined as the available frequency domain resource corresponding to the UE.

If the subband frequency domain resource includes the uplink subband frequency domain resource and the remaining frequency domain resource other than the uplink subband frequency domain resource in the Flexible symbol is a downlink subband frequency domain resource, then, if there is an overlapping frequency domain resource between the BWP frequency domain resource of the downlink BWP and the downlink subband frequency domain resource, the overlapping frequency domain resource is determined as the available frequency domain resource corresponding to the UE; if there is an overlapping frequency domain resource between the BWP frequency domain resource of the uplink BWP and the uplink subband frequency domain resource, the overlapping frequency domain resource is determined as the available frequency domain resource corresponding to the UE; if there is no overlapping frequency domain resource between the BWP frequency domain resource of the downlink BWP and the downlink subband frequency domain resource, it is prohibited to determine the available frequency domain resource corresponding to the UE; if there is no overlapping frequency domain resource between the BWP frequency domain resource of the uplink BWP and the uplink subband frequency domain resource, it is prohibited to determine the available frequency domain resource corresponding to the UE. If the subband frequency domain resource includes the uplink subband frequency domain resource and the remaining frequency domain resource other than the uplink subband frequency domain resource in the Flexible symbol is an uplink subband frequency domain resource, the BWP frequency domain resource of the uplink BWP and/or the uplink subband frequency domain resource is determined as the available frequency domain resource corresponding to the UE.

If the subband frequency domain resource includes the downlink subband frequency domain resource and the remaining frequency domain resource other than the downlink subband frequency domain resource in the Flexible symbol is an unknown subband frequency domain resource, then: if there is an overlapping frequency domain resource between the BWP frequency domain resource of the downlink BWP and the downlink subband frequency domain resource, the overlapping frequency domain resource is determined as the available frequency domain resource corresponding to the UE; if there is an overlapping frequency domain resource between the BWP frequency domain resource of the uplink BWP and the unknown subband frequency domain resource, the overlapping frequency domain resource is determined as the available frequency domain resource corresponding to the UE; or if there is an overlapping frequency domain resource between the BWP frequency domain resource of the uplink BWP and the unknown subband frequency domain resource, it is prohibited to determine the overlapping frequency domain resource as the available frequency domain resource corresponding to the UE, and in other words, the available frequency domain resource may be determined or not be determined.

If the subband frequency domain resource includes the uplink subband frequency domain resource and the remaining frequency domain resource other than the uplink subband frequency domain resource in the Flexible symbol is an unknown subband frequency domain resource, then: if there is an overlapping frequency domain resource between the BWP frequency domain resource of the uplink BWP and the uplink subband frequency domain resource, the overlapping frequency domain resource is determined as the available frequency domain resource corresponding to the UE; if there is an overlapping frequency domain resource between the BWP frequency domain resource of the downlink BWP and the unknown subband frequency domain resource, the overlapping frequency domain resource is determined as the available frequency domain resource corresponding to the UE; or, if there is an overlapping frequency domain resource between the BWP frequency domain resource of the downlink BWP and the unknown subband frequency domain resource, it is prohibited to determine the available frequency domain resource corresponding to the UE, and in other words, the available frequency domain resource may be determined or not be determined.

In an example, sending the SBFD frequency domain resource configuration information to the UE may include but is not limited to: sending the SBFD frequency domain resource configuration information to the UE by a broadcast message; or, sending the SBFD frequency domain resource configuration information to the UE by an RRC message; or, sending the SBFD frequency domain resource configuration information to the UE by an MAC-CE message; or, sending the SBFD frequency domain resource configuration information to the UE by a DCI message.

In one example, the subband frequency domain resource includes at least one of the downlink subband frequency domain resource, the uplink subband frequency domain resource and the guard subband frequency domain resource. Or if the subband frequency domain resource includes the downlink subband frequency domain resource, the SBFD frequency domain resource configuration information includes location information corresponding to the downlink subband frequency domain resource. Or, if the subband frequency domain resource includes the uplink subband frequency domain resource, the SBFD frequency domain resource configuration information includes location information corresponding to the uplink subband frequency domain resource. Or, if the subband frequency domain resource includes the downlink subband frequency domain resource and the uplink subband frequency domain resource, the SBFD frequency domain resource configuration information includes the location information corresponding to the downlink subband frequency domain resource, and the UE derives the location information corresponding to the uplink subband frequency domain resource based on the location information corresponding to the downlink subband frequency domain resource and a frequency domain resource number (the frequency domain resource number may be preconfigured in the UE or sent to the UE by the base station device, which is not limited herein); or, the SBFD frequency domain resource configuration information includes the location information corresponding to the uplink subband frequency domain resource and the UE derives the location information corresponding to the downlink subband frequency domain resource based on the location information corresponding to the uplink subband frequency domain resource and the frequency domain resource number; or, the SBFD frequency domain resource configuration information includes the location information corresponding to the uplink subband frequency domain resource and the location information corresponding to the downlink subband frequency domain resource. Or,

if the subband frequency domain resource includes the downlink subband frequency domain resource, the uplink subband frequency domain resource and the guard subband frequency domain resource, the SBFD frequency domain resource configuration information includes the location information corresponding to the downlink subband frequency domain resource and the location information corresponding to the guard subband frequency domain resource, and the UE, based on the location information corresponding to the downlink subband frequency domain resource, the location information corresponding to the guard subband frequency domain resource and the frequency domain resource number, derives the location information corresponding to the uplink subband frequency domain resource; or, the SBFD frequency domain resource configuration information includes the location information corresponding to the uplink subband frequency domain resource and the location information corresponding to the guard subband frequency domain resource, and the UE, based on the location information corresponding to the uplink subband frequency domain resource, the location information corresponding to the guard subband frequency domain resource and the frequency domain resource number, derives the location information corresponding to the downlink subband frequency domain resource; or, the SBFD frequency domain resource configuration information includes the location information corresponding to the uplink subband frequency domain resource, the location information corresponding to the guard subband frequency domain resource and the location information corresponding to the downlink subband frequency domain resource; or, the SBFD frequency domain resource configuration information includes the location information corresponding to the uplink subband frequency domain resource and the location information corresponding to the downlink subband frequency domain resource, and the UE, based on the location information corresponding to the uplink subband frequency domain resource, the location information corresponding to the downlink subband frequency domain resource and the frequency domain resource number, derives the location information corresponding to the guard subband frequency domain resource.

In an example, the location information corresponding to the downlink subband frequency domain resource includes a start location of the downlink subband frequency domain resource and a number of PRBs occupied by the downlink subband frequency domain resource, or includes the start location of the downlink subband frequency domain resource and an end location of the downlink subband frequency domain resource; the location information corresponding to the uplink subband frequency domain resource includes a start location of the uplink subband frequency domain resource and a number of PRBs occupied by the uplink subband frequency domain resource, or, includes the start location of the uplink subband frequency domain resource and an end location of the uplink subband frequency domain resource; the location information corresponding to the guard subband frequency domain resource includes a start location of the guard subband frequency domain resource and a number of PRBs occupied by the guard subband frequency domain resource or includes the start location of the guard subband frequency domain resource and an end location of the guard subband frequency domain resource.

In an example, by a broadcast message, a RRC message, a DCI message or an MAC-CE message, SBFD enable information may be sent to the UE; where the SBFD enable information is used to enable a SBFD function, and the broadcast message is a Master Information Block (MIB) messge or Secondary Information Block (SIB) message.

It can be seen from the above technical solutions, that flexible BWP configuration nay be used in single carriers, and flexible downlink frequency domain resource and uplink frequency domain resource are configured for the UE by the BWPs to support the data transmission (i.e. data transmission and reception) of the TDD system. In this way, the resource utilization rate, the network coverage and the network capacity are increased; the uplink transmission resource and the cell coverage scope may be increased; the uplink transmission delay is reduced and the uplink transmission capacity is increased.

An example of the present disclosure provides a resource assignment method, which is applied to aUE. As shown in FIG. 2, it is a flowchart illustrating the resource assignment method. The method includes the following blocks.

At block 201, bandwidth part (BWP) frequency domain resource configuration information sent by a base station device is received; where the BWP frequency domain resource configuration information may include a mapping relationship between BWP identifier and BWP frequency domain resource.

In an example, for each BWP identifier in the mapping relationship between BWP identifier and BWP frequency domain resource, the BWP identifier corresponds to K BWP frequency domain resources, wherein K is a positive integer; if K is greater than 1, the K BWP frequency domain resources are K discontinuous BWP frequency domain resources or K continuous BWP frequency domain resources.

In an example, in the mapping relationship between BWP identifier and BWP frequency domain resource, if a downlink BWP and an uplink BWP correspond to a same BWP identifier, the BWP frequency domain resource of the downlink BWP corresponding to the BWP identifier is identical to or different from the BWP frequency domain resource of the uplink BWP corresponding to the BWP identifier.

In an example, if the downlink BWP and the uplink BWP correspond to a same BWP identifier and the BWP identifier corresponds to at least two BWP frequency domain resources of the downlink BWP, the at least two BWP frequency domain resources of the downlink BWP corresponding to the BWP identifier may be discontinuous BWP frequency domain resources; and/or, if the downlink BWP and the uplink BWP correspond to a same BWP identifier and the BWP identifier corresponds to at least two BWP frequency domain resources of the uplink BWP, the at least two BWP frequency domain resources of the uplink BWP corresponding to the BWP identifier may be discontinuous BWP frequency domain resources.

In an example, for a first BWP identifier and a second BWP identifier in the mapping relationship between BWP identifier and BWP frequency domain resource, a number of BWPs corresponding to the first BWP identifier may be identical to or different from a number of BWPs corresponding to the second BWP identifier; where the first BWP identifier corresponds to at least one BWP frequency domain resource of the downlink BWP, or the first BWP identifier corresponds to at least one BWP frequency domain resource of the uplink BWP, or the first BWP identifier corresponds to at least one BWP frequency domain resource of the downlink BWP and at least one BWP frequency domain resource of the uplink BWP; the second BWP identifier corresponds to at least one BWP frequency domain resource of the downlink BWP and the second BWP identifier corresponds to at least one BWP frequency domain resource of the uplink BWP.

In an example, the first BWP identifier corresponds to one BWP frequency domain resource of the downlink BWP, or the first BWP identifier corresponds to one BWP frequency domain resource of the uplink BWP, or the first BWP identifier corresponds to one BWP frequency domain resource of the downlink BWP and one BWP frequency domain resource of the uplink BWP. The second BWP identifier corresponds to at least two BWP frequency domain resources of the downlink BWP and at least one BWP frequency domain resource (e.g. one BWP frequency domain resource) of the uplink BWP, and the at least two BWP frequency domain resources of the downlink BWP are discontinuous BWP frequency domain resources; or, the second BWP identifier corresponds to at least one BWP frequency domain resource (e.g. one BWP frequency domain resource) of the downlink BWP and at least two BWP frequency domain resources of the uplink BWP, and the at least two BWP frequency domain resources of the uplink BWP are discontinuous BWP frequency domain resources.

At block 202, a BWP activation configuration table is obtained; where the BWP activation configuration table may include a mapping relationship between BWP indication information and BWP identifier configuration pair.

In an example, obtaining the BWP activation configuration table includes: obtaining an already-configured BWP activation configuration table or receiving a BWP activation configuration table sent from the base station device by an RRC message.

In an example, for each BWP identifier configuration pair in the BWP activation configuration table, the BWP identifier configuration pair may be used to indicate a BWP identifier of a downlink BWP and a BWP identifier of an uplink BWP; where if the target BWP identifier configuration pair is used to indicate the first BWP identifier of the downlink BWP and the second BWP identifier of the uplink BWP, and the first BWP identifier and the second BWP identifier may be same or different, the target BWP frequency domain resource may include the BWP frequency domain resource of the downlink BWP corresponding to the first BWP identifier and the BWP frequency domain resource of the uplink BWP corresponding to the second BWP identifier.

In an example, for each BWP identifier configuration pair in the BWP activation configuration table, the BWP identifier configuration pair includes a first configuration pair and a second configuration pair; the first configuration pair is used to indicate the BWP identifier of the downlink BWP and the BWP identifier of the uplink BWP, and the downlink BWP and the uplink BWP are used for a downlink slot or symbol, an uplink slot or symbol, and a flexible slot or symbol; the second configuration pair is used to indicate the BWP identifier of the downlink BWP and the BWP identifier of the uplink BWP, and the downlink BWP and the uplink BWP are used for a subband full duplex (SBFD) slot or symbol; in the downlink slot or symbol, the uplink slot or symbol, and the flexible slot or symbol, if the first configuration pair in the target BWP identifier configuration pair is used to indicate the first BWP identifier of the downlink BWP and the second BWP identifier of the uplink BWP, the target BWP frequency domain resource includes the BWP frequency domain resource of the downlink BWP corresponding to the first BWP identifier and the BWP frequency domain resource of the uplink BWP corresponding to the second BWP identifier; in the SBFD slot or symbol, if the second configuration pair in the target BWP identifier configuration pair is used to indicate a third BWP identifier of the downlink BWP and a fourth BWP identifier of the uplink BWP, the target BWP frequency domain resource includes the BWP frequency domain resource of the downlink BWP corresponding to the third BWP identifier and the BWP frequency domain resource of the uplink BWP corresponding to the fourth BWP identifier.

At block 203, a BWP activation configuration sent by the base station device is received; a target BWP identifier configuration pair corresponding to target BWP indication information included in the BWP activation configuration is obtained from the BWP activation configuration table; and based on the BWP frequency domain resource configuration information, a target BWP frequency domain resource associated with the target BWP identifier configuration pair is determined; and based on the target BWP frequency domain resource, data transmission is performed.

In an example, receiving the BWP activation configuration sent by the base station device includes: by a DCI message, receiving the BWP activation configuration sent by the base station device; or, by a MAC-CE message, receiving the BWP activation configuration sent by the base station device; or, by an RRC message, receiving the BWP activation configuration sent by the base station device.

In an example, the BWP activation configuration includes a switching flag and target BWP indication information; if the switching flag is a first value, the target BWP identifier configuration pair corresponding to the target BWP indication information is obtained from the BWP activation configuration table; if the switching flag is a second value, it is prohibited to obtain the target BWP identifier configuration pair corresponding to the target BWP indication information from the BWP activation configuration table.

In an example, the BWP activation configuration includes the target BWP indication information; if the target BWP indication information is not a target value, the target BWP identifier configuration pair corresponding to the target BWP indication information is obtained from the BWP activation configuration table; if the target BWP indication information is the target value, it is prohibited to obtain the target BWP identifier configuration pair corresponding to the target BWP indication information from the BWP activation configuration table.

In an example, after the BWP activation configuration is received, within a BWP switching time, if the BWP frequency domain resource corresponding to the UE changes, an updated BWP activation configuration sent by the base station device is received, and the target BWP identifier configuration pair corresponding to updated target BWP indication information included in the updated BWP activation configuration is obtained from the BWP activation configuration table, and based on the BWP frequency domain resource configuration information, the target BWP frequency domain resource associated with the target BWP identifier configuration pair is determined.

In an example, SBFD frequency domain resource configuration information sent by the base station device may be further received, where the SBFD frequency domain resource configuration information may include a subband frequency domain resource; on this basis, performing data transmission based on the target BWP frequency domain resource includes but is not limited to: based on the target BWP frequency domain resource and the subband frequency domain resource, determining an available frequency domain resource; and based on the available frequency domain resource, performing data transmission.

In an example, based on the available frequency domain resource, performing data transmission includes: during an access process of the UE, performing data transmission based on the available frequency domain resource; or, during an access process of the UE, performing data transmission based on the target BWP frequency domain resource; after successful access of the UE, performing data transmission based on the available frequency domain resource.

In an example, the target BWP frequency domain resource includes the BWP frequency domain resource of the downlink BWP and/or the BWP frequency domain resource of the uplink BWP; the subband frequency domain resource includes at least one of a downlink subband frequency domain resource, an uplink subband frequency domain resource and a guard subband frequency domain resource; on this basis
for a downlink symbol for SBFD transmission, if the subband frequency domain resource includes the uplink subband frequency domain resource, and the remaining frequency domain resource other than the uplink subband frequency domain resource in the downlink symbol is a downlink subband frequency domain resource, then: if there is an overlapping frequency domain resource between the BWP frequency domain resource of the downlink BWP and the downlink subband frequency domain resource, the overlapping frequency domain resource is determined as the available frequency domain resource; if there is an overlapping frequency domain resource between the BWP frequency domain resource of the uplink BWP and the uplink subband frequency domain resource, the overlapping frequency domain resource is determined as the available frequency domain resource; if there is no overlapping frequency domain resource between the BWP frequency domain resource of the downlink BWP and the downlink subband frequency domain resource, it is prohibited to determine the available frequency domain resource; if there is no overlapping frequency domain resource between the BWP frequency domain resource of the uplink BWP and the uplink subband frequency domain resource, it is prohibited to determine the available frequency domain resource. If the subband frequency domain resource includes the downlink subband frequency domain resource, and the remaining frequency domain resource other than the downlink subband frequency domain resource in the downlink symbol is a downlink subband frequency domain resource, the BWP frequency domain resource of the downlink BWP and/or the downlink subband frequency domain resource is determined as the available frequency domain resource.

For an uplink symbol for SBFD transmission, if the subband frequency domain resource includes the downlink subband frequency domain resource, and the remaining frequency domain resource other than the downlink subband frequency domain resource in the uplink symbol is the uplink subband frequency domain resource, then: if there is an overlapping frequency domain resource between the BWP frequency domain resource of the downlink BWP and the downlink subband frequency domain resource, the overlapping frequency domain resource is determined as the available frequency domain resource; if there is an overlapping frequency domain resource between the BWP frequency domain resource of the uplink BWP and the uplink subband frequency domain resource, the overlapping frequency domain resource is determined as the available frequency domain resource; if there is no overlapping frequency domain resource between the BWP frequency domain resource of the downlink BWP and the downlink subband frequency domain resource, it is prohibited to determine the available frequency domain resource; if there is no overlapping frequency domain resource between the BWP frequency domain resource of the uplink BWP and the uplink subband frequency domain resource, it is prohibited to determine the available frequency domain resource. If the subband frequency domain resource includes the uplink subband frequency domain resource, and the remaining frequency domain resource other than the uplink subband frequency domain resource in the uplink symbol is an uplink subband frequency domain resource, the BWP frequency domain resource of the uplink BWP and/or the uplink subband frequency domain resource is determined as the available frequency domain resource.

For a Flexible symbol for SBFD transmission, if the subband frequency domain resource includes the downlink subband frequency domain resource and the remaining frequency domain resource other than the downlink subband frequency domain resource in the Flexible symbol is an uplink subband frequency domain resource, then: if there is an overlapping frequency domain resource between the BWP frequency domain resource of the downlink BWP and the downlink subband frequency domain resource, the overlapping frequency domain resource is determined as the available frequency domain resource; if there is an overlapping frequency domain resource between the BWP frequency domain resource of the uplink BWP and the uplink subband frequency domain resource, the overlapping frequency domain resource is determined as the available frequency domain resource; if there is no overlapping frequency domain resource between the BWP frequency domain resource of the downlink BWP and the downlink subband frequency domain resource, it is prohibited to determine the available frequency domain resource; if there is no overlapping frequency domain resource between the BWP frequency domain resource of the uplink BWP and the uplink subband frequency domain resource, it is prohibited to determine the available frequency domain resource.

If the subband frequency domain resource includes the downlink subband frequency domain resource and the remaining frequency domain resource other than the downlink subband frequency domain resource in the Flexible symbol is a downlink subband frequency domain resource, then: the BWP frequency domain resource of the downlink BWP and/or the downlink subband frequency domain resource is determined as the available frequency domain resource.

If the subband frequency domain resource includes the uplink subband frequency domain resource and the remaining frequency domain resource other than the uplink subband frequency domain resource in the Flexible symbol is a downlink subband frequency domain resource, then: if there is an overlapping frequency domain resource between the BWP frequency domain resource of the downlink BWP and the downlink subband frequency domain resource, the overlapping frequency domain resource is determined as the available frequency domain resource; if there is an overlapping frequency domain resource between the BWP frequency domain resource of the uplink BWP and the uplink subband frequency domain resource, the overlapping frequency domain resource is determined as the available frequency domain resource; if there is no overlapping frequency domain resource between the BWP frequency domain resource of the downlink BWP and the downlink subband frequency domain resource, it is prohibited to determine the available frequency domain resource; if there is no overlapping frequency domain resource between the BWP frequency domain resource of the uplink BWP and the uplink subband frequency domain resource, it is prohibited to determine the available frequency domain resource. If the subband frequency domain resource includes the uplink subband frequency domain resource and the remaining frequency domain resource other than the uplink subband frequency domain resource in the Flexible symbol is an uplink subband frequency domain resource, the BWP frequency domain resource of the uplink BWP and/or the uplink subband frequency domain resource is determined as the available frequency domain resource.

If the subband frequency domain resource includes the downlink subband frequency domain resource and the remaining frequency domain resource other than the downlink subband frequency domain resource in the Flexible symbol is an unknown subband frequency domain resource, then: if there is an overlapping frequency domain resource between the BWP frequency domain resource of the downlink BWP and the downlink subband frequency domain resource, the overlapping frequency domain resource is determined as the available frequency domain resource; if there is an overlapping frequency domain resource between the BWP frequency domain resource of the uplink BWP and the unknown subband frequency domain resource, the overlapping frequency domain resource is determined as the available frequency domain resource; or, if there is an overlapping frequency domain resource between the BWP frequency domain resource of the uplink BWP and the unknown subband frequency domain resource, it is prohibited to determine the available frequency domain resource.

If the subband frequency domain resource includes the uplink subband frequency domain resource and the remaining frequency domain resource other than the uplink subband frequency domain resource in the Flexible symbol is an unknown subband frequency domain resource, then: if there is an overlapping frequency domain resource between the BWP frequency domain resource of the uplink BWP and the uplink subband frequency domain resource, the overlapping frequency domain resource is determined as the available frequency domain resource; if there is an overlapping frequency domain resource between the BWP frequency domain resource of the downlink BWP and the unknown subband frequency domain resource, the overlapping frequency domain resource is determined as the available frequency domain resource; or, if there is an overlapping frequency domain resource between the BWP frequency domain resource of the downlink BWP and the unknown subband frequency domain resource, it is prohibited to determine the available frequency domain resource.

In an example, receiving the SBFD frequency domain resource configuration information sent by the base station device may include but is not limited to: by a broadcast message, receiving the SBFD frequency domain resource configuration information sent by the base station device; or, by an RRC message, receiving the SBFD frequency domain resource configuration information from the base station device; or, by an MAC-CE message, receiving the SBFD frequency domain resource configuration information sent by the base station device; or, by a DCI message, receiving the SBFD frequency domain resource configuration information sent by the base station device.

In an example, the subband frequency domain resource includes at least one of the downlink subband frequency domain resource, the uplink subband frequency domain resource and the guard subband frequency domain resource; if the subband frequency domain resource includes the downlink subband frequency domain resource, the SBFD frequency domain resource configuration information includes location information corresponding to the downlink subband frequency domain resource; or, if the subband frequency domain resource includes the uplink subband frequency domain resource, the SBFD frequency domain resource configuration information includes location information corresponding to the uplink subband frequency domain resource; or, if the subband frequency domain resource includes the downlink subband frequency domain resource and the uplink subband frequency domain resource, the SBFD frequency domain resource configuration information includes the location information corresponding to the downlink subband frequency domain resource and the UE derives the location information corresponding to the uplink subband frequency domain resource based on the location information corresponding to the downlink subband frequency domain resource and a frequency domain resource number (the frequency domain resource number may be pre-configured in the UE or sent to the UE by the base station device, which is not limited herein); or, the SBFD frequency domain resource configuration information includes the location information corresponding to the uplink subband frequency domain resource and the UE derives the location information corresponding to the downlink subband frequency domain resource based on the location information corresponding to the uplink subband frequency domain resource and the frequency domain resource number; or, the SBFD frequency domain resource configuration information includes the location information corresponding to the uplink subband frequency domain resource and the location information corresponding to the downlink subband frequency domain resource. Or,

if the subband frequency domain resource includes the downlink subband frequency domain resource, the uplink subband frequency domain resource and the guard subband frequency domain resource, the SBFD frequency domain resource configuration information includes the location information corresponding to the downlink subband frequency domain resource and the location information corresponding to the guard subband frequency domain resource, and the UE, based on the location information corresponding to the downlink subband frequency domain resource, the location information corresponding to the guard subband frequency domain resource and the frequency domain resource number, derives the location information corresponding to the uplink subband frequency domain resource; or, the SBFD frequency domain resource configuration information includes the location information corresponding to the uplink subband frequency domain resource and the location information corresponding to the guard subband frequency domain resource, and the UE, based on the location information corresponding to the uplink subband frequency domain resource, the location information corresponding to the guard subband frequency domain resource and the frequency domain resource number, derives the location information corresponding to the downlink subband frequency domain resource; or, the SBFD frequency domain resource configuration information includes the location information corresponding to the uplink subband frequency domain resource, the location information corresponding to the guard subband frequency domain resource and the location information corresponding to the downlink subband frequency domain resource; or, the SBFD frequency domain resource configuration information includes the location information corresponding to the uplink subband frequency domain resource and the location information corresponding to the downlink subband frequency domain resource, and the UE, based on the location information corresponding to the uplink subband frequency domain resource, the location information corresponding to the downlink subband frequency domain resource and the frequency domain resource number, derives the location information corresponding to the guard subband frequency domain resource.

In an example, the location information corresponding to the downlink subband frequency domain resource includes a start location of the downlink subband frequency domain resource and a number of PRBs occupied by the downlink subband frequency domain resource, or includes the start location of the downlink subband frequency domain resource and an end location of the downlink subband frequency domain resource; the location information corresponding to the uplink subband frequency domain resource includes a start location of the uplink subband frequency domain resource and a number of PRBs occupied by the uplink subband frequency domain resource, or, includes the start location of the uplink subband frequency domain resource and an end positon of the uplink subband frequency domain resource; the location information corresponding to the guard subband frequency domain resource includes a start location of the guard subband frequency domain resource and a number of PRBs occupied by the guard subband frequency domain resource, or includes the start location of the guard subband frequency domain resource and an end location of the guard subband frequency domain resource.

In one example, by a broadcast message, a RRC message, a DCI message or an MAC-CE message, SBFD enable information sent by the base station device may be received; where the SBFD enable information is used to enable a SBFD function, and the broadcast message is a Master Information Block (MIB) message or Secondary information block (SIB) message, and the SIB message may be SIBx which represents any SIB information block.

It can be seen from the above technical solutions, that flexible BWP configuration may be used in single carriers, and flexible downlink frequency domain resource and uplink frequency domain resource are configured for the UE by the BWPs to support the data transmission (i.e. data transmission and reception) of the TDD system. In this way, the resource utilization rate, the network coverage and the network capacity are increased; the uplink transmission resource and the cell coverage scope may be increased; the uplink transmission delay is reduced and the uplink transmission capacity is increased.

The above technical solutions of the present disclosure will be described below in combination with examples.

The frame structure of the TDD may be completed by semi-static configuration plus dynamic indication. In a high-layer signaling, multiple Slot Format Combinations (SFCs) are defined by using Slot Format Indicator (SFI). For example, the base station device may select slot formats satisfying a service requirement, and add these slot formats to the SFCs. Some slot formats are indicated in the Table 1, where D represents DL symbol, U represents UL symbol, and F represents Flexible symbol. Each SFC is indicated by a fixed ID and includes one or more slot format types.

**Table 1**

| Slot format index | Symbols in slots | | | | | | | | | | | | | |
|---|---|---|---|---|---|---|---|---|---|---|---|---|---|---|
| | 0 | 1 | 2 | 3 | 4 | 5 | 6 | 7 | 8 | 9 | 10 | 11 | 12 | 13 |
| 0 | D | D | D | D | D | D | D | D | D | D | D | D | D | D |
| 1 | U | U | U | U | U | U | U | U | U | U | U | U | U | U |
| 2 | F | F | F | F | F | F | F | F | F | F | F | F | F | F |
| ... | ... | | | | | | | | | | | | | |
| 55 | D | D | F | F | F | U | U | U | D | D | D | D | D | D |
| 56 - 254 | Reserved | | | | | | | | | | | | | |
| 255 | The UE determines the slot format based on tdd-UL-DL-ConfigurationCommon, | | | | | | | | | | | | | |
| | tdd-UL-DL-ConfigurationDedicated and DCI format. | | | | | | | | | | | | | |

After SFI configuration is completed, the base station device sends multiple slot format combinations to the UE through an RRC message. After the multiple slot format combinations are configured by the RRC signaling, the base station device notifies the currently-used SFC index to the UE in the DCI format 2_0 through periodic PDCCH. After the UE receives the information of the DCI format 2_0 correctly, the UE may, based on the value of the SFC index, determine a slot format of each slot in a particular period. Thus, the base station device and the UE complete frame structure configuration by dynamic indication, and can perform uplink and downlink data transmission.

The resource assignment may be divided into a time domain resource assignment and a frequency domain resource assignment (with resource assignment of a downlink channel as an example). The time domain resource assignment: the time domain resource assignment field in the DCI indicates a time domain location of the downlink channel and has a total of 4 bits, and is valued between 0 to 15. If the value is m, m+1 indicates a row index of the time domain resource assignment table, and the information in this row indicates a time domain resource of PDSCH. There are two indication manners: one is to indicate three pieces of information: a slot offset between PDSCH and PDCCH scheduling the PDSCH, a start symbol of the PDSCH in the slot, and a length of symbols occupied by the PDSCH; the other is to indicate a slot offset between the PDSCH and the PDCCH scheduling the PDSCH, one SLIV value, a start symbol of the PDSCH calculated by the user equipment based on the SLIV value and a number of symbols occupied by it.

The frequency domain resource assignment: the frequency domain resource assignment field in the DCI indicates a frequency domain resource assignment of the downlink channel. The PDSCH frequency domain resource assignment includes Type 0 and Type 1. Type 0 supports discontinuous resource assignment to obtain a frequency diversity gain; Type 1 supports continuous resource assignment and can reduce the number of bits required by this field. The DCI format 1_0 only supports Type 1. Type 0: for the discontinuous resource assignment type, one RBG is one VRB group which is formed by P continuous VRBs, where the number of VRBs is determined by the high-layer parameter rbg-Size and the BWP band width. Under the condition that the resource assignment type is Type 0, the Frequency domain resource assignment field is used as a bitmap to indicate which RBGs are assigned to the downlink channel, where each bit in the bitmap represents an RBG with the highest bit corresponding to the RBG0. By analogy, bit 1 represents the RGB is assigned to the downlink channel and bit 0 represents the RGB is not assigned to the downlink channel. Type 1: the Frequency domain resource indication field is not used as a bitmap but indicates an Resource Indicator Value (RIV) value. The UE uses the value to calculate a start RB of the downlink channel and the number of occupied RBs.

In the TDD system, the frame structure may be categorized into a UL slot, a DL slot and a Flexible slot (F slot) according to slot. The symbol in the F slot may be configured as a UL symbol, a DL symbol and an F symbol. The F symbol may be used for UL, DL or GP. Wherein the uplink data can be transmitted in the UL slot, and in the UL symbol or F symbol of the F slot. The uplink data cannot be transmitted in the DL slot nor in the DL symbol in the F slot. Similarly, the downlink data can be transmitted in the DL slot, and in the DL symbol or F symbol in the F slot. The downlink data cannot be transmitted in the UL slot nor in the UL symbol in the F slot.

The SBFD frequency domain resource may be configured in the time frequency resource (e.g. UL slot, DL slot and F slot). On the SBFD frequency domain resource, data of a direction different from other time frequency resources may be transmitted. For example, the SBFD frequency domain resource is configured in the DL slot and the uplink data is transmitted by the SBFD frequency domain resource to enable the uplink data to be transmitted in the DL slot. For another example, the SBFD frequency domain resource is configured in the DL symbol of the F slot and the uplink data is transmitted by the SBFD frequency domain resource to enable the uplink data to be transmitted in the DL symbol of the F slot. The SBFD frequency domain resource is configured in the UL slot and the downlink data is transmitted by the SBFD frequency domain resource to enable the downlink data to be transmitted in the UL slot. For another example, the SBFD frequency domain resource is configured in the UL symbol of the F slot and the downlink data is transmitted by the SBFD frequency domain resource to enable the downlink data to be transmitted in the UL symbol of the F slot.

In an example, the SBFD symbol may be defined as a symbol that the base station device and the UE may be configured with a SBFD subband. On the SBFD subband (called SBFD frequency domain resource) of these SBFD symbols, the base station device and the UE may perform full duplex communication, that is, on the SBFD frequency domain resources, uplink transmission, downlink transmission or simultaneous uplink and downlink transmission can be performed. The SBFD frequency domain resource may be clearly indicated as uplink, downlink or Flexible. If the SBFD frequency domain resource is indicated as Flexible, uplink or downlink may be flexibly scheduled on the SBFD frequency domain resource.

Wherein the configuration of the SBFD slot or SBFD symbol may include: which symbols of the DL slot, the UL slot and the F slot are used for SBFD transmission and the implementation period and start point and the like.

In the TDD FD mode, in an example, there is provided a resource assignment method, which involves a relationship of BWP frequency domain resource configuration, BWP activation configuration table, BWP activation configuration, SBFD frequency domain resource configuration, BWP frequency domain resource and SBFD subband frequency domain resource and the like in single carrier case (for example, a relationship between an SBFD uplink subband frequency domain resource and an uplink BWP frequency domain resource, a relationship between an SBFD downlink subband frequency domain resource and a downlink BWP frequency domain resource), which will be described below.

Firstly, BWP frequency domain resource configuration: the base station device sends BWP frequency domain resource configuration information to the UE and the UE receives the BWP frequency domain resource configuration information sent by the base station device, where the BWP frequency domain resource configuration information may include a mapping relationship between BWP identifier and BWP frequency domain resource.

In an example, when the base station device configures BWP for the UE, the downlink BWP and the uplink BWP may correspond to a same BWP identifier or different BWP identifiers. If the downlink BWP and the uplink BWP correspond to a same BWP identifier, the BWP frequency domain resource of the downlink BWP corresponding to the BWP identifier may be identical to or different from the BWP frequency domain resource of the uplink BWP corresponding to the BWP identifier.

As shown in FIG. 3A, the BWP identifier of the downlink BWP is 1, the BWP identifier of the uplink BWP is 1, and the BWP frequency domain resource of the downlink BWP is different from the BWP frequency domain resource of the uplink BWP. In FIG. 3A, the BWP frequency domain resource of the downlink BWP is partially overlapped with the BWP frequency domain resource of the uplink BWP. For example, the BWP frequency domain resource of the uplink BWP1 is from the 40th PRB to the 100th PRB, and the BWP frequency domain resource of the downlink BWP1 is from the 0th PRB to the 60th PRB. Obviously, the overlapping part of the BWP frequency domain resources is from the 40th PRB to the 60th PRB.

As shown in FIG. 3B, the BWP identifier of the downlink BWP is 1, the BWP identifier of the uplink BWP is 1, and the BWP frequency domain resource of the downlink BWP is different from the BWP frequency domain resource of the uplink BWP. In FIG. 3B, the BWP frequency domain resource of the downlink BWP is not overlapped with the BWP frequency domain resource of the uplink BWP.

For example, the BWP frequency domain resource of the downlink BWP1 is from the 0th PRB to the 50th PRB, and the BWP frequency domain resource of the uplink BWP1 is from the 61st PRB to the 100th PRB.

In an example, if the base station device configures BWP for the UE, the downlink BWP and the uplink BWP may correspond to a same BWP identifier, where the BWP identifier may correspond to at least two BWP frequency domain resources (at least two BWP frequency domain resources are discontinuous BWP frequency domain resources) of the downlink BWP and may correspond to at least one BWP frequency domain resource of the uplink BWP. Alternatively, the BWP identifier may correspond to at least two BWP frequency domain resources (at least two BWP frequency domain resource are discontinuous BWP frequency domain resources) of the uplink BWP, and may correspond to at least one BWP frequency domain resource of the downlink BWP. Wherein the discontinuous BWP frequency domain resources may also be called discrete BWP frequency domain resources.

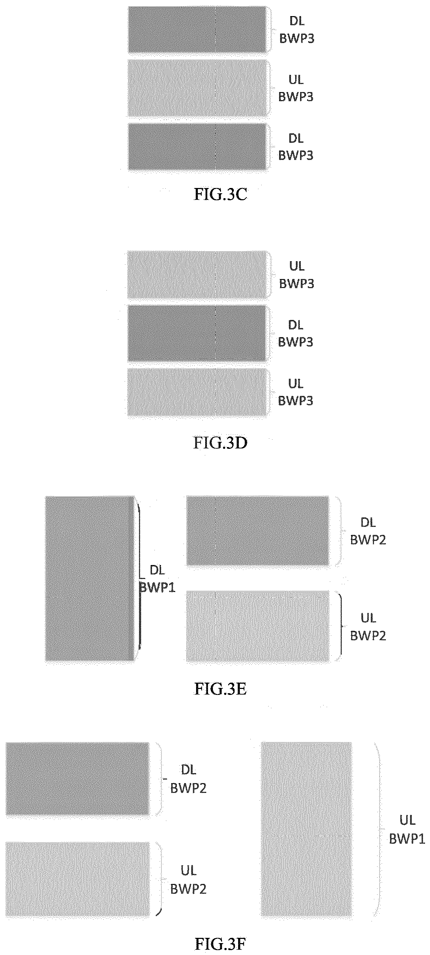

For example, the BWP identifier may correspond to two BWP frequency domain resources of the downlink BWP, which are discontinuous BWP frequency domain resources and the BWP identifier may also correspond to one BWP frequency domain resource of the uplink BWP. By referring to FIG. 3C, the BWP identifier of the downlink BWP is 3, the BWP identifier of the uplink BWP is 3 and the BWP frequency domain resource of the downlink BWP is different from the BWP frequency domain resource of the uplink BWP (in FIG. 3C, not overlapped or partially overlapped). The BWP identifier of the downlink BWP3 is from the 0th PRB to the 20th PRB and from the 71st PRB to the 100th PRB; and the BWP identifier of the uplink BWP3 is from the 21st PRB to the 70th PRB.

For another example, the BWP identifier may correspond to two BWP frequency domain resources of the uplink BWP which are discontinuous BWP frequency domain resources and the BWP identifier may correspond to one BWP frequency domain resource of the downlink BWP. By referring to FIG. 3D, the BWP identifier of the downlink BWP is 3, the BWP identifier of the uplink BWP is 3 and the BWP frequency domain resource of the downlink BWP is different from the BWP frequency domain resource of the uplink BWP (in FIG. 3D, not overlapped or partially overlapped). The BWP frequency domain resource of the uplink BWP3 is from the 0th RPB to the 20th PRB and from the 71st PRB to the 100th PRB; and the BWP frequency domain resource of the downlink BWP3 is from the 21st RPB to the 70th PRB.

In an example, if the base station device configures BWP for the UE, multiple BWPs may be configured, for example, multiple asymmetrical downlink BWPs and/or uplink BWPs are configured, where the number of the downlink BWPs may be equal or unequal to the number of the uplink BWPs, and the BWP identifiers of the uplink BWPs and the downlink BWPs may be same or different. For example, two downlink BWPs and one uplink BWP may be configured for the UE, or one downlink BWP and two uplink BWPs may be configured for the UE, or two downlink BWPs and two uplink BWPs may be configured for the UE, and so on.

In an example, taking the base station device configuring two BWPs for the UE as an example, the BWP identifiers of the two BWPs are denoted as a first BWP identifier and a second BWP identifier respectively, and the number of the BWPs corresponding to the first BWP identifier may be equal or unequal to the number of the BWPs corresponding to the second BWP identifier.

In an example, the first BWP identifier may correspond to at least one BWP frequency domain resource of the downlink BWP, the second BWP identifier may correspond to at least one BWP frequency domain resource of the downlink BWP and corresponds to at least one BWP frequency domain resource of the uplink BWP. As shown in FIG. 3E, the first BWP identifier is 1, the second BWP identifier is 2, the BWP1 corresponds to one BWP frequency domain resource of the downlink BWP, and the BWP2 corresponds to one BWP frequency domain resource of the downlink BWP and one BWP frequency domain resource of the uplink BWP. In FIG. 3E, the downlink BWP and the uplink BWP are configured at the ratio of 2:1, namely, the base station device configures two downlink BWPs and one uplink BWP. Of course, more downlink BWPs and more uplink BWPs may be configured, which is not limited herein. For example, two downlink BWPs and two uplink BWPs may be configured to form two BWP matching pairs, each of which includes one downlink BWP and one uplink BWP.

In an example, the first BWP identifier may correspond to at least one BWP frequency domain resource of the uplink BWP, the second BWP identifier may correspond to at least one BWP frequency domain resource of the downlink BWP and corresponds to at least one BWP frequency domain resource of the uplink BWP. As shown in FIG. 3F, the first BWP identifier is 1, the second BWP identifier is 2; the BWP1 corresponds to one BWP frequency domain resource of the uplink BWP and the BWP2 corresponds to one BWP frequency domain resource of the downlink BWP and one BWP frequency domain resource of the uplink BWP. In FIG. 3F, the downlink BWP and the uplink BWP are configured at the ratio of 1:2, namely, the base station device configures one downlink BWP and two uplink BWPs. Of course, more downlink BWPs and more uplink BWPs may be configured, which is not limited herein. For example, two downlink BWPs and two uplink BWPs may be configured to form two BWP matching pairs, each of which includes one downlink BWP and one uplink BWP.

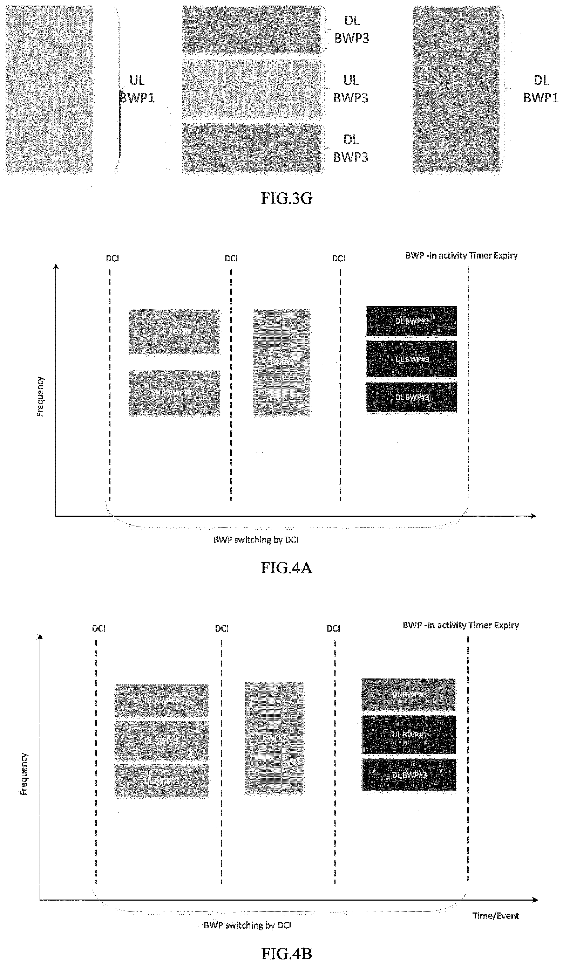

In an example, the first BWP identifier may correspond to at least one BWP frequency domain resource of the downlink BWP and at least one BWP frequency domain resource of the uplink BWP. The second BWP identifier may correspond to at least two BWP frequency domain resources of the downlink BWP and at least one BWP frequency domain resource of the uplink BWP, or the second BWP identifier may correspond to at least one BWP frequency domain resource of the downlink BWP and at least two BWP frequency domain resources of the uplink BWP. As shown in FIG. 3G, the first BWP identifier is 1 and the second BWP identifier is 3; the BWP1 corresponds to one BWP frequency domain resource of the uplink BWP and one BWP frequency domain resource of the downlink BWP, and the BWP3 corresponds to two BWP frequency domain resources of the downlink BWP and one BWP frequency domain resource of the uplink BWP, where the two BWP frequency domain resources of the downlink BWP are discontinuous BWP frequency domain resources.

In FIG. 3G, the downlink BWP and the uplink BWP are configured at the ratio of 3:2, namely, the base station device configures three downlink BWPs and two uplink BWPs. The base station device may configure a symmetrical BWP pair and an asymmetrical BWP pair, where the symmetrical BWP pair may be the downlink BWP1 and the uplink BWP1, and the asymmetrical BWP pair may be the downlink BWP3 and the uplink BWP3. Wherein the BWP identifiers corresponding to different BWP matching pairs may be different and support discontinuous assignment of the BWP frequency domain resources.

It can be seen from the above that for each BWP identifier, the BWP identifier may correspond to K BWP frequency domain resources, where K may be a positive integer; if K is greater than 1, the K BWP frequency domain resources are K discontinuous BWP frequency domain resources or K continuous BWP frequency domain resources.

In an example, after the base station device configures the BWP frequency domain resources for the UE, the base station device may send the BWP frequency domain resource configuration information to the UE, where the BWP frequency domain resource configuration information may include a mapping relationship of BWP identifier and BWP frequency domain resource. Referring to Table 2, example of the BWP frequency domain resource configuration information is shown, where the BWP frequency domain resource configuration information may also be referred to as BWP resource assignment indication information.

**Table 2**

| IE (Element) | Value (value) |
|---|---|
| BWP-ID (BWP identifier) | INTEGER (0..3) |
| locationAndBandwidth-1 (location and bandwidth) | INTEGER (0..37949) |
| ... | ... |
| locationAndBandwidth-K | INTEGER (0..37949) |

Wherein BWP-ID represents the BWP identifier, INTEGER (0..3) represents a value of the BWP identifier, for example, 1, 2, and 3, locationAndBandwidth-1 represents the first BWP frequency domain resource corresponding to the BWP identifier, locationAndBandwidth-K represents the k-th BWP frequency domain resource corresponding to the BWP identifier, INTEGER (0..37949) represents a location corresponding to the BWP frequency domain resource, for example, from the 0th PRB to the 20th PRB. If the uplink BWP and the downlink BWP correspond to a same BWP identifier, the BWP frequency domain resource corresponding to the uplink BWP may be different from the BWP frequency domain resource corresponding to the downlink BWP. Therefore, the BWP frequency domain resource configuration information (shown in Table 2) may also indicate whether the BWP identifier is the BWP identifier corresponding to the uplink BWP or the BWP identifier corresponding to the downlink BWP. The above process is not repeated herein.

Secondly, BWP activation configuration table: the base station device and the UE may pre-configure a same BWP activation configuration table, for example, pre-configure a BWP activation configuration table in a physical layer. Alternatively, the base station device may obtain a BWP activation configuration table and send the BWP activation configuration table to the UE through an RRC message, for example, the base station device may broadcast the BWP activation configuration table to multiple UEs through an RRC message.

In an example, the BWP activation configuration table may include a mapping relationship between BWP indication information and BWP identifier configuration pair. For each BWP identifier configuration pair in the BWP activation configuration table, the BWP identifier configuration pair is used to indicate the BWP identifier of the downlink BWP and the BWP identifier of the uplink BWP. The BWP identifier of the downlink BWP may be identical to or different from the BWP identifier of the uplink BWP. Referring to Table 3, an example of the BWP activation configuration table is shown, where 16 configurations are given in the BWP activation configuration table.

**Table 3**

| BWP indication information | BWP identifier configuration pair |
|---|---|
| 0000 | The BWP identifier of the downlink BWP is 1 |
| | The BWP identifier of the uplink BWP is 1 |
| 0001 | The BWP identifier of the downlink BWP is 1 |
| | The BWP identifier of the uplink BWP is 2 |
| 0010 | The BWP identifier of the downlink BWP is 1 |
| | The BWP identifier of the uplink BWP is 3 |
| 0011 | The BWP identifier of the downlink BWP is 1 |
| | The BWP identifier of the uplink BWP is 4 |
| 0100 | The BWP identifier of the downlink BWP is 2 |
| | The BWP identifier of the uplink BWP is 1 |
| 0101 | The BWP identifier of the downlink BWP is 2 |
| | The BWP identifier of the uplink BWP is 2 |
| 0110 | The BWP identifier of the downlink BWP is 2 |
| | The BWP identifier of the uplink BWP is 3 |
| 0111 | The BWP identifier of the downlink BWP is 2 |
| | The BWP identifier of the uplink BWP is 4 |
| 1000 | The BWP identifier of the downlink BWP is 3 |
| | The BWP identifier of the uplink BWP is 1 |
| 1001 | The BWP identifier of the downlink BWP is 3 |
| | The BWP identifier of the uplink BWP is 2 |
| 1010 | The BWP identifier of the downlink BWP is 3 |
| | The BWP identifier of the uplink BWP is 3 |
| 1011 | The BWP identifier of the downlink BWP is 3 |
| | The BWP identifier of the uplink BWP is 4 |
| 1100 | The BWP identifier of the downlink BWP is 4 |
| | The BWP identifier of the uplink BWP is 1 |
| 1101 | The BWP identifier of the downlink BWP is 4 |
| | The BWP identifier of the uplink BWP is 2 |
| 1110 | The BWP identifier of the downlink BWP is 4 |
| | The BWP identifier of the uplink BWP is 3 |
| 1111 | The BWP identifier of the downlink BWP is 4 |
| | The BWP identifier of the uplink BWP is 4 |

It can be seen from the Table 3 that the BWP indication information may be indicated by four bits and each piece of BWP indication information corresponds to one BWP identifier configuration pair. The BWP identifier configuration pair is used to indicate the BWP identifier of the downlink BWP and the BWP identifier of the uplink BWP, for example, the BWP identifier configuration pair corresponding to the BWP indication information "0000" is used to indicate the BWP identifier of the downlink BWP is 1 and the BWP identifier of the uplink BWP is 1.

In an example, the BWP activation configuration table may include a mapping relationship between BWP indication information and BWP identifier configuration pair. For each BWP identifier configuration pair in the BWP activation configuration table, the BWP identifier configuration pair may include a first configuration pair and a second configuration pair. The first configuration pair is used to indicate the BWP identifier of the downlink BWP and the BWP identifier of the uplink BWP, where the BWP identifier of the downlink BWP and the BWP identifier of the uplink BWP may be same or different, and the downlink BWP and the uplink BWP are used for a downlink slot or symbol, an uplink slot or symbol, and a Flexible slot or symbol. The second configuration pair is used to indicate the BWP identifier of the downlink BWP and the BWP identifier of the uplink BWP, where the the BWP identifier of the downlink BWP and the BWP identifier of the uplink BWP may be same or different, and the downlink BWP and the uplink BWP are used for an SBFD slot or symbol. Table 4 shows an example of the BWP activation configuration table.

**Table 4**

| BWP indication information | BWP identifier configuration pair | |
|---|---|---|
| | First configuration pair | Second configuration pair |
| 0000 | The BWP identifier of the downlink BWP is 1 | The BWP identifier of the downlink BWP is 2 |
| | The BWP identifier of the uplink BWP is 1 | The BWP identifier of the uplink BWP is 2 |
| | for DL/UL/Flexible slot | for SBFD slot |
| 0001 | The BWP identifier of the downlink BWP is 1 | The BWP identifier of the downlink BWP is 3 |
| | The BWP identifier of the uplink BWP is 2 | The BWP identifier of the uplink BWP is 3 |
| | for DL/UL/Flexible slot | for SBFD slot |
| 0010 | The BWP identifier of the downlink BWP is 1 | The BWP identifier of the downlink BWP is 4 |
| | The BWP identifier of the uplink BWP is 3 | The BWP identifier of the uplink BWP is 1 |
| | for DL/UL/Flexible slot | for SBFD slot |
| 0011 | The BWP identifier of the downlink BWP is 1 | The BWP identifier of the downlink BWP is 4 |
| | The BWP identifier of the uplink BWP is 4 | The BWP identifier of the uplink BWP is 4 |
| | for DL/UL/Flexible slot | for SBFD slot |
| ... | ... | ... |
| 1111 | The BWP identifier of the downlink BWP is 4 | The BWP identifier of the downlink BWP is 2 |
| | The BWP identifier of the uplink BWP is 4 | The BWP identifier of the uplink BWP is 3 |
| | for DL/UL/Flexible slot | for SBFD slot |

It can be seen from the Table 4 that the BWP indication information may be indicated by four bits and each piece of BWP indication information corresponds to one BWP identifier configuration pair, where the BWP identifier configuration pair includes the first configuration pair and the second configuration pair. For the downlink slot or symbol, the uplink slot or symbol and the Flexible slot or symbol, the first configuration pair is valid and the second configuration pair is invalid, the BWP identifier of the downlink BWP and the BWP identifier of the uplink BWP are indicated by the first configuration pair. For the SBFD slot or symbol, the second configuration pair is valid and the first configuration pair is invalid, the BWP identifier of the downlink BWP and the BWP identifier of the uplink BWP are indicated by the second configuration pair.

Thirdly, BWP activation configuration: in an example, the BWP activation configuration process may include the following blocks.

At block S11, the base station device sends a BWP activation configuration to the UE, where the BWP activation configuration includes target BWP indication information, for example, any piece of BWP indication information in the BWP activation configuration table, such as 0000 or 0001.

In an example, the base station device may send the BWP activation configuration to the UE through a DCI message; or, the base station device may send the BWP activation configuration to the UE through an MAC-CE message; or the base station device may send the BWP activation configuration to the UE through an RRC message.

At block S12, the UE receives the BWP activation configuration sent by the base station device, and obtains a target BWP identifier configuration pair corresponding to the target BWP indication information from the BWP activation configuration table.

In an example, the UE may obtain the target BWP identifier configuration pair from the BWP activation configuration table shown in Table 3, where the target BWP identifier configuration pair is used to indicate the first BWP identifier of the downlink BWP and the second BWP identifier of the uplink BWP. The first BWP identifier and the second BWP identifier may be same or different, for example, if the target BWP indication information is 0000, the target BWP identifier configuration pair is used to indicate the first BWP identifier of the downlink BWP is 1 and the second BWP identifier of the uplink BWP is 1.

In an example, the UE may obtain the target BWP identifier configuration pair from the BWP activation configuration table shown in Table 4, where the target BWP identifier configuration pair includes the first configuration pair and the second configuration pair. For the downlink slot or symbol, the uplink slot or symbol and the Flexible slot or symbol, the first configuration pair is valid, that is, the first configuration pair is used to indicate the first BWP identifier of the downlink BWP and the second BWP identifier of the uplink BWP, where the first BWP identifier and the second BWP identifier are same or different, for example, if the target BWP indication information is 0000, the first configuration pair is used to indicate the first BWP identifier 1 of the downlink BWP and the second BWP identifier 1 of the uplink BWP. For the SBFD slot or symbol, the second configuration pair is valid, that is, the second configuration pair is used to indicate a third BWP identifier of the downlink BWP and a fourth BWP identifier of the uplink BWP, where the third BWP identifier and the fourth BWP identifier are same or different, for example, if the target BWP indication information is 0000, the second configuration pair is used to indicate the first BWP identifier 2 of the downlink BWP and the second BWP identifier 2 of the uplink BWP.

In an example, the BWP activation configuration may include a switching flag and the above target BWP indication information, if the switching flag is a first value, the UE may obtain the target BWP identifier configuration pair corresponding to the target BWP indication information from the BWP activation configuration table; if the switching flag is a second value, the UE is prohibited to obtain the target BWP identifier configuration pair corresponding to the target BWP indication information from the BWP activation configuration table, that is, the block S12 and subsequent blocks are not performed and no limitation is made to the processing manner of the UE under this circumstance.

For example, a DCI message may carry the switching flag and the target BWP indication information, for example, the DCI message may include a Bandwidth part indicator to which one switching flag may be added. If the switching flag is the second value (e.g. 0), the Bandwidth part indicator is used for an original BWP switching indication; if the switching flag is the first value (e.g. 1), the Bandwidth part indicator is used for the target BWP indication information, as shown in Table 5.

**Table 5**

| IE | Bits | Note |
|---|---|---|
| BWP indicator switching (switching flag/BWP indication switching) | 1 | 0:legacy BWP indicator (conventional BWP indicator) |
| | | 1: BWP indicator for Full Duplex (full duplex BWP indicator) |
| Bandwidth part indicator | N bits | used to indicate Bandwidth part pair (target BWP indication information) |

In an example, the BWP activation configuration includes the target BWP indication information. If the target BWP indication information is a target value (e.g. any value other than that of the BWP indication information in Table 3 or 4), the UE is prohibited to obtain the target BWP identifier configuration pair corresponding to the target BWP indication information from the BWP activation configuration table, that is, the block S12 and subsequent blocks are not performed and no limitation is made to the processing manner of the UE. If the target BWP indication information is not the target value (e.g. any value in the Table 3 or 4), the UE may obtain the target BWP identifier configuration pair corresponding to the target BWP indication information from the BWP activation configuration table.

For example, a new Bandwidth part indicator for SBFD IE element (Bandwidth part indicator for SBFD) is added to the DCI message to distinguish the Bandwidth part indicator, as shown in Table 6.

**Table 6**

| IE | Bits | Note |
|---|---|---|
| Bandwidth part indicator for SBFD | N bits | Used to indicate Bandwidth part pair (target BWP indication information) |

At block S13, the UE determines a target BWP frequency domain resource associated with the target BWP identifier configuration pair based on the BWP frequency domain resource configuration information. For example, since the target BWP identifier configuration pair is used to indicate the BWP identifier of the downlink BWP and the BWP identifier of the uplink BWP and the BWP frequency domain resource configuration information includes the mapping relationship between BWP identifier and the BWP frequency domain resource, the UE may determine the target BWP frequency domain resource associated with the target BWP identifier configuration pair based on the BWP frequency domain resource configuration information.

In an example, as shown in Table 3, if the target BWP identifier configuration pair is used to indicate the first BWP identifier of the downlink BWP and the second BWP identifier of the uplink BWP, the target BWP frequency domain resource may include the BWP frequency domain resource of the downlink BWP corresponding to the first BWP identifier and the BWP frequency domain resource of the uplink BWP corresponding to the second BWP identifier. As shown in Table 4, for the downlink slot or symbol, the uplink slot or symbol and the Flexible slot or symbol, if the first configuration pair in the target BWP identifier configuration pair is used to indicate the first BWP identifier of the downlink BWP and the second BWP identifier of the uplink BWP, the target BWP frequency domain resource may include the BWP frequency domain resource of the downlink BWP corresponding to the first BWP identifier and the BWP frequency domain resource of the uplink BWP corresponding to the second BWP identifier. For the SBFD slot or symbol, if the second configuration pair in the target BWP identifier configuration pair is used to indicate the third BWP identifier of the downlink BWP and the fourth BWP identifier of the uplink BWP, the target BWP frequency domain resource may include the BWP frequency domain resource of the downlink BWP corresponding to the third BWP identifier and the BWP frequency domain resource of the uplink BWP corresponding to the fourth BWP identifier.

At block S14, the UE performs data transmission based on the target BWP frequency domain resource.

For example, if the target BWP frequency domain resource includes the BWP frequency domain resource of the uplink BWP, the UE may send data on the BWP frequency domain resource of the uplink BWP, for example, send application data or signals or the like.

For example, if the target BWP frequency domain resource includes the BWP frequency domain resource of the downlink BWP, the UE may receive data on the BWP frequency domain resource of the downlink BWP, for example, receive application data or signals or the like.

In an example, during an access process of the UE, the UE may perform data transmission based on the target BWP frequency domain resource, for example, send uplink data (e.g. application data or signals) or receive downlink data (e.g. application data or signals). After a successful access of the UE, the UE may perform data transmission based on the target BWP frequency domain resource.

At block S15, the base station device determines the target BWP frequency domain resource associated with the target BWP identifier configuration pair (i.e. the target BWP identifier configuration pair corresponding to the UE) based on the BWP frequency domain resource configuration information.

At block S16, the base station device performs data transmission with the UE based on the target BWP frequency domain resource.

For example, if the target BWP frequency domain resource includes the BWP frequency domain resource of the uplink BWP, the base station device may receive data on the BWP frequency domain resource of the uplink BWP, for example, receive application data or signals or the like. If the target BWP frequency domain resource includes the BWP frequency domain resource of the downlink BWP, the base station device may send data on the BWP frequency domain resource of the downlink BWP, for example, send application data or signals or the like.

Fourthly, BWP activation configuration switching: after the base station device sends the BWP activation configuration to the UE, within a BWP switching time, if the BWP frequency domain resource corresponding to the UE changes, the base station sends an updated BWP activation configuration to the UE, where the updated BWP activation configuration includes updated target BWP indication information. Thus, the UE obtains from the BWP activation configuration table the target BWP identifier configuration pair corresponding to updated target BWP indication information, and based on the BWP frequency domain resource configuration information, determines the target BWP frequency domain resource associated with the target BWP identifier configuration pair, and then performs data transmission based on the target BWP frequency domain resource.

As shown in FIG. 4A, it is a schematic diagram illustrating BWP switching (in a case of a single BWP, switching of a single activated BWP pair). There are asymmetrical BWP frequency domain resource configurations for DL BWP#1 (i.e. downlink BWP1)/ UL BWP#1 (i.e. uplink BWP1) and DL BWP#3/UL BWP#3, where DL BWP#3 has two discontinuous BWP frequency domain resources and DL BWP/UL BWP of BWP#2 occupy a same BWP frequency domain resource. Within a BWP switching time, the base station device firstly activates DL BWP#1/UL BWP#1 by DCI, and then the base station device notifies the UE by DCI to switch DL BWP#1/UL BWP#1 to BWP#2, and then the base station device notifies the UE by DCI to switch BWP#2 to DL BWP#3/UL BWP#3.

In FIG. 4A, the abscissa is Time/Event, the ordinate is Frequency, BWP switching by DCI represents implementing BWP switching by DCI, and BWP-In activity Timer Expiry represents that the DCI activity timer expires, namely, switching is performed within the BWP switching time.

FIG. 4B is a schematic diagram of BWP switching. There are symmetrical BWP frequency domain resource configurations for DL BWP#1/UL BWP#1, BWP#2 and DL BWP#3/UL BWP#3, and DL BWP#3 has two discontinuous BWP frequency domain resources; the base station device and the UE support simultaneous activation of different BWP identifiers. Within the BWP switching time, the base station device firstly activates DL BWP#1 and UL BWP#3 by DCI, and then the base station device notifies the UE by DCI to switch DL BWP#1 and UL BWP#3 to BWP#2 and then the base station device notifies the UE by DCI to switch BWP#2 to DL BWP#3 and UL BWP#1.

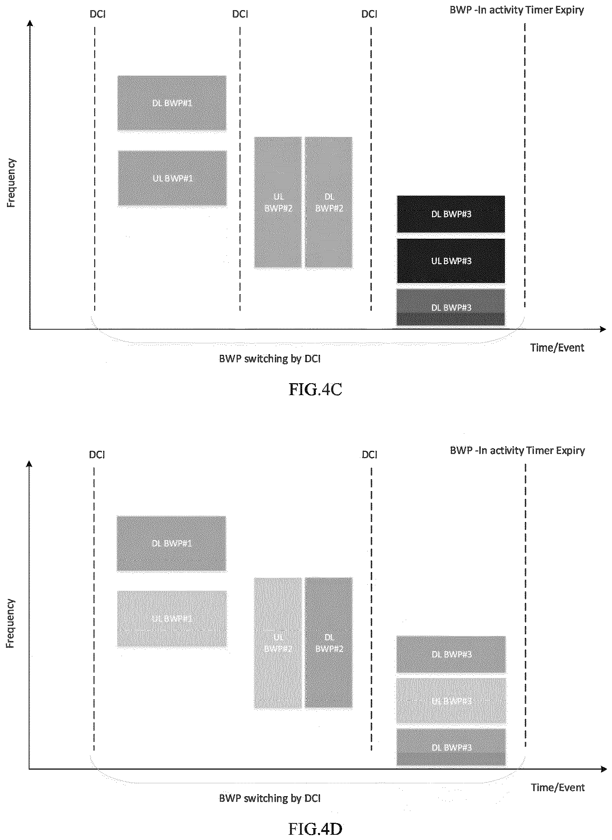

FIG. 4C is a schematic diagram of BWP switching. There are different BWP frequency domain resource configurations for DL BWP#1/UL BWP#1, DL BWP#2/ UL BWP#2 and DL BWP#3/UL BWP#3, and DL BWP#1/UL BWP#1 and DL BWP#3/UL BWP#3 have asymmetrical BWP frequency domain resources. And DL BWP#3 has two discontinuous BWP frequency domain resources, and DL BWP/UL BWP of BWP#2 occupy a same BWP frequency domain resource. Within the BWP switching time, the base station device firstly activates DL BWP#1 and UL BWP#1 by DCI, and then the base station device notifies the UE by DCI to switch DL BWP#1 and UL BWP#1 to DL BWP#2 and UL BWP#2, and then the base station device notifies the UE by DCI to switch DL BWP#2 and UL BWP#2 to DL BWP#3 and UL BWP#3.

FIG. 4D is a schematic diagram of BWP switching (in a case of multiple BWPs switching, i.e. switching of the two configuration pairs in Table 4). DL BWP#1/UL BWP#1 and DL BWP#3/UL BWP#3 have asymmetrical BWP frequency domain resource configurations, DL BWP#3 has two discontinuous BWP frequency domain resources, and DL BWP#2/UL BWP#2 of BWP#2 occupy a same BWP frequency domain resource. Within the BWP switching time, the base station device firstly activates DL BWP#1/UL BWP#1 and DL BWP#2/UL BWP#2 by DCI, and then the base station device notifies the UE by DCI to switch DL BWP#1/UL BWP#1 and DL BWP#2/UL BWP#2 to DL BWP#3/UL BWP#3.

Fifthly, SBFD frequency domain resource configuration: the base station device may send SBFD frequency domain resource configuration information to the UE, where the SBFD frequency domain resource configuration information includes a subband frequency domain resource which may include at least one of a downlink subband frequency domain resource, an uplink subband frequency domain resource and a guard subband frequency domain resource. For example, the base station device sends the SBFD frequency domain resource configuration information to the UE by a broadcast message, or, sends the SBFD frequency domain resource configuration information to the UE by an RRC message, or, sends the SBFD frequency domain resource configuration information to the UE by an MAC-CE message, or, sends the SBFD frequency domain resource configuration information to the UE by a DCI message.

In an example, if the subband frequency domain resource includes the downlink subband frequency domain resource, the SBFD frequency domain resource configuration information may include location information corresponding to the downlink subband frequency domain resource.

In an example, if the subband frequency domain resource includes the uplink subband frequency domain resource, the SBFD frequency domain resource configuration information may include location information corresponding to the uplink subband frequency domain resource.

In an example, if the subband frequency domain resource includes the downlink subband frequency domain resource and the uplink subband frequency domain resource, the SBFD frequency domain resource configuration information may include the location information corresponding to the downlink subband frequency domain resource and a frequency domain resource number (the frequency domain resource number may be carried in the SBFD frequency domain resource configuration information, or pre-configured in the UE or transmitted in another message; in this example, the frequency domain resource number is carried in the SBFD frequency domain resource configuration information), and by the location information corresponding to the downlink subband frequency domain resource and the frequency domain resource number (e.g. a total number of PRBs), the downlink subband frequency domain resource may be removed from the frequency domain resource number to obtain the location information corresponding to the uplink subband frequency domain resource. Or the SBFD frequency domain resource configuration information may include the location information corresponding to the uplink subband frequency domain resource and the frequency domain resource number, and by the location information corresponding to the uplink subband frequency domain resource and the frequency domain resource number, the uplink subband frequency domain resource may be removed from the frequency domain resource number to obtain the location information corresponding to the downlink subband frequency domain resource. Or the SBFD frequency domain resource configuration information may include the location information corresponding to the uplink subband frequency domain resource and the location information corresponding to the downlink subband frequency domain resource.

In an example, if the subband frequency domain resource includes the downlink subband frequency domain resource and the guard subband frequency domain resource, the SBFD frequency domain resource configuration information includes the location information corresponding to the downlink subband frequency domain resource and the frequency domain resource number, and by the location information corresponding to the downlink subband frequency domain resource and the frequency domain resource number, the location information corresponding to the guard subband frequency domain resource is derived. Or the SBFD frequency domain resource configuration information includes the location information corresponding to the guard subband frequency domain resource and the frequency domain resource number, and by the location information corresponding to the guard subband frequency domain resource and the frequency domain resource number, the location information corresponding to the downlink subband frequency domain resource is derived. Or the SBFD frequency domain resource configuration information includes the location information corresponding to the downlink subband frequency domain resource and the location information corresponding to the guard subband frequency domain resource.

In an example, if the subband frequency domain resource includes the uplink subband frequency domain resource and the guard subband frequency domain resource, the SBFD frequency domain resource configuration information includes the location information corresponding to the uplink subband frequency domain resource and the frequency domain resource number, and by the location information corresponding to the uplink subband frequency domain resource and the frequency domain resource number, the location information corresponding to the guard subband frequency domain resource is derived. Or the SBFD frequency domain resource configuration information includes the location information corresponding to the guard subband frequency domain resource and the frequency domain resource number, and by the location information corresponding to the guard subband frequency domain resource and the frequency domain resource number, the location information corresponding to the uplink subband frequency domain resource is derived. Or the SBFD frequency domain resource configuration information includes the location information corresponding to the uplink subband frequency domain resource and the location information corresponding to the guard subband frequency domain resource.

In an example, if the subband frequency domain resource includes the downlink subband frequency domain resource, the uplink subband frequency domain resource, and the guard subband frequency domain resource, the SBFD frequency domain resource configuration information includes the location information corresponding to the downlink subband frequency domain resource, the location information corresponding to the guard subband frequency domain resource and the frequency domain resource number, and the location information corresponding to the uplink subband frequency domain resource is derived by the above parameters. Or the SBFD frequency domain resource configuration information includes the location information corresponding to the uplink subband frequency domain resource, the location information corresponding to the guard subband frequency domain resource and the frequency domain resource number, and the location information corresponding to the downlink subband frequency domain resource is derived by the above parameters. Or the SBFD frequency domain resource configuration information includes the location information corresponding to the uplink subband frequency domain resource, the location information corresponding to the downlink subband frequency domain resource and the frequency domain resource number, and the location information corresponding to guard subband frequency domain resource is derived by the above parameters. Or the SBFD frequency domain resource configuration information includes the location information corresponding to the uplink subband frequency domain resource, the location information corresponding to guard subband frequency domain resource, and the location information corresponding to the downlink subband frequency domain resource.

It can be seen from the above that if the subband frequency domain resource includes the downlink subband frequency domain resource, a location of the downlink subband frequency domain resource may be determined based on the location information corresponding to the downlink subband frequency domain resource; if the subband frequency domain resource includes the uplink subband frequency domain resource, a location of the uplink subband frequency domain resource may be determined based on the location information corresponding to the uplink subband frequency domain resource; if the subband frequency domain resource includes the guard subband frequency domain resource, a location of the guard subband frequency domain resource may be determined based on the location information corresponding to the guard subband frequency domain resource.

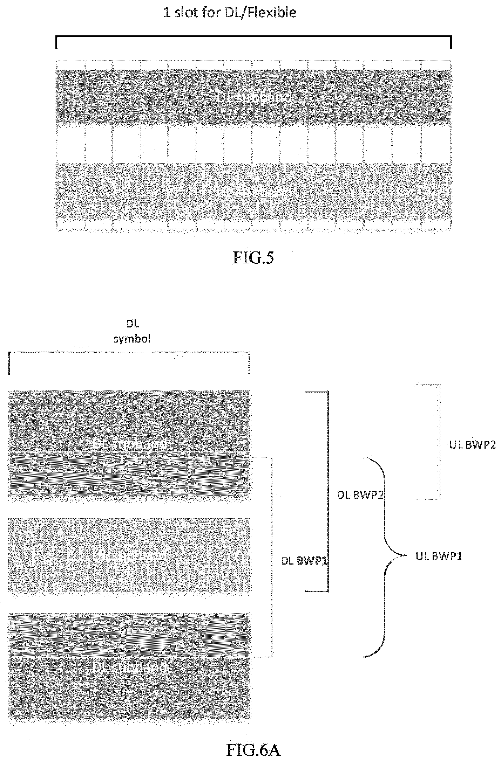

For example, as shown in FIG. 5, it is a schematic diagram illustrating a frequency domain relationship of UL subband (uplink subband frequency domain resource), DL subband (downlink subband frequency domain resource) and guard subband (guard subband frequency domain resource). The indication manner of the UL subband, DL subband and guard subband may be carried by a broadcast message, an RRC message, (i.e. RRC-dedicated message), an MAC-CE message, a DCI message or the like.

The number of PRBs and the frequency domain locations occupied by the UL subband and the number of PRBs and the frequency domain locations occupied by the guard subband (the guard subband may be clearly indicated or 0) may be indicated, and by using the total number of PRBs (i.e. the frequency domain resource number) and the PRB frequency domain locations, the number of PRBs and the frequency domain locations occupied by the UL subband and the number of PRBs may be removed, and the number of PRBs and the frequency domain locations occupied by the guard subband may be removed to obtain the remaining as the number of PRBs and the frequency domain locations occupied by the DL subband. Or the number of PRBs and the frequency domain locations occupied by the DL subband and the number of PRBs and the frequency domain locations occupied by the guard subband may be indicated, by using the total number of PRBs and the PRB frequency domain locations, the number of PRBs and the frequency domain locations occupied by the DL subband may be removed, and the number of PRBs and the frequency domain locations occupied by the guard subband may be removed to obtain the remaining as the number of PRBs and the frequency domain locations occupied by the UL subband. Or the number of PRBs and the frequency domain locations occupied by the UL subband and the number of PRBs and the frequency domain locations occupied by the DL subband may be indicated, and by using the total number of PRBs and the PRB frequency domain locations, the number of PRBs and the frequency domain locations occupied by the DL subband and the number of PRBs may be removed and the frequency domain locations occupied by the UL subband may be removed to obtain the remaining as the number of PRBs and the frequency domain locations occupied by the guard subband.

In an example, the location information corresponding to the downlink subband frequency domain resource may include a start location of the downlink subband frequency domain resource and a number of PRBs occupied by the downlink subband frequency domain resource, namely, a numeral indicating the start PRB and a total number of PRBs (M*N) occupying the frequency domain. As shown in Table 7, it is an example of the location information.

**Table 7**

| IE | Bit length | | Meanings |
|---|---|---|---|
| Numeral of the start PRB of DL subband | B | Start location of DL Subband | |
| Frequency domain resource assignment indication | N | N refers to a number of units of frequency domain resources occupied by DL subband | |
| RB/RBG unit number indication of frequency domain resource | M | 1, 2, 4, 8, 16 and so on; if the indication domain is not changed, there is one RB/RBG by default. | |

In an example, the location information corresponding to the downlink subband frequency domain resource may include a start location of the downlink subband frequency domain resource and an end location of the downlink subband frequency domain resource, therefore, the occupying total number of the downlink subband frequency domain resources is calculated based on the start location and the end location of the downlink subband frequency domain resource as shown in Table 8.

**Table 8**

| IE | Bit length | Meanings |
|---|---|---|
| The numeral of the start PRB of the DL subband | B | Start location of the DL subband |
| The numeral of the end PRB of the DL subband | C | End location of the DL subband |

In an example, the location information corresponding to the uplink subband frequency domain resource may include a start location of the uplink subband frequency domain resource and a number of PRBs occupied by the uplink subband frequency domain resource, namely, a numeral indicating the start PRB and a total number of PRBs (M*N) occupying the frequency domain. As shown in Table 9, it is an example of the location information.

**Table 9**

| IE | Bit length | | Meanings |
|---|---|---|---|
| The numeral of the start PRB of the UL subband | B | Start location of the UL subband | |
| Frequency domain resource assignment indication | N | N refers to a number of units of frequency domain resources occupied by UL subband | |
| RB/RBG unit number indication of frequency domain resource | M | 1, 2, 4, 8, 16 and so on; if the indication domain is not changed, there is one RB/RBG by default. | |

In an example, the location information corresponding to the uplink subband frequency domain resource may include a start location of the uplink subband frequency domain resource and an end location of the uplink subband frequency domain resource, therefore, the occupying total number of the uplink subband frequency domain resources is calculated based on the start location and the end location of the uplink subband frequency domain resource as shown in Table 10.

**Table 10**

| IE | Bit length | Meanings |
|---|---|---|
| The numeral of the start PRB of the UL subband | B | Start location of the UL subband |
| The numeral of the end PRB of the UL subband | C | End location of the UL subband |

In an example, the location information corresponding to the guard subband frequency domain resource may include a start location of the guard subband frequency domain resource and a number of PRBs occupied by the guard subband frequency domain resource, namely, a numeral indicating the start PRB and a total number of PRBs (M*N) occupying the frequency domain. As shown in Table 11, it is an example of the location information.

**Table 11**

| IE | Bit length | | Meanings |
|---|---|---|---|
| The numeral of the start PRB of the guard subband | B | Start location of the guard subband | |
| Frequency domain resource assignment indication | N | N refers to a number of units of frequency domain resources occupied by the guard subband | |
| RB/RBG unit number indication of frequency domain resource | M | 1, 2, 4, 8, 16 and so on; if the indication domain is not changed, there is one RB/RBG by default. | |

In an example, the location information corresponding to the guard subband frequency domain resource may include a start location of the guard subband frequency domain resource and an end location of the guard subband frequency domain resource, therefore, the occupying total number of the guard subband frequency domain resources is calculated based on the start location and the end location of the guard subband frequency domain resource as shown in Table 12.

**Table 12**

| IE | Bit length | Meanings |
|---|---|---|
| The numeral of the start PRB of the guard subband | B | Start location of the guard subband |
| The numeral of the end PRB of the guard subband | C | End location of the guard subband |

In an example, the location information corresponding to the downlink subband frequency domain resource may be indicated by bitmap, the location information corresponding to the uplink subband frequency domain resource may be indicated by bitmap, and the location information corresponding to the guard subband frequency domain resource may be indicated by bitmap. For the manner in which the bitmap indicates location information, Table 13 gives an example of the location information corresponding to the uplink subband frequency domain resource.

**Table 13**

| .IE | Bit length | Meanings |
|---|---|---|
| RB/RBG resource bitmap indication of the UL subband | B | Bitmap indication of the UL subband frequency domain, where each bit represents one RB/RBG |
| RB/RBG unit number indication of the frequency domain resource | M | 1, 2, 4, 8, 16 and so on; if the indication domain is not changed, there is one RB/RBG by default. |

Sixthly, SBFD feature enable indication: the base station device may send SBFD enable information to the UE by a broadcast message or an RRC message, where the SBFD enable information is used to enable an SBFD function, namely, the UE enables the SBFD function. The broadcast message may be a Master Information Block (MIB) message or a Secondary Information Block (SIB) message, where the SIB message may be an SIBx. For example, the base station device may carry one bit of SBFD enable information in the broadcast message or in the UE-dedicated RRC message as follows:

```
 {...
 subbandfullDuplexEnabled ENUMERATED f enabled} OPTIONAL,
 ...}
```

For example, if the broadcast is performed by using the system, the SBFD enable information may be broadcast to all UEs in a cell through an MIB or SIBx, where the SIBx refers to any SIB information block. If FD enable information is broadcast by using MIB, the SBFD mode enable and disable may be represented by a spare field in the MIB.

Considering the enable of the SBFD mode is an important system configuration parameter, if the SBFD enable information is broadcast by using SIBx, the broadcast is performed in the SIB1. Considering it is possible to convey the same important system information as in the MIB or SIB1 by servingCellConfigCommon, the SBFD enable information may be indicated by a parameter present in both servingCellConfigCommon and SIB1. Since TDD-UL-DL-ConfigCommon is a frame structure configuration parameter as well as a common parameter of servingCellConfigCommon and SIB1, an SBFD enable parameter is introduced to TDD-UL-DL-ConfigCommon:

```
 TDD-UL-DL-ConfigCommon ::= SEQUENCE { ...
 subbandfullDuplexEnabled ENUMERATED f enabled} OPTIONAL,
 ... }
```

The parameter may be an optional parameter. If this parameter is not configured, it is defaulted that the SBFD function is not enabled. Only when the enabled is configured clearly is the SBFD function enabled.

Seventhly, a relationship between the BWP frequency domain resource and the SBFD subband frequency domain resource.

In an example, the UE may determine an available frequency domain resource based on the target BWP frequency domain resource and the subband frequency domain resource, and perform data transmission based on the available frequency domain resource. For example, if the available frequency domain resource includes an uplink frequency domain resource (i.e. a frequency domain resource for uplink transmission), the UE may send data (i.e. uplink data) on the uplink frequency domain resource, for example, send application data or uplink signals or the like. If the available frequency domain resource includes a downlink frequency domain resource (i.e. a frequency domain resource for downlink transmission), the UE may receive data on the downlink frequency domain resource, for example, receive application data or downlink signals or the like.

In an example, the base station device may determine an available frequency domain resource corresponding to the UE based on the target BWP frequency domain resource corresponding to the UE and the subband frequency domain resource corresponding to the UE, and perform data transmission with the UE based on the available frequency domain resource. For example, if the available frequency domain resource includes an uplink frequency domain resource, the base station device may receive data (i.e. uplink data) on the uplink frequency domain resource, for example, receive application data or uplink signals or the like. If the available frequency domain resource includes a downlink frequency domain resource, the base station device may send data (i.e. downlink data) on the downlink frequency domain resource, for example, send application data or uplink signals or the like.

In an example, the UE/base station device may obtain a subband frequency domain resource which includes at least one of a downlink subband frequency domain resource, an uplink subband frequency domain resource and a guard subband frequency domain resource. Further, the UE/base station device may also obtain a target BWP frequency domain resource which may include a BWP frequency domain resource of a downlink BWP and/or a BWP frequency domain resource of an uplink BWP.

Case 1: for a downlink symbol (or downlink slot) for SBFD transmission, if the subband frequency domain resource includes the uplink subband frequency domain resource (the uplink subband frequency domain resource and the guard subband frequency domain resource), and the remaining frequency domain resource other than the uplink subband frequency domain resource in the downlink symbol is a downlink subband frequency domain resource (e.g. the subband frequency domain resource includes the uplink subband frequency domain resource and the downlink subband frequency domain resource at the same time, or, the subband frequency domain resource inlcudes the uplink subband frequency domain resource but does not include the downlink subband frequency domain resource, but due to the downlink symbol, the remaining frequency domain resource is a downlink subband frequency domain resource), then the available frequency domain resource is determined in the following manner:

If there is an overlapping frequency domain resource between the BWP frequency domain resource of the downlink BWP and the downlink subband frequency domain resource, the overlapping frequency domain resource is determined as the available frequency domain resource. In this case, the UE may receive downlink data on the available frequency domain resource and the base station device may send downlink data on the available frequency domain resource. If there is no overlapping frequency domain resource between the BWP frequency domain resource of the downlink BWP and the downlink subband frequency domain resource, it is impossible to determine the available frequency domain resource, and in this case, the UE does not receive downlink data on the available frequency domain resource and the base station device also does not send downlink data on the available frequency domain resource.

FIG. 6A is a schematic diagram illustrating a matching relationship between BWP frequency domain resource and subband frequency domain resource. In a DL symbol, the base station device assigns a BWP frequency domain resource of a downlink BWP as DL BWP1 to the UE1 and also assigns a BWP frequency domain resource of a downlink BWP as DL BWP2 to the UE2. Since there is an overlapping frequency domain resource between DL BWP1 and DL subband (i.e. downlink subband frequency domain resource), the UE1 and the base station device can transmit downlink data on the overlapping frequency domain resource of DL BWP1 and DL subband. Since there is an overlapping frequency domain resource between DL BWP2 and DL subband, the UE2 and the base station device can transmit downlink data on the overlapping frequency domain resource of DL BWP2 and DL subband.

If there is an overlapping frequency domain resource between the BWP frequency domain resource of the uplink BWP and the uplink subband frequency domain resource, the overlapping frequency domain resource is determined as the available frequency domain resource. In this case, the UE may send uplink data on the available frequency domain resource and the base station device may receive uplink data on the available frequency domain resource. If there is no overlapping frequency domain resource between the BWP frequency domain resource of the uplink BWP and the uplink subband frequency domain resource, it is impossible to determine the available frequency domain resource, and in this case, the UE does not send uplink data on the available frequency domain resource and the base station device also does not receive uplink data on the available frequency domain resource.

As shown in FIG. 6A, the base station device assigns a BWP frequency domain resource of an uplink BWP as UL BWP1 to the UE1 and also assigns a BWP frequency domain resource of an uplink BWP as UL BWP2 to the UE2. Since there is an overlapping frequency domain resource (the overlapping frequency domain resource may be UL subband) between UL BWP1 and UL subband (i.e. uplink subband frequency domain resource), the UE1 and the base station device can transmit uplink data on the overlapping frequency domain resource of UL BWP1 and UL subband. Since there is no overlapping frequency domain resource between UL BWP2 and UL subband, the UE2 and the base station device cannot transmit uplink data.

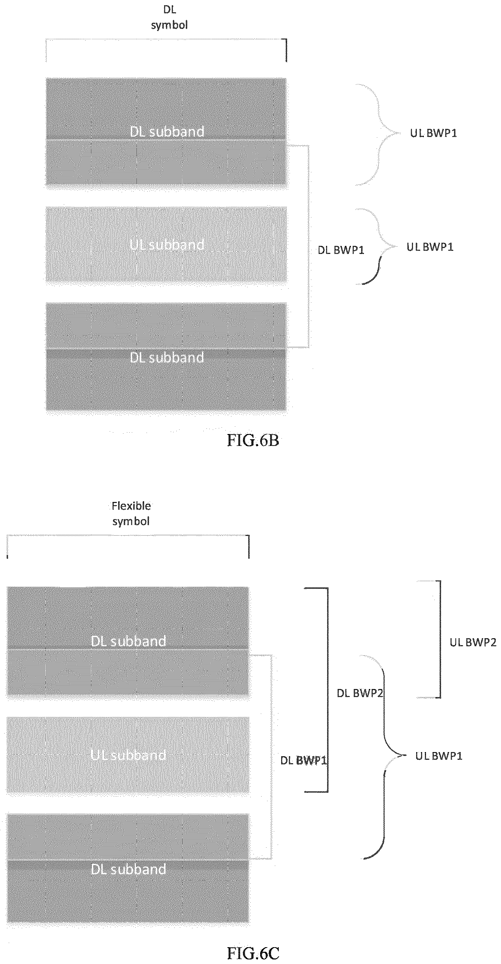

In an example, the base station device and the UE support discontinuous resource assignment of the DL BWP and discontinuous resource assignment of the UL BWP. FIG. 6B is a schematic diagram illustrating a matching relationship between BWP frequency domain resource and subband frequency domain resource. The BWP frequency domain resource of the downlink BWP is DL BWP1 and the BWP frequency domain resource of the uplink BWP is UL BWP1. Obviously, the two UL BWP1s are discontinuous BWP frequency domain resources.

Case 2: for a downlink symbol (or downlink slot) for SBFD transmission, if the subband frequency domain resource includes the downlink subband frequency domain resource, and the remaining frequency domain resource other than the downlink subband frequency domain resource in the downlink symbol is a downlink subband frequency domain resource (due to the downlink symbol, the remaining frequency domain resource is a downlink subband frequnecy domain resource), the BWP frequency domain resource of the downlink BWP and/or the downlink subband frequency domain resource (i.e. the downlink subband frequency domain resource in the subband frequency domain resource and the remaining frequency domain resource) is determined as the available frequency domain resource. The UE receives downlink data on the available frequency domain resource and the base station device sends downlink data on the available frequency domain resource.

But, in the case 2, the UE and the base station device cannot transmit uplink data.

Case 3: for an uplink symbol (or uplink slot) for SBFD transmission, if the subband frequency domain resource includes the downlink subband frequency domain resource (the downlink subband frequency domain resource and the guard subband frequency domain resource), and the remaining frequency domain resource other than the downlink subband frequency domain resource in the uplink symbol is an uplink subband frequency domain resource (for example, the subband frequency domain resource includes the uplink subband frequency domain resource and the downlink subband frequency domain resource at the same time, or the subband frequency domain resource includes the downlink subband frequency domain resource but does not include the uplink subband frequency domain resource, due to the uplink symbol, the remaining frequency domain resource is an uplink subband frequency domain resource), the available frequency domain resource may be determined in the following manner:
If there is an overlapping frequency domain resource between the BWP frequency domain resource of the downlink BWP and the downlink subband frequency domain resource, the overlapping frequency domain resource is determined as the available frequency domain resource. The UE receives downlink data on the available frequency domain resource and the base station device sends downlink data on the available frequency domain resource. If there is no overlapping frequency domain resource between the BWP frequency domain resource of the downlink BWP and the downlink subband frequency domain resource, it is impossible to determine the available frequency domain resource and thus, the UE does not receive downlink data on the available frequency domain resource and the base station device does not send downlink data on the available frequency domain resource.
If there is an overlapping frequency domain resource between the BWP frequency domain resource of the uplink BWP and the uplink subband frequency domain resource, the overlapping frequency domain resource is determined as the available frequency domain resource. The UE sends uplink data on the available frequency domain resource and the base station device receives uplink data on the available frequency domain resource. If there is no overlapping frequency domain resource between the BWP frequency domain resource of the uplink BWP and the uplink subband frequency domain resource, it is impossible to determine the available frequency domain resource, and thus, the UE does not send uplink data on the available frequency domain resource and the base station device does not receive uplink data on the available frequency domain resource.

Case 4: for an uplink symbol (or uplink slot) for SBFD transmission, if the subband frequency domain resource includes the uplink subband frequency domain resource, and the remaining frequency domain resource other than the uplink subband frequency domain resource in the uplink symbol is an uplink subband frequency domain resource (due to the uplink symbol, the remaining frequency domain resource is an uplink subband frequency domain resource), the BWP frequency domain resource of the uplink BWP and/or the uplink subband frequency domain resource (i.e. the uplink subband frequency domain resource in the subband frequency domain resource and the remaining frequency domain resource) is determined as the available frequency domain resource. The UE sends uplink data on the available frequency domain resource and the base station device receives uplink data on the available frequency domain resource.

But, in the case 4, the UE and the base station device cannot transmit downlink data.

Case 5: for a Flexible symbol (or Flexible slot) for SBFD transmission, if the subband frequency domain resource includes the downlink subband frequency domain resource the downlink subband frequency domain resource and the guard subband frequency domain resource) , and the remaining frequency domain resource other than the downlink subband frequency domain resource in the Flexible symbol is an uplink subband frequency domain resource (for example, the subband frequency domain resource includes the uplink subband frequency domain resource and the downlink subband frequency domain resource, or the subband frequency domain resource includes the downlink subband frequency domain resource but does not include the uplink subband frequency domain resource; due to use of the Flexible symbol for UL, the remaining frequency domain resource is an uplink subband frequency domain resource), the available frequency domain resource may be determined in the following manner:
If there is an overlapping frequency domain resource between the BWP frequency domain resource of the downlink BWP and the downlink subband frequency domain resource, the overlapping frequency domain resource is determined as the available frequency domain resource. The UE receives downlink data on the available frequency domain resource and the base station device sends downlink data on the available frequency domain resource. If there is no overlapping frequency domain resource between the BWP frequency domain resource of the downlink BWP and the downlink subband frequency domain resource, it is impossible to determine the available frequency domain resource, and thus the UE does not receive downlink data on the available frequency domain resource and the base station device does not send downlink data on the available frequency domain resource.
If there is an overlapping frequency domain resource between the BWP frequency domain resource of the uplink BWP and the uplink subband frequency domain resource, the overlapping frequency domain resource is determined as the available frequency domain resource. The UE sends uplink data on the available frequency domain resource and the base station device receives uplink data on the available frequency domain resource. If there is no overlapping frequency domain resource between the BWP frequency domain resource of the uplink BWP and the uplink subband frequency domain resource, it is impossible to determine the available frequency domain resource and thus the UE does not send uplink data on the available frequency domain resource and the base station device does not receive uplink data on the available frequency domain resource.

Case 6: for a Flexible symbol (or Flexible slot) for SBFD transmission, if the subband frequency domain resource includes the downlink subband frequency domain resource (the downlink subband frequency domain resource and the guard subband frequency domain resource) and the remaining frequency domain resource other than the downlink subband frequency domain resource in the Flexible symbol is a downlink subband frequency domain resource (for example, due to use of the Flexible symbol for DL, the remaining frequency domain resource is a downlink subband frequency domain resource), the BWP frequency domain resource of the downlink BWP and/or the downlink subband frequency domain resource (i.e. the downlink subband frequency domain resource in the subband frequency domain resource and the remaining frequency domain resource) is determined as the available frequency domain resource. The UE may receive downlink data on the available frequency domain resource and the base station device may send downlink data on the available frequency domain resource.

But, in the case 6, the UE and the base station device cannot transmit uplink data.

Case 7: for a Flexible symbol (or Flexible slot) for SBFD transmission, if the subband frequency domain resource includes the uplink subband frequency domain resource (the uplink subband frequency domain resource and the guard subband frequency domain resource) and the remaining frequency domain resource other than the uplink subband frequency domain resource in the Flexible symbol is a downlink subband frequency domain resource (for example, the subband frequency domain resource includes the uplink subband frequency domain resource and the downlink subband frequency domain resource, or the subband frequency domain resource includes the uplink subband frequency domain resource but does not include the downlink subband frequency domain resource, due to the use of the Flexible symbol for DL, the remaining frequency domain resource is a downlink subband frequency domain resource), the available frequency domain resource may be determined in the following manner:
If there is an overlapping frequency domain resource between the BWP frequency domain resource of the downlink BWP and the downlink subband frequency domain resource, the overlapping frequency domain resource is determined as the available frequency domain resource. The UE receives downlink data on the available frequency domain resource and the base station device sends downlink data on the available frequency domain resource. If there is no overlapping frequency domain resource between the BWP frequency domain resource of the downlink BWP and the downlink subband frequency domain resource, it is impossible to determine the available frequency domain resource, and thus, the UE does not receive downlink data on the available frequency domain resource and the base station device does not send downlink data on the available frequency domain resource.
If there is an overlapping frequency domain resource between the BWP frequency domain resource of the uplink BWP and the uplink subband frequency domain resource, the overlapping frequency domain resource is determined as the available frequency domain resource. The UE sends uplink data on the available frequency domain resource and the base station device receives uplink data on the available frequency domain resource. If there is no overlapping frequency domain resource between the BWP frequency domain resource of the uplink BWP and the uplink subband frequency domain resource, it is impossible to determine the available frequency domain resource, and thus, the UE does not send uplink data on the available frequency domain resource and the base station device does not receive uplink data on the available frequency domain resource.

FIG. 6C is a schematic diagram illustrating a matching relationship between BWP frequency domain resource and subband frequency domain resource. In the Flexible symbol, the base station device assigns a BWP frequency domain resource of a downlink BWP as DL BWP1 to the UE1 and also assigns a BWP frequency domain resource of a downlink BWP as DL BWP2 to the UE2. If the Flexible symbol is used for DL, the remaining frequency domain resource other than the UL subband (indicated by the SBFD frequency domain resource configuration information) is the DL subband. Since there is an overlapping frequency domain resource between the DL BWP1 and the DL subband, the UE1 and the base station device can transmit downlink data on the overlapping frequency domain resource of the DL BWP1 and the DL subband. Since there is an overlapping frequency domain resource between the DL BWP2 and the DL subband, the UE2 and the base station device can transmit downlink data on the overlapping frequency domain resource of the DL BWP2 and the DL subband.

As shown in FIG. 6C, the base station device assigns a BWP frequency domain resource of an uplink BWP as UL BWP1 to the UE1 and also assigns a BWP frequency domain resource of an uplink BWP as UL BWP2 to the UE2. Since there is an overlapping frequency domain resource between the UL BWP1 and the UL subband, the UE1 and the base station device can transmit uplink data on the overlapping frequency domain resource of the UL BWP1 and the UL subband. But, since there is no overlapping frequency domain resource between the UL BWP2 and the UL subband, the UE2 and the base station device cannot transmit uplink data.

Case 8: for a Flexible symbol (or Flexible slot) for SBFD transmission, if the subband frequency domain resource includes the uplink subband frequency domain resource (the uplink subband frequency domain resource and the guard subband frequency domain resource) and the remaining frequency domain resource other than the uplink subband frequency domain resource in the Flexible symbol is an uplink subband frequency domain resource (for example, due to use of the Flexible symbol in UL, the remaining frequency domain resource is the uplink subband frequency domain resource), the BWP frequency domain resource of the uplink BWP and/or the uplink subband frequency domain resource (i.e. the uplink subband frequency domain resource in the subband frequency domain resource and the remaining frequency domain resource) is determined as the available frequency domain resource. The UE may send uplink data on the available frequency domain resource and the base station device may receive uplink data on the available frequency domain resource.

But, in the case 8, the UE and the base station device cannot transmit downlink data.

In an example, for the cases 5 to 8, the base station device may dynamically indicate that the Flexible symbol is used for UL such that the UE knows that the Flexible symbol is used for UL and hence, the remaining frequency domain resource is the uplink subband frequency domain resource. Alternatively, the base station device may dynamically indicate the Flexible symbol is used for DL such that the UE knows that the Flexible symbol is used for DL and hence the remaining frequency domain resource is a downlink subband frequency domain resource.

Case 9: for a Flexible symbol (or Flexible slot) for SBFD transmission, if the subband frequency domain resource includes the downlink subband frequency domain resource (the downlink subband frequency domain resource and the guard subband frequency domain resource) and the remaining frequency domain resource other than the downlink subband frequency domain resource in the Flexible symbol is an unknown subband frequency domain resource (for example, it is not clearly indicated whether the Flexible symbol is used for DL or UL, such that the remaining frequency domain resource is an unknown subband frequency domain resource, namely, it is not clearly determined that whether the remaining frequency domain resource in the Flexible symbol is a downlink subband frequency domain resource or an uplink subband frequency domain resource), the available frequency domain resource is determined in the following manner:
If there is an overlapping frequency domain resource between the BWP frequency domain resource of the downlink BWP and the downlink subband frequency domain resource, the overlapping frequency domain resource is determined as the available frequency domain resource. The UE receives downlink data on the available frequency domain resource and the base station device sends downlink data on the available frequency domain resource. If there is no overlapping frequency domain resource between the BWP frequency domain resource of the downlink BWP and the downlink subband frequency domain resource, it is impossible to determine the available frequency domain resource, and thus, the UE does not receive downlink data on the available frequency domain resource and the base station device does not send downlink data on the available frequency domain resource.
If there is an overlapping frequency domain resource between the BWP frequency domain resource of the uplink BWP and the unknown subband frequency domain resource, the overlapping frequency domain resource is determined as the available frequency domain resource. The UE sends uplink data on the available frequency domain resource and the base station device receives uplink data on the available frequency domain resource. Alternatively, if there is an overlapping frequency domain resource between the BWP frequency domain resource of the uplink BWP and the unknown subband frequency domain resource, it is impossible to determine the available frequency domain resource, and thus, the UE does not send uplink data on the available frequency domain resource and the base station device does not receive uplink data on the available frequency domain resource.

Case 10: for a Flexible symbol (or Flexible slot) for SBFD transmission, if the subband frequency domain resource includes the uplink subband frequency domain resource (the uplink subband frequency domain resource and the guard subband frequency domain resource) and the remaining frequency domain resource other than the uplink subband frequency domain resource in the Flexible symbol is an unknown subband frequency domain resource (for example, it is not clearly indicated that whether the Flexible symbol is used for DL or UL, such that the remaining frequency domain resource is an unknown subband frequency domain resource, namely, it is not clearly determined that whether the remaining frequency domain resource in the Flexible symbol is a downlink subband frequency domain resource or an uplink subband frequency domain resource), the available frequency domain resource is determined in the following manner:
If there is an overlapping frequency domain resource between the BWP frequency domain resource of the uplink BWP and the uplink subband frequency domain resource, the overlapping frequency domain resource is determined as the available frequency domain resource. The UE sends uplink data on the available frequency domain resource and the base station device receives uplink data on the available frequency domain resource. If there is no overlapping frequency domain resource between the BWP frequency domain resource of the uplink BWP and the uplink subband frequency domain resource, it is impossible to determine the available frequency domain resource, and thus the UE does not send uplink data on the available frequency domain resource and the base station device does not receive uplink data on the available frequency domain resource.
If there is an overlapping frequency domain resource between the BWP frequency domain resource of the downlink BWP and the unknown subband frequency domain resource, the overlapping frequency domain resource is determined as the available frequency domain resource. The UE receives downlink data on the available frequency domain resource and the base station device sends downlink data on the available frequency domain resource. Alternatively, if there is an overlapping frequency domain resource between the BWP frequency domain resource of the downlink BWP and the unknown subband frequency domain resource, it is impossible to determine the available frequency domain resource, and thus, the UE does not receive downlink data on the available frequency domain resource and the base station device does not send downlink data on the available frequency domain resource.

In an example, for the cases 1 to 10, dynamically-scheduled downlink data may be transmitted on the available frequency domain resource, and semi-statically-scheduled downlink data may also be transmitted on the available frequency domain resource, for example, the downlink data such as PDSCH, PDCCH, CSI-RS and DL PRS. Dynamically-scheduled uplink data may be transmitted on the available frequency domain resource, for example, the uplink data such as PUCCH, PUSCH, PRACH and SRS.

In an example, during an access process of the UE, the UE may perform data transmission based on the available frequency domain resource; or, during an access process of the UE, the UE may perform data transmission based on the target BWP frequency domain resource rather than based on the available frequency domain resource. After a successful access of the UE, data transmission may be performed based on the available frequency domain resource.

For example, the base station device may broadcast the SBFD frequency domain resource configuration information (e.g. subband frequency domain resources such as DL subband/UL subband/Guard band and the like), and then, the UE accesses at an initial BWP. If there is an overlapping frequency domain resource between the initial BWP and the subband frequency domain resource, the UE may access and transceive data on the DL subband or UL subband overlapped with the initial BWP.

After a successful access, the UE may be configured with multiple BWP configuration pairs, and the UE may switch to an active BWP configuration pair (i.e. the target BWP identifier configuration pair) indicated by the base station device. The UE checks the relationship between the active BWP and the subband frequency domain resource. If there is an overlapping frequency domain resource between the active BWP and the subband frequency domain resource, the UE may work (perform data sending and reception) based on the SBFD-indicated frequency domain resource, where the indicated frequency domain resource may be a frequency domain resource corresponding to the active BWP or a subband frequency domain resource overlapped with the active BWP, for example, a DL subband or a UL subband.

For another example, after the UE accesses on the initial BWP, the base station device may configure multiple BWP configuration pairs and the SBFD frequency domain resource configuration information (e.g. the subband frequency domain resource such as DL subband/UL subband/Guard subband) through a dedicated signaling (e.g. an RRC message). The base station device assigns a new BWP configuration pair through a dedicated signaling and hence the UE may switch to the active BWP configuration pair (i.e. the target BWP identifier configuration pair) indicated by the base station device. The UE checks the relationship between the active BWP and the subband frequency domain resource. If there is an overlapping frequency domain resource between the active BWP and the subband frequency domain resource, the UE works (i.e. performs data sending and reception) based on the SBFD-indicated frequency domain resource, where the indicated frequency domain resource may be a frequency domain resource corresponding to the active BWP or a subband frequency domain resource overlapped with the active BWP, for example, DL subband or UL subband.

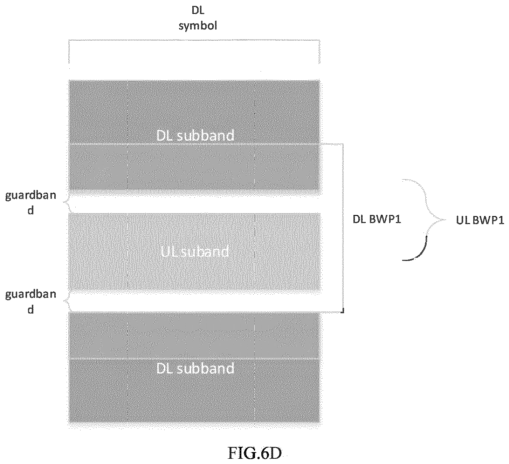

In an example, as shown in FIG. 6D, it is a schematic diagram illustrating a matching relationship between the BWP frequency domain resource and the subband frequency domain resource. The base station device configures a subband frequency domain resource (for example, DL subband/UL subband/Guard band and the like) to the UE1 and configures DL BWP1 and UL BWP1 as an active BWP pair for the UE1. The UE checks the relationship between DL BWP1/UL BWP1 and the subband frequency domain resource. If there is an overlapping frequency domain resource between DL BWP1/UL BWP1 and the subband frequency domain resource, the UE works based on SBFD time frequency domain indication.

For example, the total frequency domain resource is 100 PRBs, where the frequency domain resource occupied by the DL subband is (the 1st to 30th PRB, the 71st to 100th PRB, total 60 PRBs), the frequency domain resource occupied by the UL subband is (the 41st to 60th PRB, total 20 PRBs), the frequency domain resource occupied by the guard subband is (the 31st to 40th PRB, the 61st to 70th PRB, total 20 PRBs), the frequency domain resource of the DLBWP1 is (the 21st to 60th PRB, total 40 PRBs), the frequency domain resource of the ULBWP1 is (the 31st to the 50th PRB, total 20 PRBs). The DLBWP1 and the UL BWP1 have a same central frequency point, the overlapped part of UP BWP1 and UL subband is (the 41st to 50th PRB, total 10 PRBs), the overlapped part of the UL BWP1 and the UL subband is (the 21st to 30th PRB, total 10 PRBs). Therefore, the UE may receive uplink data based on the SBFD time domain indication and the overlapped part of the UL BWP1 and ULsubband (the 41st to 50th PRB, total 10 PRBs). Furthermore, the UE may send downlink data based on the SBFD time domain indication and the overlapped part of the DLBWP1 and DL subband (the 21st to 30th PRB, total 10 PRBs).

In the above process, the UE may be a UE enabling the SBFD function, and therefore can be referred to as SBFD UE.

It can be seen from the above technical solutions, that flexible Bandwidth Part (BWP) configuration may be used in single carriers, and flexible downlink frequency domain resources and uplink frequency domain resources are configured for the UE by using the BWPs to support the data transmission (data sending and reception) of the TDD system. In this way, the resource utilization rate, the network coverage and the network capacity are increased; the uplink transmission resource and the cell coverage scope may be increased; the uplink transmission delay is reduced and the uplink transmission capacity is increased. The base station device semi-statically/dynamically configures one pair DL/UL BWP, where the identifiers of the DL/UL BWP may be same or different, and the central frequencies of the DL/UL BWP may be same or different. Continuous/discontinuous frequency domain resources may be configured for each DL BWP and continuous/discontinuous frequency domain resources may be configured for each UL BWP.

Based on the same invention idea, there is further provided a resource assignment apparatus corresponding to the above resource assignment method, and a base station and a User Equipment (UE). Since the principle of the base station device and the UE for solving the problems are similar to that of the resource assignment method, the implementation of the base station device and the UE may be referred to the implementation of the above resource assignment method and will not be repeated herein.

Based on the same application idea as the above method, an example of the present disclosure provides a resource assignment apparatus, which is applied to a base station device. The apparatus includes: a determining module, configured to determine Bandwidth Part (BWP) frequency domain resource configuration information; where the BWP frequency domain resource configuration information includes a mapping relationship between BWP identifier and BWP frequency domain resource; a sending module, configured to send the BWP frequency domain resource configuration information to a User Equipment (UE), and send a BWP activation configuration to the UE, such that the UE obtains a target BWP identifier configuration pair corresponding to target BWP indication information included in the BWP activation configuration from a BWP activation configuration table, determines a target BWP frequency domain resource associated with the target BWP identifier configuration pair based on the BWP frequency domain resource configuration information, and performs data transmission based on the target BWP frequency domain resource; where the BWP activation configuration table includes a mapping relationship between BWP indication information and BWP identifier configuration pair.

In an example, for each BWP identifier in the mapping relationship between BWP identifier and BWP frequency domain resource, the BWP identifier corresponds to K BWP frequency domain resources, where K is a positive integer; if K is greater than 1, the K BWP frequency domain resources are K discontinuous BWP frequency domain resources.

In an example, in the mapping relationship between BWP identifier and BWP frequency domain resource, if a downlink BWP and an uplink BWP correspond to a same BWP identifier, the BWP frequency domain resource of the downlink BWP corresponding to the BWP identifier is identical to or different from the BWP frequency domain resource of the uplink BWP corresponding to the BWP identifier.

In an example, if the downlink BWP and the uplink BWP correspond to a same BWP identifier and the BWP identifier corresponds to at least two BWP frequency domain resources of the downlink BWP, the at least two BWP frequency domain resources of the downlink BWP corresponding to the BWP identifier are discontinuous BWP frequency domain resources; and/or, if the downlink BWP and the uplink BWP correspond to a same BWP identifier and the BWP identifier corresponds to at least two BWP frequency domain resources of the uplink BWP, the at least two BWP frequency domain resources of the uplink BWP corresponding to the BWP identifier are discontinuous BWP frequency domain resources.

In an example, for a first BWP identifier and a second BWP identifier in the mapping relationship between BWP identifier and BWP frequency domain resource, a number of BWPs corresponding to the first BWP identifier is identical to or different from a number of BWPs corresponding to the second BWP identifier; where the first BWP identifier corresponds to at least one BWP frequency domain resource of the downlink BWP, or the first BWP identifier corresponds to at least one BWP frequency domain resource of the uplink BWP, or the first BWP identifier corresponds to at least one BWP frequency domain resource of the downlink BWP and at least one BWP frequency domain resource of the uplink BWP; the second BWP identifier corresponds to at least one BWP frequency domain resource of the downlink BWP and the second BWP identifier corresponds to at least one BWP frequency domain resource of the uplink BWP.

In an example, the first BWP identifier corresponds to one BWP frequency domain resource of the downlink BWP, or the first BWP identifier corresponds to one BWP frequency domain resource of the uplink BWP, or the first BWP identifier corresponds to one BWP frequency domain resource of the downlink BWP and one BWP frequency domain resource of the uplink BWP; the second BWP identifier corresponds to at least two BWP frequency domain resources of the downlink BWP and at least one BWP frequency domain resource of the uplink BWP, and the at least two BWP frequency domain resources of the downlink BWP are discontinuous BWP frequency domain resources; or, the second BWP identifier corresponds to at least one BWP frequency domain resource of the downlink BWP and at least two BWP frequency domain resources of the uplink BWP, and the at least two BWP frequency domain resources of the uplink BWP are discontinuous BWP frequency domain resources.

In an example, the sending module is further configured to, by a Radio Resource Control (RRC) message, send the BWP activation configuration table to the UE. In an example, for each BWP identifier configuration pair in the BWP activation configuration table, the BWP identifier configuration pair is used to indicate a BWP identifier of a downlink BWP and a BWP identifier of an uplink BWP; wherein if the target BWP identifier configuration pair is used to indicate the first BWP identifier of the downlink BWP and the second BWP identifier of the uplink BWP, and the first BWP identifier and the second BWP identifier are same or different, the target BWP frequency domain resource includes the BWP frequency domain resource of the downlink BWP corresponding to the first BWP identifier and the BWP frequency domain resource of the uplink BWP corresponding to the second BWP identifier.

In an example, for each BWP identifier configuration pair in the BWP activation configuration table, the BWP identifier configuration pair includes a first configuration pair and a second configuration pair; the first configuration pair is used to indicate the BWP identifier of the downlink BWP and the BWP identifier of the uplink BWP, and the downlink BWP and the uplink BWP are used for a downlink slot or symbol, an uplink slot or symbol, and a flexible slot or symbol; the second configuration pair is used to indicate the BWP identifier of the downlink BWP and the BWP identifier of the uplink BWP, and the downlink BWP and the uplink BWP are used for a subband full duplex (SBFD) slot or symbol; in the downlink slot or symbol, the uplink slot or symbol, and the flexible slot or symbol, if the first configuration pair in the target BWP identifier configuration pair is used to indicate the first BWP identifier of the downlink BWP and the second BWP identifier of the uplink BWP, the target BWP frequency domain resource includes the BWP frequency domain resource of the downlink BWP corresponding to the first BWP identifier and the BWP frequency domain resource of the uplink BWP corresponding to the second BWP identifier; in the SBFD slot or symbol, if the second configuration pair in the target BWP identifier configuration pair is used to indicate a third BWP identifier of the downlink BWP and a fourth BWP identifier of the uplink BWP, the target BWP frequency domain resource includes the BWP frequency domain resource of the downlink BWP corresponding to the third BWP identifier and the BWP frequency domain resource of the uplink BWP corresponding to the fourth BWP identifier.

In an example, when sending the BWP activation configuration to the UE, the sending module is specifically configured to: send the BWP activation configuration to the UE by a Downlink Control Information (DCI) message; or, send the BWP activation configuration to the UE by a Media Access Control-Control Element (MAC-CE) message; or, send the BWP activation configuration to the UE by an RRC message.

In an example, the BWP activation configuration includes a switching flag and target BWP indication information; if the switching flag is a first value, the UE is indicated to obtain the target BWP identifier configuration pair corresponding to the target BWP indication information from the BWP activation configuration table; if the switching flag is a second value, the UE is indicated not to obtain the target BWP identifier configuration pair corresponding to the target BWP indication information from the BWP activation configuration table.

In an example, the BWP activation configuration includes the target BWP indication information; wherein if the target BWP indication information is a target value, the UE is indicated not to obtain the target BWP identifier configuration pair corresponding to the target BWP indication information from the BWP activation configuration table; if the target BWP indication information is not the target value, the UE is indicated to obtain the target BWP identifier configuration pair corresponding to the target BWP indication information from the BWP activation configuration table.

In an example, the sending module is further configured to, within a BWP switching time, if the BWP frequency domain resource corresponding to the UE changes, send an updated BWP activation configuration to the UE, such that the UE obtains from the BWP activation configuration table the target BWP identifier configuration pair corresponding to updated target BWP indication information included in the updated BWP activation configuration, and based on the BWP frequency domain resource configuration information, determine the target BWP frequency domain resource associated with the target BWP identifier configuration pair.

In an example, the sending module is further configured to send SBFD frequency domain resource configuration information to the UE, where the SBFD frequency domain resource configuration information includes a subband frequency domain resource such that the UE determines an available frequency domain resource based on the target BWP frequency domain resource and the subband frequency domain resource, and performs data transmission based on the available frequency domain resource.

In an example, the determining module is further configured to, based on the target BWP frequency domain resource and the subband frequency domain resource corresponding to the UE, determine an available frequency domain resource corresponding to the UE, and based on the available frequency domain resource, perform data transmission with the UE.

In an example, the target BWP frequency domain resource includes the BWP frequency domain resource of the downlink BWP and/or the BWP frequency domain resource of the uplink BWP; the subband frequency domain resource includes at least one of a downlink subband frequency domain resource, an uplink subband frequency domain resource and a guard subband frequency domain resource; for a downlink symbol for SBFD transmission, the determining module, , when based on the target BWP frequency domain resource and the subband frequency domain resource corresponding to the UE, determining the available frequency domain resource corresponding to the UE, is configured to: if the subband frequency domain resource includes the uplink subband frequency domain resource, and the remaining frequency domain resource other than the uplink subband frequency domain resource in the downlink symbol is a downlink subband frequency domain resource, then: if there is an overlapping frequency domain resource between the BWP frequency domain resource of the downlink BWP and the downlink subband frequency domain resource, determine the overlapping frequency domain resource as the available frequency domain resource corresponding to the UE; if there is an overlapping frequency domain resource between the BWP frequency domain resource of the uplink BWP and the uplink subband frequency domain resource, determine the overlapping frequency domain resource as the available frequency domain resource corresponding to the UE; or, if the subband frequency domain resource includes the downlink subband frequency domain resource, and the remaining frequency domain resource other than the downlink subband frequency domain resource in the downlink symbol is a downlink subband frequency domain resource, determine the BWP frequency domain resource of the downlink BWP and/or the downlink subband frequency domain resource as the available frequency domain resource corresponding to the UE.

In an example, if the subband frequency domain resource includes the uplink subband frequency domain resource, and the remaining frequency domain resource other than the uplink subband frequency domain resource in the downlink symbol is a downlink subband frequency domain resource, the determining nmodule is further configured to: if there is no overlapping frequency domain resource between the BWP frequency domain resource of the downlink BWP and the downlink subband frequency domain resource, prohibit determining the available frequency domain resource corresponding to the UE; if there is no overlapping frequency domain resource between the BWP frequency domain resource of the uplink BWP and the uplink subband frequency domain resource, prohibit determining the available frequency domain resource corresponding to the UE.

In an example, the target BWP frequency domain resource includes the BWP frequency domain resource of the downlink BWP and/or the BWP frequency domain resource of the uplink BWP, the subband frequency domain resource includes at least one of the downlink subband frequency domain resource, the uplink subband frequency domain resource and the guard subband frequency domain resource; for an uplink symbol for SBFD transmission, the determining module, when based on the target BWP frequency domain resource and the subband frequency domain resource corresponding to the UE, determining the available frequency domain resource corresponding to the UE, is configured to: if the subband frequency domain resource includes the downlink subband frequency domain resource, and the remaining frequency domain resource other than the downlink subband frequency domain resource in the uplink symbol is an uplink subband frequency domain resource, then: if there is an overlapping frequency domain resource between the BWP frequency domain resource of the downlink BWP and the downlink subband frequency domain resource, determine the overlapping frequency domain resource as the available frequency domain resource corresponding to the UE; if there is an overlapping frequency domain resource between the BWP frequency domain resource of the uplink BWP and the uplink subband frequency domain resource, determine the overlapping frequency domain resource as the available frequency domain resource corresponding to the UE; or, if the subband frequency domain resource includes the uplink subband frequency domain resource, and the remaining frequency domain resource other than the uplink subband frequency domain resource in the uplink symbol is an uplink subband frequency domain resource, determine the BWP frequency domain resource of the uplink BWP and/or the uplink subband frequency domain resource as the available frequency domain resource corresponding to the UE.

In an example, if the subband frequency domain resource includes the downlink subband frequency domain resource, and the remaining frequency domain resource other than the downlink subband frequency domain resource in the uplink symbol is an uplink subband frequency domain resource, the determining module is further configured to: if there is no overlapping frequency domain resource between the BWP frequency domain resource of the downlink BWP and the downlink subband frequency domain resource, prohibit determining the available frequency domain resource corresponding to the UE; if there is no overlapping frequency domain resource between the BWP frequency domain resource of the uplink BWP and the uplink subband frequency domain resource, prohibit determining the available frequency domain resource corresponding to the UE.

In an example, the target BWP frequency domain resource includes the BWP frequency domain resource of the downlink BWP and/or the BWP frequency domain resource of the uplink BWP, and the subband frequency domain resource includes at least one of the downlink subband frequency domain resource, the uplink subband frequency domain resource and the guard subband frequency domain resource; for a Flexible symbol for SBFD transmission, the determining module, when based on the target BWP frequency domain resource and the subband frequency domain resource corresponding to the UE, determining the available frequency domain resource corresponding to the UE, is configured to: if the subband frequency domain resource includes the downlink subband frequency domain resource and the remaining frequency domain resource other than the downlink subband frequency domain resource in the Flexible symbol is an uplink subband frequency domain resource, then: if there is an overlapping frequency domain resource between the BWP frequency domain resource of the downlink BWP and the downlink subband frequency domain resource, determine the overlapping frequency domain resource as the available frequency domain resource corresponding to the UE; if there is an overlapping frequency domain resource between the BWP frequency domain resource of the uplink BWP and the uplink subband frequency domain resource, determine the overlapping frequency domain resource as the available frequency domain resource corresponding to the UE; if the subband frequency domain resource includes the downlink subband frequency domain resource and the remaining frequency domain resource other than the downlink subband frequency domain resource in the Flexible symbol is a downlink subband frequency domain resource, determine the BWP frequency domain resource of the downlink BWP and/or the downlink subband frequency domain resource as the available frequency domain resource corresponding to the UE; if the subband frequency domain resource includes the uplink subband frequency domain resource and the remaining frequency domain resource other than the uplink subband frequency domain resource in the Flexible symbol is a downlink subband frequency domain resource, then: if there is an overlapping frequency domain resource between the BWP frequency domain resource of the downlink BWP and the downlink subband frequency domain resource, determine the overlapping frequency domain resource as the available frequency domain resource corresponding to the UE; if there is an overlapping frequency domain resource between the BWP frequency domain resource of the uplink BWP and the uplink subband frequency domain resource, determine the overlapping frequency domain resource as the available frequency domain resource corresponding to the UE; if the subband frequency domain resource includes the uplink subband frequency domain resource and the remaining frequency domain resource other than the uplink subband frequency domain resource in the Flexible symbol is an uplink subband frequency domain resource, determine the BWP frequency domain resource of the uplink BWP and/or the uplink subband frequency domain resource as the available frequency domain resource corresponding to the UE.

In an example, the determining module is further configured to: if the subband frequency domain resource includes the downlink subband frequency domain resource and the remaining frequency domain resource other than the downlink subband frequency domain resource in the Flexible symbol is an uplink subband frequency domain resource, or, if the subband frequency domain resource includes the uplink subband frequency domain resource and the remaining frequency domain resource other than the uplink subband frequency domain resource in the Flexible symbol is a downlink subband frequency domain resource: if there is no overlapping frequency domain resource between the BWP frequency domain resource of the downlink BWP and the downlink subband frequency domain resource, prohibit determining the available frequency domain resource corresponding to the UE; if there is no overlapping frequency domain resource between the BWP frequency domain resource of the uplink BWP and the uplink subband frequency domain resource, prohibit determining the available frequency domain resource corresponding to the UE.

In an example, the target BWP frequency domain resource includes the BWP frequency domain resource of the downlink BWP and/or the BWP frequency domain resource of the uplink BWP, and the subband frequency domain resource includes at least one of the downlink subband frequency domain resource, the uplink subband frequency domain resource and the guard subband frequency domain resource; for a Flexible symbol for SBFD transmission, the determining module, when based on the target BWP frequency domain resource and the subband frequency domain resource corresponding to the UE, determining the available frequency domain resource corresponding to the UE, is configured to: if the subband frequency domain resource includes the downlink subband frequency domain resource and the remaining frequency domain resource other than the downlink subband frequency domain resource in the Flexible symbol is an unknown subband frequency domain resource: if there is an overlapping frequency domain resource between the BWP frequency domain resource of the downlink BWP and the downlink subband frequency domain resource, determine the overlapping frequency domain resource as the available frequency domain resource corresponding to the UE; if there is an overlapping frequency domain resource between the BWP frequency domain resource of the uplink BWP and the unknown subband frequency domain resource, determine the overlapping frequency domain resource as the available frequency domain resource corresponding to the UE; if the subband frequency domain resource includes the uplink subband frequency domain resource and the remaining frequency domain resource other than the uplink subband frequency domain resource in the Flexible symbol is an unknown subband frequency domain resource: if there is an overlapping frequency domain resource between the BWP frequency domain resource of the downlink BWP and the unknown subband frequency domain resource, determine the overlapping frequency domain resource as the available frequency domain resource corresponding to the UE; if there is an overlapping frequency domain resource between the BWP frequency domain resource of the uplink BWP and the uplink subband frequency domain resource, determine the overlapping frequency domain resource as the available frequency domain resource corresponding to the UE.

In an example, the determining module is further configured to: if the subband frequency domain resource includes the downlink subband frequency domain resource and the remaining frequency domain resource other than the downlink subband frequency domain resource in the Flexible symbol is an unknown subband frequency domain resource: if there is an overlapping frequency domain resource between the BWP frequency domain resource of the uplink BWP and the unknown subband frequency domain resource, prohibit determining the available frequency domain resource corresponding to the UE; if the subband frequency domain resource includes the uplink subband frequency domain resource and the remaining frequency domain resource other than the uplink subband frequency domain resource in the Flexible symbol is an unknown subband frequency domain resource: if there is an overlapping frequency domain resource between the BWP frequency domain resource of the downlink BWP and the unknown subband frequency domain resource, prohibit determining the available frequency domain resource corresponding to the UE.

In an example, when sending the SBFD frequency domain resource configuration information to the UE, the sending module is specifically configured to: send the SBFD frequency domain resource configuration information to the UE by a broadcast message; or, send the SBFD frequency domain resource configuration information to the UE by an RRC message; or, send the SBFD frequency domain resource configuration information to the UE by an MAC-CE message; or, send the SBFD frequency domain resource configuration information to the UE by a DCI message.

In an example, the subband frequency domain resource includes at least one of the downlink subband frequency domain resource, the uplink subband frequency domain resource and the guard subband frequency domain resource; if the subband frequency domain resource includes the downlink subband frequency domain resource, the SBFD frequency domain resource configuration information includes location information corresponding to the downlink subband frequency domain resource; or, if the subband frequency domain resource includes the uplink subband frequency domain resource, the SBFD frequency domain resource configuration information includes location information corresponding to the uplink subband frequency domain resource; or, if the subband frequency domain resource includes the downlink subband frequency domain resource and the uplink subband frequency domain resource, the SBFD frequency domain resource configuration information includes the location information corresponding to the downlink subband frequency domain resource and the UE derives the location information corresponding to the uplink subband frequency domain resource based on the location information corresponding to the downlink subband frequency domain resource and a frequency domain resource number; or, the SBFD frequency domain resource configuration information includes the location information corresponding to the uplink subband frequency domain resource and the UE derives the location information corresponding to the downlink subband frequency domain resource based on the location information corresponding to the uplink subband frequency domain resource and the frequency domain resource number; or, the SBFD frequency domain resource configuration information includes the location information corresponding to the uplink subband frequency domain resource and the location information corresponding to the downlink subband frequency domain resource; or if the subband frequency domain resource includes the downlink subband frequency domain resource, the uplink subband frequency domain resource and the guard subband frequency domain resource, the SBFD frequency domain resource configuration information includes the location information corresponding to the downlink subband frequency domain resource and the location information corresponding to the guard subband frequency domain resource, and the UE, based on the location information corresponding to the downlink subband frequency domain resource, the location information corresponding to the guard subband frequency domain resource and the frequency domain resource number, derives the location information corresponding to the uplink subband frequency domain resource; or, the SBFD frequency domain resource configuration information includes the location information corresponding to the uplink subband frequency domain resource and the location information corresponding to the guard subband frequency domain resource, and the UE, based on the location information corresponding to the uplink subband frequency domain resource, the location information corresponding to the guard subband frequency domain resource and the frequency domain resource number, derives the location information corresponding to the downlink subband frequency domain resource; or, the SBFD frequency domain resource configuration information includes the location information corresponding to the uplink subband frequency domain resource, the location information corresponding to the guard subband frequency domain resource and the location information corresponding to the downlink subband frequency domain resource; or, the SBFD frequency domain resource configuration information includes the location information corresponding to the uplink subband frequency domain resource and the location information corresponding to the downlink subband frequency domain resource, and the UE, based on the location information corresponding to the uplink subband frequency domain resource, the location information corresponding to the downlink subband frequency domain resource and the frequency domain resource number, derives the location information corresponding to the guard subband frequency domain resource.

In an example, the location information corresponding to the downlink subband frequency domain resource includes a start location of the downlink subband frequency domain resource and a number of PRBs occupied by the downlink subband frequency domain resource, or includes the start location of the downlink subband frequency domain resource and an end location of the downlink subband frequency domain resource. The location information corresponding to the uplink subband frequency domain resource includes a start location of the uplink subband frequency domain resource and a number of PRBs occupied by the uplink subband frequency domain resource, or, includes the start location of the uplink subband frequency domain resource and an end location of the uplink subband frequency domain resource. The location information corresponding to the guard subband frequency domain resource includes a start location of the guard subband frequency domain resource and a number of PRBs occupied by the guard subband frequency domain resource, or includes the start location of the guard subband frequency domain resource and an end location of the guard subband frequency domain resource.

In an example, the sending module is further configured to: by a broadcast message or a RRC message, send to the UE SBFD enable information used to enable an SBFD function; wherein the broadcast message is a Master Information Block (MIB) message or a Secondary Information Block (SIB) message.

Based on the application idea as the above method, an example of the present disclosure provides a resource assignment apparatus, which is applied to a User Equipment (UE). The apparatus may include: a receiving module, configured to receive Bandwidth Part (BWP) frequency domain resource configuration information sent by a base station device, where the BWP frequency domain resource configuration information includes a mapping relationship between BWP identifier and BWP frequency domain resource; obtain a BWP activation configuration table; where the BWP activation configuration table includes a mapping relationship between BWP indication information and BWP identifier configuration pair; receive a BWP activation configuration sent by the base station device; an obtaining module, configured to obtain a target BWP identifier configuration pair corresponding to target BWP indication information included in the BWP activation configuration from the BWP activation configuration table, and based on the BWP frequency domain resource configuration information, determine a target BWP frequency domain resource associated with the target BWP identifier configuration pair; a transmission module, configured to, based on the target BWP frequency domain resource, perform data transmission.

In an example, for each BWP identifier in the mapping relationship between BWP identifier and BWP frequency domain resource, the BWP identifier corresponds to K BWP frequency domain resources, wherein K is a positive integer; if K is greater than 1, the K BWP frequency domain resources are K discontinuous BWP frequency domain resources.

In an example, in the mapping relationship between BWP identifier and BWP frequency domain resource, if a downlink BWP and an uplink BWP correspond to a same BWP identifier, the BWP frequency domain resource of the downlink BWP corresponding to the BWP identifier is identical to or different from the BWP frequency domain resource of the uplink BWP corresponding to the BWP identifier.

In an example, if the downlink BWP and the uplink BWP correspond to a same BWP identifier and the BWP identifier corresponds to at least two BWP frequency domain resources of the downlink BWP, the at least two BWP frequency domain resources of the downlink BWP corresponding to the BWP identifier are discontinuous BWP frequency domain resources; and/or, if the downlink BWP and the uplink BWP correspond to a same BWP identifier and the BWP identifier corresponds to at least two BWP frequency domain resources of the uplink BWP, the at least two BWP frequency domain resources of the uplink BWP corresponding to the BWP identifier are discontinuous BWP frequency domain resources.

In an example, for a first BWP identifier and a second BWP identifier in the mapping relationship between BWP identifier and BWP frequency domain resource, a number of BWPs corresponding to the first BWP identifier is identical to or different from a number of BWPs corresponding to the second BWP identifier; the first BWP identifier corresponds to at least one BWP frequency domain resource of the downlink BWP, or the first BWP identifier corresponds to at least one BWP frequency domain resource of the uplink BWP, or the first BWP identifier corresponds to at least one BWP frequency domain resource of the downlink BWP and at least one BWP frequency domain resource of the uplink BWP; the second BWP identifier corresponds to at least one BWP frequency domain resource of the downlink BWP and the second BWP identifier corresponds to at least one BWP frequency domain resource of the uplink BWP.

In an example, the first BWP identifier corresponds to one BWP frequency domain resource of the downlink BWP, or the first BWP identifier corresponds to one BWP frequency domain resource of the uplink BWP, or the first BWP identifier corresponds to one BWP frequency domain resource of the downlink BWP and one BWP frequency domain resource of the uplink BWP; the second BWP identifier corresponds to at least two BWP frequency domain resources of the downlink BWP and at least one BWP frequency domain resource of the uplink BWP, and the at least two BWP frequency domain resources of the downlink BWP are discontinuous BWP frequency domain resources; or, the second BWP identifier corresponds to at least one BWP frequency domain resource of the downlink BWP and at least two BWP frequency domain resources of the uplink BWP, and the at least two BWP frequency domain resources of the uplink BWP are discontinuous BWP frequency domain resources.

When obtaining the BWP activation configuration table, the receiving module is specifically configured to: obtain an already-configured BWP activation configuration table; or, by a Radio Resource Control (RRC) message, receive a BWP activation configuration table sent by the base station device.

In an example, for each BWP identifier configuration pair in the BWP activation configuration table, the BWP identifier configuration pair is used to indicate a BWP identifier of a downlink BWP and a BWP identifier of an uplink BWP; where if the target BWP identifier configuration pair is used to indicate the first BWP identifier of the downlink BWP and the second BWP identifier of the uplink BWP, and the first BWP identifier and the second BWP identifier are same or different, the target BWP frequency domain resource includes the BWP frequency domain resource of the downlink BWP corresponding to the first BWP identifier and the BWP frequency domain resource of the uplink BWP corresponding to the second BWP identifier.

In an example, for each BWP identifier configuration pair in the BWP activation configuration table, the BWP identifier configuration pair includes a first configuration pair and a second configuration pair; the first configuration pair is used to indicate the BWP identifier of the downlink BWP and the BWP identifier of the uplink BWP, and the downlink BWP and the uplink BWP are used for a downlink slot or symbol, an uplink slot or symbol, and a flexible slot or symbol; the second configuration pair is used to indicate the BWP identifier of the downlink BWP and the BWP identifier of the uplink BWP, and the downlink BWP and the uplink BWP are used for a subband full duplex (SBFD) slot or symbol; in the downlink slot or symbol, the uplink slot or symbol, and the flexible slot or symbol, if the first configuration pair in the target BWP identifier configuration pair is used to indicate the first BWP identifier of the downlink BWP and the second BWP identifier of the uplink BWP, the target BWP frequency domain resource includes the BWP frequency domain resource of the downlink BWP corresponding to the first BWP identifier and the BWP frequency domain resource of the uplink BWP corresponding to the second BWP identifier; in the SBFD slot or symbol, if the second configuration pair in the target BWP identifier configuration pair is used to indicate a third BWP identifier of the downlink BWP and a fourth BWP identifier of the uplink BWP, the target BWP frequency domain resource includes the BWP frequency domain resource of the downlink BWP corresponding to the third BWP identifier and the BWP frequency domain resource of the uplink BWP corresponding to the fourth BWP identifier.

In an example, when receiving the BWP activation configuration sent by the base station device, the receiving module is specifically configured to: by a Downlink Control Information (DCI) message, receive the BWP activation configuration sent by the base station device; or, by a Media Access Control - Control Element (MAC-CE) message, receive the BWP activation configuration sent by the base station device; or, by an RRC message, receive the BWP activation configuration sent by the base station device.

In an example, the BWP activation configuration includes a switching flag and target BWP indication information; the obtaining module, when obtaining the target BWP identifier configuration pair corresponding to the target BWP indication information from the BWP activation configuration table, is specifically configured to: if the switching flag is a first value, obtain the target BWP identifier configuration pair corresponding to the target BWP indication information from the BWP activation configuration table; the obtaining module is further configured to, if the switching flag is a second value, prohibit obtaining the target BWP identifier configuration pair corresponding to the target BWP indication information from the BWP activation configuration table.

In an example, the BWP activation configuration includes the target BWP indication information; the obtaining module, when obtaining the target BWP identifier configuration pair corresponding to the target BWP indication information from the BWP activation configuration table, is specifically configured to: if the target BWP indication information is not a target value, obtain the target BWP identifier configuration pair corresponding to the target BWP indication information from the BWP activation configuration table; the obtaining module is further configured to: if the target BWP indication information is the target value, prohibit obtaining the target BWP identifier configuration pair corresponding to the target BWP indication information from the BWP activation configuration table.

In an example, the receiving module is further configured to, within a BWP switching time, if the BWP frequency domain resource corresponding to the UE changes, receive an updated BWP activation configuration sent by the base station device, obtain from the BWP activation configuration table the target BWP identifier configuration pair corresponding to updated target BWP indication information included in the updated BWP activation configuration, and based on the BWP frequency domain resource configuration information, determine the target BWP frequency domain resource associated with the target BWP identifier configuration pair.

In an example, the receiving module is further configured to, receive SBFD frequency domain resource configuration information sent by the base station device, where the SBFD frequency domain resource configuration information includes a subband frequency domain resource; the transmission module, when performing data transmission based on the target BWP frequency domain resource, is configured to: based on the target BWP frequency domain resource and the subband frequency domain resource, determine an available frequency domain resource; and based on the available frequency domain resource, perform data transmission.

In an example, the transmission module, when based on the available frequency domain resource, performing data transmission, is specifically configured to: during an access process of the UE, perform data transmission based on the available frequency domain resource; or, during an access process of the UE, perform data transmission based on the target BWP frequency domain resource; after a successful access of the UE, perform data transmission based on the available frequency domain resource.

In an example, the target BWP frequency domain resource includes the BWP frequency domain resource of the downlink BWP and/or the BWP frequency domain resource of the uplink BWP; the subband frequency domain resource includes at least one of a downlink subband frequency domain resource, an uplink subband frequency domain resource and a guard subband frequency domain resource; for a downlink symbol for SBFD transmission, the transmission module, when based on the target BWP frequency domain resource and the subband frequency domain resource, determining the available frequency domain resource, is specifically configured to: if the subband frequency domain resource includes the uplink subband frequency domain resource, and the remaining frequency domain resource other than the uplink subband frequency domain resource in the downlink symbol is a downlink subband frequency domain resource, then: if there is an overlapping frequency domain resource between the BWP frequency domain resource of the downlink BWP and the downlink subband frequency domain resource, determine the overlapping frequency domain resource as the available frequency domain resource; if there is an overlapping frequency domain resource between the BWP frequency domain resource of the uplink BWP and the uplink subband frequency domain resource, determine the overlapping frequency domain resource as the available frequency domain resource; or, if the subband frequency domain resource includes the downlink subband frequency domain resource, and the remaining frequency domain resource other than the downlink subband frequency domain resource in the downlink symbol is a downlink subband frequency domain resource, determine the BWP frequency domain resource of the downlink BWP and/or the downlink subband frequency domain resource as the available frequency domain resource.

In an example, if the subband frequency domain resource includes the uplink subband frequency domain resource, and the remaining frequency domain resource other than the uplink subband frequency domain resource in the downlink symbol is a downlink subband frequency domain resource, the transmission module is further configured to: if there is no overlapping frequency domain resource between the BWP frequency domain resource of the downlink BWP and the downlink subband frequency domain resource, prohibit determining the available frequency domain resource; if there is no overlapping frequency domain resource between the BWP frequency domain resource of the uplink BWP and the uplink subband frequency domain resource, prohibit determining the available frequency domain resource.

In an example, the target BWP frequency domain resource includes the BWP frequency domain resource of the downlink BWP and/or the BWP frequency domain resource of the uplink BWP, and the subband frequency domain resource includes at least one of the downlink subband frequency domain resource, the uplink subband frequency domain resource and the guard subband frequency domain resource; for an uplink symbol for SBFD transmission, the transmission module, when based on the target BWP frequency domain resource and the subband frequency domain resource, determining the available frequency domain resource, is specifically configured to: if the subband frequency domain resource includes the downlink subband frequency domain resource, and the remaining frequency domain resource other than the downlink subband frequency domain resource in the uplink symbol is an uplink subband frequency domain resource, then: if there is an overlapping frequency domain resource between the BWP frequency domain resource of the downlink BWP and the downlink subband frequency domain resource, determine the overlapping frequency domain resource as the available frequency domain resource; if there is an overlapping frequency domain resource between the BWP frequency domain resource of the uplink BWP and the uplink subband frequency domain resource, determine the overlapping frequency domain resource as the available frequency domain resource; or, if the subband frequency domain resource includes the uplink subband frequency domain resource, and the remaining frequency domain resource other than the uplink subband frequency domain resource in the uplink symbol is an uplink subband frequency domain resource, determine the BWP frequency domain resource of the uplink BWP and/or the uplink subband frequency domain resource as the available frequency domain resource.

In an example, if the subband frequency domain resource includes the downlink subband frequency domain resource, and the remaining frequency domain resource other than the downlink subband frequency domain resource in the uplink symbol is an uplink subband frequency domain resource, the transmission module is further confiugured to: if there is no overlapping frequency domain resource between the BWP frequency domain resource of the downlink BWP and the downlink subband frequency domain resource, prohibit determining the available frequency domain resource; if there is no overlapping frequency domain resource between the BWP frequency domain resource of the uplink BWP and the uplink subband frequency domain resource, prohibit determining the available frequency domain resource.

In an example, the target BWP frequency domain resource includes the BWP frequency domain resource of the downlink BWP and/or the BWP frequency domain resource of the uplink BWP, and the subband frequency domain resource includes at least one of the downlink subband frequency domain resource, the uplink subband frequency domain resource and the guard subband frequency domain resource; for a Flexible symbol for SBFD transmission, the transmission module, when based on the target BWP frequency domain resource and the subband frequency domain resource, determining the available frequency domain resource, is specifically configured to: if the subband frequency domain resource includes the downlink subband frequency domain resource and the remaining frequency domain resource other than the downlink subband frequency domain resource in the Flexible symbol is an uplink subband frequency domain resource, then: if there is an overlapping frequency domain resource between the BWP frequency domain resource of the downlink BWP and the downlink subband frequency domain resource, determine the overlapping frequency domain resource as the available frequency domain resource; if there is an overlapping frequency domain resource between the BWP frequency domain resource of the uplink BWP and the uplink subband frequency domain resource, determine the overlapping frequency domain resource as the available frequency domain resource; if the subband frequency domain resource includes the downlink subband frequency domain resource and the remaining frequency domain resource other than the downlink subband frequency domain resource in the Flexible symbol is a downlink subband frequency domain resource, determine the BWP frequency domain resource of the downlink BWP and/or the downlink subband frequency domain resource as the available frequency domain resource; if the subband frequency domain resource includes the uplink subband frequency domain resource and the remaining frequency domain resource other than the uplink subband frequency domain resource in the Flexible symbol is a downlink subband frequency domain resource, then: if there is an overlapping frequency domain resource between the BWP frequency domain resource of the downlink BWP and the downlink subband frequency domain resource, determine the overlapping frequency domain resource as the available frequency domain resource; if there is an overlapping frequency domain resource between the BWP frequency domain resource of the uplink BWP and the uplink subband frequency domain resource, determine the overlapping frequency domain resource as the available frequency domain resource; if the subband frequency domain resource includes the uplink subband frequency domain resource and the remaining frequency domain resource other than the uplink subband frequency domain resource in the Flexible symbol is an uplink subband frequency domain resource, determine the BWP frequency domain resource of the uplink BWP and/or the uplink subband frequency domain resource as the available frequency domain resource.

In an example, the transmission module is further configured to: if the subband frequency domain resource includes the downlink subband frequency domain resource and the remaining frequency domain resource other than the downlink subband frequency domain resource in the Flexible symbol is an uplink subband frequency domain resource, or, if the subband frequency domain resource includes the uplink subband frequency domain resource and the remaining frequency domain resource other than the uplink subband frequency domain resource in the Flexible symbol is a downlink subband frequency domain resource, then: if there is no overlapping frequency domain resource between the BWP frequency domain resource of the downlink BWP and the downlink subband frequency domain resource, prohibit determining the available frequency domain resource; if there is no overlapping frequency domain resource between the BWP frequency domain resource of the uplink BWP and the uplink subband frequency domain resource, prohibit determining the available frequency domain resource.

In an example, the target BWP frequency domain resource includes the BWP frequency domain resource of the downlink BWP and/or the BWP frequency domain resource of the uplink BWP, and the subband frequency domain resource includes at least one of the downlink subband frequency domain resource, the uplink subband frequency domain resource and the guard subband frequency domain resource; for a Flexible symbol for SBFD transmission, the transmission module, when based on the target BWP frequency domain resource and the subband frequency domain resource, determining the available frequency domain resource, is specifically configured to: if the subband frequency domain resource includes the downlink subband frequency domain resource and the remaining frequency domain resource other than the downlink subband frequency domain resource in the Flexible symbol is an unknown subband frequency domain resource, then: if there is an overlapping frequency domain resource between the BWP frequency domain resource of the downlink BWP and the downlink subband frequency domain resource, determine the overlapping frequency domain resource as the available frequency domain resource; if there is an overlapping frequency domain resource between the BWP frequency domain resource of the uplink BWP and the unknown subband frequency domain resource, determine the overlapping frequency domain resource as the available frequency domain resource; if the subband frequency domain resource includes the uplink subband frequency domain resource and the remaining frequency domain resource other than the uplink subband frequency domain resource in the Flexible symbol is an unknown subband frequency domain resource, then: if there is an overlapping frequency domain resource between the BWP frequency domain resource of the downlink BWP and the unknown subband frequency domain resource, determine the overlapping frequency domain resource as the available frequency domain resource; if there is an overlapping frequency domain resource between the BWP frequency domain resource of the uplink BWP and the uplink subband frequency domain resource, determine the overlapping frequency domain resource as the available frequency domain resource.

In an example, the transmission module is further configured to: if the subband frequency domain resource includes the downlink subband frequency domain resource and the remaining frequency domain resource other than the downlink subband frequency domain resource in the Flexible symbol is an unknown subband frequency domain resource, then: if there is an overlapping frequency domain resource between the BWP frequency domain resource of the uplink BWP and the unknown subband frequency domain resource, prohibit determining the available frequency domain resource; if the subband frequency domain resource includes the uplink subband frequency domain resource and the remaining frequency domain resource other than the uplink subband frequency domain resource in the Flexible symbol is an unknown subband frequency domain resource, then: if there is an overlapping frequency domain resource between the BWP frequency domain resource of the downlink BWP and the unknown subband frequency domain resource, prohibit determining the available frequency domain resource.

In an example, when receiving the SBFD frequency domain resource configuration information sent by the base station device, the receiving module is specifically configured to: by a broadcast message, receive the SBFD frequency domain resource configuration information sent by the base station device; or, by an RRC message, receive the SBFD frequency domain resource configuration information sent by the base station device; or, by an MAC-CE message, receive the SBFD frequency domain resource configuration information sent by the base station device; or, by a DCI message, receive the SBFD frequency domain resource configuration information sent by the base station device.

In an example, the subband frequency domain resource includes at least one of the downlink subband frequency domain resource, the uplink subband frequency domain resource and the guard subband frequency domain resource; if the subband frequency domain resource includes the downlink subband frequency domain resource, the SBFD frequency domain resource configuration information includes location information corresponding to the downlink subband frequency domain resource; or, if the subband frequency domain resource includes the uplink subband frequency domain resource, the SBFD frequency domain resource configuration information includes location information corresponding to the uplink subband frequency domain resource; or, if the subband frequency domain resource includes the downlink subband frequency domain resource and the uplink subband frequency domain resource, the SBFD frequency domain resource configuration information includes the location information corresponding to the downlink subband frequency domain resource and the UE derives the location information corresponding to the uplink subband frequency domain resource based on the location information corresponding to the downlink subband frequency domain resource and a frequency domain resource number; or, the SBFD frequency domain resource configuration information includes the location information corresponding to the uplink subband frequency domain resource and the UE derives the location information corresponding to the downlink subband frequency domain resource based on the location information corresponding to the uplink subband frequency domain resource and the frequency domain resource number; or, the SBFD frequency domain resource configuration information includes the location information corresponding to the uplink subband frequency domain resource and the location information corresponding to the downlink subband frequency domain resource; or, if the subband frequency domain resource includes the downlink subband frequency domain resource, the uplink subband frequency domain resource and the guard subband frequency domain resource, the SBFD frequency domain resource configuration information includes the location information corresponding to the downlink subband frequency domain resource and the location information corresponding to the guard subband frequency domain resource, and the UE, based on the location information corresponding to the downlink subband frequency domain resource, the location information corresponding to the guard subband frequency domain resource and the frequency domain resource number, derives the location information corresponding to the uplink subband frequency domain resource; or, the SBFD frequency domain resource configuration information includes the location information corresponding to the uplink subband frequency domain resource and the location information corresponding to the guard subband frequency domain resource, and the UE, based on the location information corresponding to the uplink subband frequency domain resource, the location information corresponding to the guard subband frequency domain resource and the frequency domain resource number, derives the location information corresponding to the downlink subband frequency domain resource; or, the SBFD frequency domain resource configuration information includes the location information corresponding to the uplink subband frequency domain resource, the location information corresponding to the guard subband frequency domain resource and the location information corresponding to the downlink subband frequency domain resource; or, the SBFD frequency domain resource configuration information includes the location information corresponding to the uplink subband frequency domain resource and the location information corresponding to the downlink subband frequency domain resource, and the UE, based on the location information corresponding to the uplink subband frequency domain resource, the location information corresponding to the downlink subband frequency domain resource and the frequency domain resource number, derives the location information corresponding to the guard subband frequency domain resource.

In an example, the location information corresponding to the downlink subband frequency domain resource includes a start location of the downlink subband frequency domain resource and a number of PRBs occupied by the downlink subband frequency domain resource, or includes the start location of the downlink subband frequency domain resource and an end location of the downlink subband frequency domain resource; the location information corresponding to the uplink subband frequency domain resource includes a start location of the uplink subband frequency domain resource and a number of PRBs occupied by the uplink subband frequency domain resource, or, includes the start location of the uplink subband frequency domain resource and an end location of the uplink subband frequency domain resource; the location information corresponding to the guard subband frequency domain resource includes a start location of the guard subband frequency domain resource and a number of PRBs occupied by the guard subband frequency domain resource, or includes the start location of the guard subband frequency domain resource and an end location of the guard subband frequency domain resource.

In an example, the receiving module is further configured to: by a broadcast message or an RRC message, receive from the base station device SBFD enable information used to enable a SBFD function; where the broadcast message is a Master Information Block (MIB) message or a Secondary Information Block (SIB) message.

Based on the same application idea as the above method, an example of the present disclosure provides an electronic device (e.g. the base station device and the UE in the above examples). The electronic device includes a processor and a machine readable storage medium storing machine executable instructions executable by the processor, where the processor is configured to execute the machine executable instructions to implement the resource assignment methods as mentioned in the above examples of the present application. In an example, in a case where the electronic device is a base station device, the machine executable instructions are executed by the processor to perform the blocks of: sending Bandwidth Part (BWP) frequency domain resource configuration information to a User Equipment (UE), where the BWP frequency domain resource configuration information includes a mapping relationship between BWP identifier and BWP frequency domain resource; sending a BWP activation configuration to the UE such that the UE obtains a target BWP identifier configuration pair corresponding to target BWP indication information included in the BWP activation configuration from a BWP activation configuration table; determining a target BWP frequency domain resource associated with the target BWP identifier configuration pair based on the BWP frequency domain resource configuration information; and performing data transmission based on the target BWP frequency domain resource; where the BWP activation configuration table includes a mapping relationship between BWP indication information and BWP identifier configuration pair.

In one example, in a case where the electronic device is the UE, the machine executable instructions are executed by the processor to perform the blocks of: receiving Bandwidth Part (BWP) frequency domain resource configuration information sent by a base station device; where the BWP frequency domain resource configuration information includes a mapping relationship between BWP identifier and BWP frequency domain resource; obtaining a BWP activation configuration table, where the BWP activation configuration table includes a mapping relationship between BWP indication information and BWP identifier configuration pair; receiving a BWP activation configuration sent by the base station device and obtaining a target BWP identifier configuration pair corresponding to target BWP indication information included in the BWP activation configuration from the BWP activation configurfation table, and based on the BWP frequency domain resource configuration information, determining a target BWP frequency domain resource associated with the target BWP identifier configuration pair; based on the target BWP frequency domain resource, performing data transmission.

In an example, in the processor-executed processing, for each BWP identifier in the mapping relationship between BWP identifier and BWP frequency domain resource, the BWP identifier corresponds to K BWP frequency domain resources, wherein K is a positive integer; if K is greater than 1, the K BWP frequency domain resources are K discontinuous BWP frequency domain resources.

In an example, in the processor-executed processing, in the mapping relationship between BWP identifier and BWP frequency domain resource, if a downlink BWP and an uplink BWP correspond to a same BWP identifier, the BWP frequency domain resource of the downlink BWP corresponding to the BWP identifier is identical to or different from the BWP frequency domain resource of the uplink BWP corresponding to the BWP identifier.

In an example, in the processor-executed processing, if the downlink BWP and the uplink BWP correspond to a same BWP identifier and the BWP identifier corresponds to at least two BWP frequency domain resources of the downlink BWP, the at least two BWP frequency domain resources of the downlink BWP corresponding to the BWP identifier are discontinuous BWP frequency domain resources; and/or, if the downlink BWP and the uplink BWP correspond to a same BWP identifier and the BWP identifier corresponds to at least two BWP frequency domain resources of the uplink BWP, the at least two BWP frequency domain resources of the uplink BWP corresponding to the BWP identifier are discontinuous BWP frequency domain resources.

In an example, in the processor-executed processing, for a first BWP identifier and a second BWP identifier in the mapping relationship between BWP identifier and BWP frequency domain resource, a number of BWPs corresponding to the first BWP identifier is identical to or different from a number of BWPs corresponding to the second BWP identifier; where the first BWP identifier corresponds to at least one BWP frequency domain resource of the downlink BWP, or the first BWP identifier corresponds to at least one BWP frequency domain resource of the uplink BWP, or the first BWP identifier corresponds to at least one BWP frequency domain resource of the downlink BWP and at least one BWP frequency domain resource of the uplink BWP; the second BWP identifier corresponds to at least one BWP frequency domain resource of the downlink BWP and the second BWP identifier corresponds to at least one BWP frequency domain resource of the uplink BWP.

In an example, in the processor-executed processing, the first BWP identifier corresponds to one BWP frequency domain resource of the downlink BWP, or the first BWP identifier corresponds to one BWP frequency domain resource of the uplink BWP, or the first BWP identifier corresponds to one BWP frequency domain resource of the downlink BWP and one BWP frequency domain resource of the uplink BWP; the second BWP identifier corresponds to at least two BWP frequency domain resources of the downlink BWP and at least one BWP frequency domain resource of the uplink BWP, and the at least two BWP frequency domain resources of the downlink BWP are discontinuous BWP frequency domain resources; or, the second BWP identifier corresponds to at least one BWP frequency domain resource of the downlink BWP and at least two BWP frequency domain resources of the uplink BWP, and the at least two BWP frequency domain resources of the uplink BWP are discontinuous BWP frequency domain resources.

In an example, in a case where the electronic device is the base station device, the machine executable instructions are executed by the processor to perform the blocks of: sending the BWP activation configuration table to the UE by a Radio Resource Control (RRC) message, in a case where the electronic device is the UE, the machine executable instructions are executed by the processor to perform the blocks of: obtaining an already-configured BWP activation configuration table; or, by an RRC message, receiving a BWP activation configuration table sent by the base station device.

In an example, in the processor-executed processing, for each BWP identifier configuration pair in the BWP activation configuration table, the BWP identifier configuration pair is used to indicate a BWP identifier of a downlink BWP and a BWP identifier of an uplink BWP; where if the target BWP identifier configuration pair is used to indicate the first BWP identifier of the downlink BWP and the second BWP identifier of the uplink BWP, and the first BWP identifier and the second BWP identifier are same or different, the target BWP frequency domain resource includes the BWP frequency domain resource of the downlink BWP corresponding to the first BWP identifier and the BWP frequency domain resource of the uplink BWP corresponding to the second BWP identifier.

In an example, in the processor-executed processing, for each BWP identifier configuration pair in the BWP activation configuration table, the BWP identifier configuration pair includes a first configuration pair and a second configuration pair; the first configuration pair is used to indicate the BWP identifier of the downlink BWP and the BWP identifier of the uplink BWP, and the downlink BWP and the uplink BWP are used for a downlink slot or symbol, an uplink slot or symbol, and a flexible slot or symbol; the second configuration pair is used to indicate the BWP identifier of the downlink BWP and the BWP identifier of the uplink BWP, and the downlink BWP and the uplink BWP are used for a subband full duplex (SBFD) slot or symbol; in the downlink slot or symbol, the uplink slot or symbol, and the flexible slot or symbol, if the first configuration pair in the target BWP identifier configuration pair is used to indicate the first BWP identifier of the downlink BWP and the second BWP identifier of the uplink BWP, the target BWP frequency domain resource includes the BWP frequency domain resource of the downlink BWP corresponding to the first BWP identifier and the BWP frequency domain resource of the uplink BWP corresponding to the second BWP identifier; in the SBFD slot or symbol, if the second configuration pair in the target BWP identifier configuration pair is used to indicate a third BWP identifier of the downlink BWP and a fourth BWP identifier of the uplink BWP, the target BWP frequency domain resource includes the BWP frequency domain resource of the downlink BWP corresponding to the third BWP identifier and the BWP frequency domain resource of the uplink BWP corresponding to the fourth BWP identifier.

In an example, in a case where the electronic device is the base station device, the machine executable instructions are executed by the processor to perform the blocks of: by a Downlink Control Information (DCI) message, sending the BWP activation configuration to the UE; or, by a Medium Access Control - Control Element (MAC-CE) message, sending the BWP activation configuration to the UE; or, by an RRC message, sending the BWP activation configuration to the UE. In a case where the electronic device is the UE, the machine executable instructions are executed by the processor to perform the blocks of: by a Downlink Control Information (DCI) message, receiving the BWP activation configuration sent by the base station device; or, by a Media Access Control - Control Element (MAC-CE) message, receiving the BWP activation configuration sent by the base station device; or, by an RRC message, receiving the BWP activation configuration sent by the base station device.

In an example, in the processor-executed processing, the BWP activation configuration includes a switching flag and target BWP indication information; if the switching flag is a first value, the UE is indicated to obtain the target BWP identifier configuration pair corresponding to the target BWP indication information from the BWP activation configuration table; if the switching flag is a second value, the UE is indicated not to obtain the target BWP identifier configuration pair corresponding to the target BWP indication information from the BWP activation configuration table.

In an example, in the processor-executed processing, the BWP activation configuration includes the target BWP indication information; if the target BWP indication information is a target value, the UE is indicated not to obtain the target BWP identifier configuration pair corresponding to the target BWP indication information from the BWP activation configuration table; if the target BWP indication information is not the target value, the UE is indicated to obtain the target BWP identifier configuration pair corresponding to the target BWP indication information from the BWP activation configuration table.

In an example, in a case where the electronic device is the base station device, the machine executable instructions are executed by the processor to perform the blocks of: within a BWP switching time, if the BWP frequency domain resource corresponding to the UE changes, sending an updated BWP activation configuration to the UE; in a case where the electronic device is the UE, the machine executable instructions are executed by the processor to perform the blocks of: within a BWP switching time, if the BWP frequency domain resource corresponding to the UE changes, receiving an updated BWP activation configuration from the base station device; where the UE obtains from the BWP activation configuration table the target BWP identifier configuration pair corresponding to the updated target BWP indication information included in the updated BWP activation configuration, and based on the BWP frequency domain resource configuration information, determines the target BWP frequency domain resource associated with the target BWP identifier configuration pair.

In an example, in a case where the electronic device is the base station device, the machine executable instructions are executed by the processor to further perform the blocks of: sending SBFD frequency domain resource configuration information to the UE, where the SBFD frequency domain resource configuration information includes a subband frequency domain resource such that the UE determines an available frequency domain resource based on the target BWP frequency domain resource and the subband frequency domain resource, and performs data transmission based on the available frequency domain resource.

In an example, in a case where the electronic device is the UE, the machine executable instructions are executed by the processor to further perform the blocks of: receiving SBFD frequency domain resource configuration information sent by the base station device, where the SBFD frequency domain resource configuration information includes a subband frequency domain resource; based on the target BWP frequency domain resource and the subband frequency domain resource, determining an available frequency domain resource; based on the available frequency domain resource, performing data transmission.

In an example, in a case where the electronic device is the UE, the machine executable instructions are executed by the processor to further perform the blocks of: during an access process of the UE, performing data transmission based on the available frequency domain resource; or, during an access process of the UE, performing data transmission based on the target BWP frequency domain resource; after a successful access of the UE, performing data transmission based on the available frequency domain resource.

In an example, in case where the electronic device is the base station device, the machine executable instructions are executed by the processor to further perform the blocks of: based on the target BWP frequency domain resource and the subband frequency domain resource corresponding to the UE, determining an available frequency domain resource corresponding to the UE, and based on the available frequency domain resource, performing data transmission with the UE.

In an example, in a case where the electronic device is the base station device or the UE, the machine executable instructions are executed by the processor to further perform the following blocks: the target BWP frequency domain resource includes the BWP frequency domain resource of the downlink BWP and/or the BWP frequency domain resource of the uplink BWP; the subband frequency domain resource includes at least one of a downlink subband frequency domain resource, an uplink subband frequency domain resource and a guard subband frequency domain resource; for a downlink symbol for SBFD transmission, if the subband frequency domain resource includes the uplink subband frequency domain resource, and the remaining frequency domain resource other than the uplink subband frequency domain resource in the downlink symbol is a downlink subband frequency domain resource, then: if there is an overlapping frequency domain resource between the BWP frequency domain resource of the downlink BWP and the downlink subband frequency domain resource, the overlapping frequency domain resource is determined as the available frequency domain resource; if there is an overlapping frequency domain resource between the BWP frequency domain resource of the uplink BWP and the uplink subband frequency domain resource, the overlapping frequency domain resource is determined as the available frequency domain resource; or, if the subband frequency domain resource includes the downlink subband frequency domain resource, and the remaining frequency domain resource other than the downlink subband frequency domain resource in the downlink symbol is a downlink subband frequency domain resource, the BWP frequency domain resource of the downlink BWP and/or the downlink subband frequency domain resource is determined as the available frequency domain resource.

In an example, in a case where the electronic device is the base station device or the UE, the machine executable instructions are executed by the processor to further perform the following blocks: if the subband frequency domain resource includes the uplink subband frequency domain resource, and the remaining frequency domain resource other than the uplink subband frequency domain resource in the downlink symbol is a downlink subband frequency domain resource, then: if there is no overlapping frequency domain resource between the BWP frequency domain resource of the downlink BWP and the downlink subband frequency domain resource, it is prohibited to determine the available frequency domain resource; if there is no overlapping frequency domain resource between the BWP frequency domain resource of the uplink BWP and the uplink subband frequency domain resource, it is prohibited to determine the available frequency domain resource.

In an example, in a case where the electronic device is the base station device or the UE, the machine executable instructions are executed by the processor to further perform the following blocks: the target BWP frequency domain resource includes the BWP frequency domain resource of the downlink BWP and/or the BWP frequency domain resource of the uplink BWP, and the subband frequency domain resource includes at least one of the downlink subband frequency domain resource, the uplink subband frequency domain resource and the guard subband frequency domain resource; for an uplink symbol for SBFD transmission, if the subband frequency domain resource includes the downlink subband frequency domain resource, and the remaining frequency domain resource other than the downlink subband frequency domain resource in the uplink symbol is an uplink subband frequency domain resource, then: if there is an overlapping frequency domain resource between the BWP frequency domain resource of the downlink BWP and the downlink subband frequency domain resource, the overlapping frequency domain resource is determined as the available frequency domain resource; if there is an overlapping frequency domain resource between the BWP frequency domain resource of the uplink BWP and the uplink subband frequency domain resource, the overlapping frequency domain resource is determined as the available frequency domain resource; or, if the subband frequency domain resource includes the uplink subband frequency domain resource, and the remaining frequency domain resource other than the uplink subband frequency domain resource in the uplink symbol is an uplink subband frequency domain resource, the BWP frequency domain resource of the uplink BWP and/or the uplink subband frequency domain resource is determined as the available frequency domain resource.

In an example, in a case where the electronic device is the base station device or the UE, the machine executable instructions are executed by the processor to further perform the following blocks: if the subband frequency domain resource includes the downlink subband frequency domain resource, and the remaining frequency domain resource other than the downlink subband frequency domain resource in the uplink symbol is an uplink subband frequency domain resource, if there is no overlapping frequency domain resource between the BWP frequency domain resource of the downlink BWP and the downlink subband frequency domain resource, it is prohibited to determine the available frequency domain resource; if there is no overlapping frequency domain resource between the BWP frequency domain resource of the uplink BWP and the uplink subband frequency domain resource, it is prohibited to determine the available frequency domain resource.

In an example, in a case where the electronic device is the base station device or the UE, the machine executable instructions are executed by the processor to further perform the following blocks: the target BWP frequency domain resource includes the BWP frequency domain resource of the downlink BWP and/or the BWP frequency domain resource of the uplink BWP, and the subband frequency domain resource includes at least one of the downlink subband frequency domain resource, the uplink subband frequency domain resource and the guard subband frequency domain resource; for a Flexible symbol for SBFD transmission, if the subband frequency domain resource includes the downlink subband frequency domain resource and the remaining frequency domain resource other than the downlink subband frequency domain resource in the Flexible symbol is an uplink subband frequency domain resource, then: if there is an overlapping frequency domain resource between the BWP frequency domain resource of the downlink BWP and the downlink subband frequency domain resource, the overlapping frequency domain resource is determined as the available frequency domain resource; if there is an overlapping frequency domain resource between the BWP frequency domain resource of the uplink BWP and the uplink subband frequency domain resource, the overlapping frequency domain resource is determined as the available frequency domain resource; if the subband frequency domain resource includes the downlink subband frequency domain resource and the remaining frequency domain resource other than the downlink subband frequency domain resource in the Flexible symbol is a downlink subband frequency domain resource, then: the BWP frequency domain resource of the downlink BWP and/or the downlink subband frequency domain resource is determined as the available frequency domain resource; if the subband frequency domain resource includes the uplink subband frequency domain resource and the remaining frequency domain resource other than the uplink subband frequency domain resource in the Flexible symbol is a downlink subband frequency domain resource, then: if there is an overlapping frequency domain resource between the BWP frequency domain resource of the downlink BWP and the downlink subband frequency domain resource, the overlapping frequency domain resource is determined as the available frequency domain resource; if there is an overlapping frequency domain resource between the BWP frequency domain resource of the uplink BWP and the uplink subband frequency domain resource, the overlapping frequency domain resource is determined as the available frequency domain resource; if the subband frequency domain resource includes the uplink subband frequency domain resource and the remaining frequency domain resource other than the uplink subband frequency domain resource in the Flexible symbol is an uplink subband frequency domain resource, then the BWP frequency domain resource of the uplink BWP and/or the uplink subband frequency domain resource is determined as the available frequency domain resource.

In an example, in a case where the electronic device is the base station device or the UE, the machine executable instructions are executed by the processor to further perform the following blocks: if the subband frequency domain resource includes the downlink subband frequency domain resource and the remaining frequency domain resource other than the downlink subband frequency domain resource in the Flexible symbol is an uplink subband frequency domain resource, or, if the subband frequency domain resource includes the uplink subband frequency domain resource and the remaining frequency domain resource other than the uplink subband frequency domain resource in the Flexible symbol is a downlink subband frequency domain resource, then: if there is no overlapping frequency domain resource between the BWP frequency domain resource of the downlink BWP and the downlink subband frequency domain resource, it is prohibited to determine the available frequency domain resource; if there is no overlapping frequency domain resource between the BWP frequency domain resource of the uplink BWP and the uplink subband frequency domain resource, it is prohibited to determine the available frequency domain resource.

In an example, in a case where the electronic device is the base station device or the UE, the machine executable instructions are executed by the processor to further perform the following blocks: the target BWP frequency domain resource includes the BWP frequency domain resource of the downlink BWP and/or the BWP frequency domain resource of the uplink BWP, and the subband frequency domain resource includes at least one of the downlink subband frequency domain resource, the uplink subband frequency domain resource and the guard subband frequency domain resource; for a Flexible symbol for SBFD transmission, if the subband frequency domain resource includes the downlink subband frequency domain resource and the remaining frequency domain resource other than the downlink subband frequency domain resource in the Flexible symbol is an unknown subband frequency domain resource, then: if there is an overlapping frequency domain resource between the BWP frequency domain resource of the downlink BWP and the downlink subband frequency domain resource, the overlapping frequency domain resource is determined as the available frequency domain resource; if there is an overlapping frequency domain resource between the BWP frequency domain resource of the uplink BWP and the unknown subband frequency domain resource, the overlapping frequency domain resource is determined as the available frequency domain resource; if the subband frequency domain resource includes the uplink subband frequency domain resource and the remaining frequency domain resource other than the uplink subband frequency domain resource in the Flexible symbol is an unknown subband frequency domain resource, then: if there is an overlapping frequency domain resource between the BWP frequency domain resource of the downlink BWP and the unknown subband frequency domain resource, the overlapping frequency domain resource is determined as the available frequency domain resource; if there is an overlapping frequency domain resource between the BWP frequency domain resource of the uplink BWP and the uplink subband frequency domain resource, the overlapping frequency domain resource is determined as the available frequency domain resource.

In an example, in a case where the electronic device is the base station device or the UE, the machine executable instructions are executed by the processor to further perform the following blocks: if the subband frequency domain resource includes the downlink subband frequency domain resource and the remaining frequency domain resource other than the downlink subband frequency domain resource in the Flexible symbol is an unknown subband frequency domain resource, then: if there is an overlapping frequency domain resource between the BWP frequency domain resource of the uplink BWP and the unknown subband frequency domain resource, it is prohibited to determine the available frequency domain resource; if the subband frequency domain resource includes the uplink subband frequency domain resource and the remaining frequency domain resource other than the uplink subband frequency domain resource in the Flexible symbol is an unknown subband frequency domain resource, then: if there is an overlapping frequency domain resource between the BWP frequency domain resource of the downlink BWP and the unknown subband frequency domain resource, it is prohibited to determine the available frequency domain resource.

In an example, in a case where the electronic device is the base station device, the machine executable instructions are executed by the processor to further perform the blocks of: sending the SBFD frequency domain resource configuration information to the UE by a broadcast message; or, sending the SBFD frequency domain resource configuration information to the UE by an RRC message; or, sending the SBFD frequency domain resource configuration information to the UE by an MAC-CE message; or, sending the SBFD frequency domain resource configuration information to the UE by a DCI message. In a case where the electronic device is the UE, the machine executable instructions are executed by the processor to further perform the blocks of: by a broadcast message, receiving the SBFD frequency domain resource configuration information sent by the base station device; or, by an RRC message, receiving the SBFD frequency domain resource configuration information sent by the base station device; or, by an MAC-CE message, receiving the SBFD frequency domain resource configuration information sent by the base station device; or, by a DCI message, receiving the SBFD frequency domain resource configuration information sent by the base station device.

In an example, in the processor-executed processing, the subband frequency domain resource includes at least one of the downlink subband frequency domain resource, the uplink subband frequency domain resource and the guard subband frequency domain resource; if the subband frequency domain resource includes the downlink subband frequency domain resource, the SBFD frequency domain resource configuration information includes location information corresponding to the downlink subband frequency domain resource; or, if the subband frequency domain resource includes the uplink subband frequency domain resource, the SBFD frequency domain resource configuration information includes location information corresponding to the uplink subband frequency domain resource; or, if the subband frequency domain resource includes the downlink subband frequency domain resource and the uplink subband frequency domain resource, the SBFD frequency domain resource configuration information includes the location information corresponding to the downlink subband frequency domain resource and the UE derives the location information corresponding to the uplink subband frequency domain resource based on the location information corresponding to the downlink subband frequency domain resource and a frequency domain resource number; or, the SBFD frequency domain resource configuration information includes the location information corresponding to the uplink subband frequency domain resource and the UE derives the location information corresponding to the downlink subband frequency domain resource based on the location information corresponding to the uplink subband frequency domain resource and the frequency domain resource number; or, the SBFD frequency domain resource configuration information includes the location information corresponding to the uplink subband frequency domain resource and the location information corresponding to the downlink subband frequency domain resource; or, if the subband frequency domain resource includes the downlink subband frequency domain resource, the uplink subband frequency domain resource and the guard subband frequency domain resource, the SBFD frequency domain resource configuration information includes the location information corresponding to the downlink subband frequency domain resource and the location information corresponding to the guard subband frequency domain resource, and the UE, based on the location information corresponding to the downlink subband frequency domain resource, the location information corresponding to the guard subband frequency domain resource and the frequency domain resource number, derives the location information corresponding to the uplink subband frequency domain resource; or, the SBFD frequency domain resource configuration information includes the location information corresponding to the uplink subband frequency domain resource and the location information corresponding to the guard subband frequency domain resource, and the UE, based on the location information corresponding to the uplink subband frequency domain resource, the location information corresponding to the guard subband frequency domain resource and the frequency domain resource number, derives the location information corresponding to the downlink subband frequency domain resource; or, the SBFD frequency domain resource configuration information includes the location information corresponding to the uplink subband frequency domain resource, the location information corresponding to the guard subband frequency domain resource and the location information corresponding to the downlink subband frequency domain resource; or, the SBFD frequency domain resource configuration information includes the location information corresponding to the uplink subband frequency domain resource and the location information corresponding to the downlink subband frequency domain resource, and the UE, based on the location information corresponding to the uplink subband frequency domain resource, the location information corresponding to the downlink subband frequency domain resource and the frequency domain resource number, derives the location information corresponding to the guard subband frequency domain resource.

In an example, in the processor-executed processing, the location information corresponding to the downlink subband frequency domain resource includes a start location of the downlink subband frequency domain resource and a number of PRBs occupied by the downlink subband frequency domain resource, or includes the start location of the downlink subband frequency domain resource and an end location of the downlink subband frequency domain resource; the location information corresponding to the uplink subband frequency domain resource includes a start location of the uplink subband frequency domain resource and a number of PRBs occupied by the uplink subband frequency domain resource, or, includes the start location of the uplink subband frequency domain resource and an end location of the uplink subband frequency domain resource; the location information corresponding to the guard subband frequency domain resource includes a start location of the guard subband frequency domain resource and a number of PRBs occupied by the guard subband frequency domain resource or includes the start location of the guard subband frequency domain resource and an end location of the guard subband frequency domain resource.

In an example, in a case where the electronic device is the base station device, the machine executable instructions are executed by the processor to further perform the blocks of: by a broadcast message or a RRC message, sending SBFD enable information to the UE; in a case where the electronic device is the UE, the machine executable instructions are executed by the processor to further perform the blocks of: by a broadcast message or a RRC message, receiving from the base station device SBFD enable information used to enable a SBFD function; where the broadcast message is a Master Information Block (MIB) messge or Secondary Information Block (SIB) message.

Based on the same application idea as the above method, an example of the present disclosure further provides a machine readable storage medium, where the machine readable storage medium stores several computer instructions, which are executed by a processor to perform the resource assignment methods mentioned in the above examples.

The machine readable storage medium mentioned herein may be any of electronic, magnetic, optical or other physical storage devices and may contain or store information such as executable instructions, data and so on. For example, the machine readable storage medium may be a Random Access Memory, a volatile or non-volatile memory, a flash memory, a storage drive (e.g. hard disk drive), a solid state harddisk, any type of storage disk (e.g., compact disk, Digital Video Disk (DVD)), or a similar storage medium, or a combination thereof.

The systems, apparatuses, modules or units described in the above examples may be specifically implemented by a computer chip or an entity or may be implemented by a product with a particular function. A typical implementing device may be a computer and the computer may be specifically a personal computer, a laptop computer, a cellular phone, a camera phone, a smart phone, a personal digital assistant, a media player, a navigation device, an email transceiver, a game console, a tablet computer, a wearable device, or a combination of any several devices of the above devices.

For convenience of description, the above apparatus is divided into different units based on functionality for the purpose of descriptions. Of course, the functions of different units may be implemented in a same or a plurality of hardware and/or software when practicing the present disclosure.

The persons skilled in the art should understand that the examples of the present disclosure may be provided as a method, a system, or a computer program product. Thus, entire hardware examples, entire software examples or examples combining software and hardware may be adopted in the present disclosure. Further, the present disclosure may be implemented in the form of a computer program product that is operated on one or more computer available storage media (including but not limited to magnetic disk memory, CD-ROM, and optical memory and so on) including computer available program codes.

The present disclosure is described by referring to flowcharts and/or block diagrams of a method, a device (a system) and a computer program product in the examples of the present disclosure. It is understood that each flowchart and/or block in the flowcharts and/or the block diagrams or a combination of a flow chart and/or a block of the flowcharts and/or the block diagrams may be implemented by computer program instructions. These computer program instructions may be provided to a general-purpose computer, a dedicated computer, an embedded processor, or a processor of another programmable data processing device to generate a machine so that the instructions executable by a computer or a processor of another programmable data processing device generate an apparatus for implementing functions designated in one or more flows of the flowcharts and/or one or more blocks of the block diagrams. Further, these computer program instructions may also be stored in a computer readable memory that can direct a computer or another programmable data processing device to work in a particular manner so that the instructions stored in the computer readable memory generate a product including an instruction apparatus and the instruction apparatus can implement functions designated in one or more flows of the flowcharts and/or one or more blocks of the block diagrams. The computer program instructions may also be loaded on a computer or another programmable data processing device, so that a series of operation blocks can be executed on the computer or another programmable device to generate processing achieved by the computer, and thus instructions executable on the computer or another programmable device are provided for blocks for realizing functions designated in one or more flows of the flowcharts and/or one or more blocks of the block diagrams.

The above descriptions are only some examples of the present disclosure, and are not intended to limit the present disclosure. For those skilled in the art, the present disclosure may have various changes and modifications. Any modifications, equivalent replacements, improvements, etc. made within the spirit and principle of this present disclosure shall fall within the scope of claims of the present disclosure.

## Claims

1. A resource assignment method, applied to a base station device, and comprising:
sending Bandwidth part, BWP, frequency domain resource configuration information to a User Equipment, UE, wherein the BWP frequency domain resource configuration information comprises a mapping relationship between BWP identifier and BWP frequency domain resource;
sending a BWP activation configuration to the UE such that the UE obtains a target BWP identifier configuration pair corresponding to target BWP indication information comprised in the BWP activation configuration from a BWP activation configuration table, determines a target BWP frequency domain resource associated with the target BWP identifier configuration pair based on the BWP frequency domain resource configuration information, and performs data transmission based on the target BWP frequency domain resource; wherein the BWP activation configuration table comprises a mapping relationship between BWP indication information and BWP identifier configuration pair.

2. The method of claim 1, wherein for each BWP identifier in the mapping relationship between BWP identifier and BWP frequency domain resource, the BWP identifier corresponds to K BWP frequency domain resources, wherein K is a positive integer; if K is greater than 1, the K BWP frequency domain resources are K discontinuous BWP frequency domain resources.

3. The method of claim 1, wherein in the mapping relationship between BWP identifier and BWP frequency domain resource, if a downlink BWP and an uplink BWP correspond to a same BWP identifier, a BWP frequency domain resource of the downlink BWP corresponding to the BWP identifier is identical to or different from a BWP frequency domain resource of the uplink BWP corresponding to the BWP identifier.

4. The method of claim 3, wherein if the downlink BWP and the uplink BWP correspond to a same BWP identifier and the BWP identifier corresponds to at least two BWP frequency domain resources of the downlink BWP, the at least two BWP frequency domain resources of the downlink BWP corresponding to the BWP identifier are discontinuous BWP frequency domain resources; and/or, if the downlink BWP and the uplink BWP correspond to a same BWP identifier and the BWP identifier corresponds to at least two BWP frequency domain resources of the uplink BWP, the at least two BWP frequency domain resources of the uplink BWP corresponding to the BWP identifier are discontinuous BWP frequency domain resources.

5. The method of claim 1, wherein for a first BWP identifier and a second BWP identifier in the mapping relationship between BWP identifier and BWP frequency domain resource, a number of BWPs corresponding to the first BWP identifier is identical to or different from a number of BWPs corresponding to the second BWP identifier; wherein the first BWP identifier corresponds to at least one BWP frequency domain resource of a downlink BWP, or the first BWP identifier corresponds to at least one BWP frequency domain resource of an uplink BWP, or the first BWP identifier corresponds to at least one BWP frequency domain resource of the downlink BWP and at least one BWP frequency domain resource of the uplink BWP; the second BWP identifier corresponds to at least one BWP frequency domain resource of the downlink BWP and the second BWP identifier corresponds to at least one BWP frequency domain resource of the uplink BWP.

6. The method of claim 5, wherein the first BWP identifier corresponds to one BWP frequency domain resource of the downlink BWP, or the first BWP identifier corresponds to one BWP frequency domain resource of the uplink BWP, or the first BWP identifier corresponds to one BWP frequency domain resource of the downlink BWP and one BWP frequency domain resource of the uplink BWP;
the second BWP identifier corresponds to at least two BWP frequency domain resources of the downlink BWP and at least one BWP frequency domain resource of the uplink BWP, and the at least two BWP frequency domain resources of the downlink BWP are discontinuous BWP frequency domain resources; or, the second BWP identifier corresponds to at least one BWP frequency domain resource of the downlink BWP and at least two BWP frequency domain resources of the uplink BWP, and the at least two BWP frequency domain resources of the uplink BWP are discontinuous BWP frequency domain resources.

7. The method of any one of claims 1 to 6, wherein,
before sending the BWP activation configuration to the UE, the method further comprises:
by a Radio Resource Control, RRC, message, sending a BWP activation configuration table to the UE.

8. The method of claim 7, wherein for each BWP identifier configuration pair in the BWP activation configuration table, the BWP identifier configuration pair is used to indicate a BWP identifier of a downlink BWP and a BWP identifier of an uplink BWP;
wherein if the target BWP identifier configuration pair is used to indicate a first BWP identifier of the downlink BWP and a second BWP identifier of the uplink BWP, and the first BWP identifier and the second BWP identifier are identical or different, the target BWP frequency domain resource comprises the BWP frequency domain resource of the downlink BWP corresponding to the first BWP identifier and the BWP frequency domain resource of the uplink BWP corresponding to the second BWP identifier.

9. The method of claim 7, wherein for each BWP identifier configuration pair in the BWP activation configuration table, the BWP identifier configuration pair comprises a first configuration pair and a second configuration pair; the first configuration pair is used to indicate the BWP identifier of the downlink BWP and the BWP identifier of the uplink BWP, and the downlink BWP and the uplink BWP are used for a downlink slot or symbol, an uplink slot or symbol, and a flexible slot or symbol; the second configuration pair is used to indicate the BWP identifier of the downlink BWP and the BWP identifier of the uplink BWP, and the downlink BWP and the uplink BWP are used for a subband full duplex, SBFD, slot or symbol; in the downlink slot or symbol, the uplink slot or symbol and the flexible slot or symbol, if the first configuration pair in the target BWP identifier configuration pair is used to indicate a first BWP identifier of the downlink BWP and a second BWP identifier of the uplink BWP, the target BWP frequency domain resource comprises the BWP frequency domain resource of the downlink BWP corresponding to the first BWP identifier and the BWP frequency domain resource of the uplink BWP corresponding to the second BWP identifier; in the SBFD slot or symbol, if the second configuration pair in the target BWP identifier configuration pair is used to indicate a third BWP identifier of the downlink BWP and a fourth BWP identifier of the uplink BWP, the target BWP frequency domain resource comprises the BWP frequency domain resource of the downlink BWP corresponding to the third BWP identifier and the BWP frequency domain resource of the uplink BWP corresponding to the fourth BWP identifier.

10. The method of any one of claims 1 to 6, wherein,
sending the BWP activation configuration to the UE comprises: sending the BWP activation configuration to the UE by a Downlink Control Information, DCI, message; or, sending the BWP activation configuration to the UE by a Media Access Control-Control Element, MAC-CE, message; or, sending the BWP activation configuration to the UE by an RRC message.

11. The method of claim 10, wherein the BWP activation configuration comprises a switching flag and target BWP indication information; in a case where the switching flag is a first value, the UE is indicated to obtain the target BWP identifier configuration pair corresponding to the target BWP indication information from the BWP activation configuration table; in a case where the switching flag is a second value, the UE is indicated prohibited to obtain the target BWP identifier configuration pair corresponding to the target BWP indication information from the BWP activation configuration table.

12. The method of claim 10, wherein the BWP activation configuration comprises target BWP indication information; wherein in a case where the target BWP indication information is a target value, the UE is indicated prohibited to obtain the target BWP identifier configuration pair corresponding to the target BWP indication information from the BWP activation configuration table; in a case where the target BWP indication information is not the target value, the UE is indicated to obtain the target BWP identifier configuration pair corresponding to the target BWP indication information from the BWP activation configuration table.

13. The method of claim 10, wherein after sending the BWP activation configuration to the UE, the method further comprises: within a BWP switching time, if the BWP frequency domain resource corresponding to the UE changes, sending an updated BWP activation configuration to the UE, such that the UE obtains from the BWP activation configuration table the target BWP identifier configuration pair corresponding to updated target BWP indication information comprised in the updated BWP activation configuration, and based on the BWP frequency domain resource configuration information, determines the target BWP frequency domain resource associated with the target BWP identifier configuration pair.

14. The method of any one of claims 1 to 6, wherein the method further comprises: sending SBFD frequency domain resource configuration information to the UE, wherein the SBFD frequency domain resource configuration information comprises a subband frequency domain resource such that the UE determines an available frequency domain resource based on the target BWP frequency domain resource and the subband frequency domain resource, and performs data transmission based on the available frequency domain resource.

15. The method of claim 14, wherein,
after sending the SBFD frequency domain resource configuration information to the UE, the method further comprises:
based on the target BWP frequency domain resource and the subband frequency domain resource corresponding to the UE, determining an available frequency domain resource corresponding to the UE, and based on the available frequency domain resource, performing data transmission with the UE.

16. The method of claim 15, wherein the target BWP frequency domain resource comprises the BWP frequency domain resource of the downlink BWP and/or the BWP frequency domain resource of the uplink BWP; the subband frequency domain resource comprises at least one of a downlink subband frequency domain resource, an uplink subband frequency domain resource and a guard subband frequency domain resource; for a downlink symbol for SBFD transmission, based on the target BWP frequency domain resource and the subband frequency domain resource corresponding to the UE, determining the available frequency domain resource corresponding to the UE comprises:
if the subband frequency domain resource comprises an uplink subband frequency domain resource, and a remaining frequency domain resource other than the uplink subband frequency domain resource in the downlink symbol is a downlink subband frequency domain resource:
if there is an overlapping frequency domain resource between the BWP frequency domain resource of the downlink BWP and the downlink subband frequency domain resource, determining the overlapping frequency domain resource as the available frequency domain resource corresponding to the UE; if there is an overlapping frequency domain resource between the BWP frequency domain resource of the uplink BWP and the uplink subband frequency domain resource, determining the overlapping frequency domain resource as the available frequency domain resource corresponding to the UE; or,
if the subband frequency domain resource comprises a downlink subband frequency domain resource, and the remaining frequency domain resource other than the downlink subband frequency domain resource in the downlink symbol is a downlink subband frequency domain resource, determining the BWP frequency domain resource of the downlink BWP and/or the downlink subband frequency domain resource as the available frequency domain resource corresponding to the UE.

17. The method of claim 16, wherein if the subband frequency domain resource comprises an uplink subband frequency domain resource, and the remaining frequency domain resource other than the uplink subband frequency domain resource in the downlink symbol is a downlink subband frequency domain resource, the method further comprises: if there is no overlapping frequency domain resource between the BWP frequency domain resource of the downlink BWP and the downlink subband frequency domain resource, prohibiting determining the available frequency domain resource corresponding to the UE; if there is no overlapping frequency domain resource between the BWP frequency domain resource of the uplink BWP and the uplink subband frequency domain resource, prohibiting determining the available frequency domain resource corresponding to the UE.

18. The method of claim 15, wherein the target BWP frequency domain resource comprises a BWP frequency domain resource of the downlink BWP and/or a BWP frequency domain resource of the uplink BWP, and the subband frequency domain resource comprises at least one of a downlink subband frequency domain resource, an uplink subband frequency domain resource and a guard subband frequency domain resource; for an uplink symbol for SBFD transmission, based on the target BWP frequency domain resource and the subband frequency domain resource corresponding to the UE, determining the available frequency domain resource corresponding to the UE comprises:
if the subband frequency domain resource comprises a downlink subband frequency domain resource, and the remaining frequency domain resource other than the downlink subband frequency domain resource in the uplink symbol is an uplink subband frequency domain resource, if there is an overlapping frequency domain resource between the BWP frequency domain resource of the downlink BWP and the downlink subband frequency domain resource, determining the overlapping frequency domain resource as the available frequency domain resource corresponding to the UE; if there is an overlapping frequency domain resource between the BWP frequency domain resource of the uplink BWP and the uplink subband frequency domain resource, determining the overlapping frequency domain resource as the available frequency domain resource corresponding to the UE; or, if the subband frequency domain resource comprises an uplink subband frequency domain resource, and the remaining frequency domain resource other than the uplink subband frequency domain resource in the uplink symbol is an uplink subband frequency domain resource, determining the BWP frequency domain resource of the uplink BWP and/or the uplink subband frequency domain resource as the available frequency domain resource corresponding to the UE.

19. The method of claim 18, wherein if the subband frequency domain resource comprises a downlink subband frequency domain resource, and the remaining frequency domain resource other than the downlink subband frequency domain resource in the uplink symbol is an uplink subband frequency domain resource, the method further comprises: if there is no overlapping frequency domain resource between the BWP frequency domain resource of the downlink BWP and the downlink subband frequency domain resource, prohibiting determining the available frequency domain resource corresponding to the UE; if there is no overlapping frequency domain resource between the BWP frequency domain resource of the uplink BWP and the uplink subband frequency domain resource, prohibiting determining the available frequency domain resource corresponding to the UE.

20. The method of claim 15, wherein the target BWP frequency domain resource comprises a BWP frequency domain resource of the downlink BWP and/or a BWP frequency domain resource of the uplink BWP, and the subband frequency domain resource comprises at least one of a downlink subband frequency domain resource, an uplink subband frequency domain resource and a guard subband frequency domain resource; for a Flexible symbol for SBFD transmission, based on the target BWP frequency domain resource and the subband frequency domain resource corresponding to the UE, determining the available frequency domain resource corresponding to the UE comprises:
if the subband frequency domain resource comprises the downlink subband frequency domain resource and the remaining frequency domain resource other than the downlink subband frequency domain resource in the Flexible symbol is an uplink subband frequency domain resource, if there is an overlapping frequency domain resource between the BWP frequency domain resource of the downlink BWP and the downlink subband frequency domain resource, determining the overlapping frequency domain resource as the available frequency domain resource corresponding to the UE;
if there is an overlapping frequency domain resource between the BWP frequency domain resource of the uplink BWP and the uplink subband frequency domain resource, determining the overlapping frequency domain resource as the available frequency domain resource corresponding to the UE;
if the subband frequency domain resource comprises a downlink subband frequency domain resource and the remaining frequency domain resource other than the downlink subband frequency domain resource in the Flexible symbol is a downlink subband frequency domain resource, determining the BWP frequency domain resource of the downlink BWP and/or the downlink subband frequency domain resource as the available frequency domain resource corresponding to the UE;
if the subband frequency domain resource comprises an uplink subband frequency domain resource and the remaining frequency domain resource other than the uplink subband frequency domain resource in the Flexible symbol is a downlink subband frequency domain resource:
if there is an overlapping frequency domain resource between the BWP frequency domain resource of the downlink BWP and the downlink subband frequency domain resource, determining the overlapping frequency domain resource as the available frequency domain resource corresponding to the UE;
if there is an overlapping frequency domain resource between the BWP frequency domain resource of the uplink BWP and the uplink subband frequency domain resource, determining the overlapping frequency domain resource as the available frequency domain resource corresponding to the UE;
if the subband frequency domain resource comprises an uplink subband frequency domain resource and the remaining frequency domain resource other than the uplink subband frequency domain resource in the Flexible symbol is an uplink subband frequency domain resource, determining the BWP frequency domain resource of the uplink BWP and/or the uplink subband frequency domain resource as the available frequency domain resource corresponding to the UE.

21. The method of claim 20, wherein the method further comprises:
if the subband frequency domain resource comprises a downlink subband frequency domain resource and the remaining frequency domain resource other than the downlink subband frequency domain resource in the Flexible symbol is an uplink subband frequency domain resource, or, if the subband frequency domain resource comprises an uplink subband frequency domain resource and the remaining frequency domain resource other than the uplink subband frequency domain resource in the Flexible symbol is a downlink subband frequency domain resource:
if there is no overlapping frequency domain resource between the BWP frequency domain resource of the downlink BWP and the downlink subband frequency domain resource, prohibiting determining the available frequency domain resource corresponding to the UE; if there is no overlapping frequency domain resource between the BWP frequency domain resource of the uplink BWP and the uplink subband frequency domain resource, prohibiting determining the available frequency domain resource corresponding to the UE.

22. The method of claim 15, wherein the target BWP frequency domain resource comprises a BWP frequency domain resource of the downlink BWP and/or a BWP frequency domain resource of the uplink BWP, and the subband frequency domain resource comprises at least one of a downlink subband frequency domain resource, an uplink subband frequency domain resource, a guard subband frequency domain resource; for a Flexible symbol for SBFD transmission, based on the target BWP frequency domain resource and the subband frequency domain resource corresponding to the UE, determining the available frequency domain resource corresponding to the UE comprises:
if the subband frequency domain resource comprises a downlink subband frequency domain resource and the remaining frequency domain resource other than the downlink subband frequency domain resource in the Flexible symbol is an unknown subband frequency domain resource:
if there is an overlapping frequency domain resource between the BWP frequency domain resource of the downlink BWP and the downlink subband frequency domain resource, determining the overlapping frequency domain resource as the available frequency domain resource corresponding to the UE;
if there is an overlapping frequency domain resource between the BWP frequency domain resource of the uplink BWP and the unknown subband frequency domain resource, determining the overlapping frequency domain resource as the available frequency domain resource corresponding to the UE;
if the subband frequency domain resource comprises an uplink subband frequency domain resource and the remaining frequency domain resource other than the uplink subband frequency domain resource in the Flexible symbol is an unknown subband frequency domain resource:
if there is an overlapping frequency domain resource between the BWP frequency domain resource of the downlink BWP and the unknown subband frequency domain resource, determining the overlapping frequency domain resource as the available frequency domain resource corresponding to the UE;
if there is an overlapping frequency domain resource between the BWP frequency domain resource of the uplink BWP and the uplink subband frequency domain resource, determining the overlapping frequency domain resource as the available frequency domain resource corresponding to the UE.

23. The method of claim 22, wherein the method further comprises:
if the subband frequency domain resource comprises a downlink subband frequency domain resource and the remaining frequency domain resource other than the downlink subband frequency domain resource in the Flexible symbol is an unknown subband frequency domain resource: if there is an overlapping frequency domain resource between the BWP frequency domain resource of the uplink BWP and the unknown subband frequency domain resource, prohibiting determining the available frequency domain resource corresponding to the UE;
if the subband frequency domain resource comprises an uplink subband frequency domain resource and the remaining frequency domain resource other than the uplink subband frequency domain resource in the Flexible symbol is an unknown subband frequency domain resource: if there is an overlapping frequency domain resource between the BWP frequency domain resource of the downlink BWP and the unknown subband frequency domain resource, prohibiting determining the available frequency domain resource corresponding to the UE.

24. The method of claim 14, wherein sending the SBFD frequency domain resource configuration information to the UE comprises: sending the SBFD frequency domain resource configuration information to the UE by a broadcast message; or, sending the SBFD frequency domain resource configuration information to the UE by an RRC message; or, sending the SBFD frequency domain resource configuration information to the UE by an MAC-CE message; or,
sending the SBFD frequency domain resource configuration information to the UE by a DCI message.

25. The method of claim 24, wherein the subband frequency domain resource comprises at least one of a downlink subband frequency domain resource, an uplink subband frequency domain resource and a guard subband frequency domain resource; if the subband frequency domain resource comprises a downlink subband frequency domain resource, the SBFD frequency domain resource configuration information comprises location information corresponding to the downlink subband frequency domain resource; or, if the subband frequency domain resource comprises an uplink subband frequency domain resource, the SBFD frequency domain resource configuration information comprises location information corresponding to the uplink subband frequency domain resource; or, if the subband frequency domain resource comprises a downlink subband frequency domain resource and an uplink subband frequency domain resource, the SBFD frequency domain resource configuration information comprises the location information corresponding to the downlink subband frequency domain resource and the UE derives the location information corresponding to the uplink subband frequency domain resource based on the location information corresponding to the downlink subband frequency domain resource and a frequency domain resource number; or, the SBFD frequency domain resource configuration information comprises the location information corresponding to the uplink subband frequency domain resource and the UE derives the location information corresponding to the downlink subband frequency domain resource based on the location information corresponding to the uplink subband frequency domain resource and the frequency domain resource number; or, the SBFD frequency domain resource configuration information comprises the location information corresponding to the uplink subband frequency domain resource and the location information corresponding to the downlink subband frequency domain resource; or,
if the subband frequency domain resource comprises a downlink subband frequency domain resource, an uplink subband frequency domain resource and a guard subband frequency domain resource, the SBFD frequency domain resource configuration information comprises the location information corresponding to the downlink subband frequency domain resource and the location information corresponding to the guard subband frequency domain resource, and the UE, based on the location information corresponding to the downlink subband frequency domain resource, the location information corresponding to the guard subband frequency domain resource and the frequency domain resource number, derives the location information corresponding to the uplink subband frequency domain resource; or, the SBFD frequency domain resource configuration information comprises the location information corresponding to the uplink subband frequency domain resource and the location information corresponding to the guard subband frequency domain resource, and the UE, based on the location information corresponding to the uplink subband frequency domain resource, the location information corresponding to the guard subband frequency domain resource and the frequency domain resource number, derives the location information corresponding to the downlink subband frequency domain resource; or, the SBFD frequency domain resource configuration information comprises the location information corresponding to the uplink subband frequency domain resource, the location information corresponding to the guard subband frequency domain resource and the location information corresponding to the downlink subband frequency domain resource; or, the SBFD frequency domain resource configuration information comprises the location information corresponding to the uplink subband frequency domain resource and the location information corresponding to the downlink subband frequency domain resource, and the UE, based on the location information corresponding to the uplink subband frequency domain resource, the location information corresponding to the downlink subband frequency domain resource and the frequency domain resource number, derives the location information corresponding to the guard subband frequency domain resource.

26. The method of claim 25, wherein the location information corresponding to the downlink subband frequency domain resource comprises a start location of the downlink subband frequency domain resource and a number of PRBs occupied by the downlink subband frequency domain resource, or comprises the start location of the downlink subband frequency domain resource and an end location of the downlink subband frequency domain resource; the location information corresponding to the uplink subband frequency domain resource comprises a start location of the uplink subband frequency domain resource and a number of PRBs occupied by the uplink subband frequency domain resource, or, comprises the start location of the uplink subband frequency domain resource and an end location of the uplink subband frequency domain resource; the location information corresponding to the guard subband frequency domain resource comprises a start location of the guard subband frequency domain resource and a number of PRBs occupied by the guard subband frequency domain resource or comprises the start location of the guard subband frequency domain resource and an end location of the guard subband frequency domain resource.

27. The method of claim 14, further comprising:
by a broadcast message or an RRC message, sending to the UE SBFD enable information used to enable a SBFD function; wherein the broadcast message is a Master Information Block, MIB, messge or Secondary Information Block, SIB, message.

28. A resource assignment method, applied to a User Equipment, UE, and comprising:
receiving Bandwidth Part, BWP, frequency domain resource configuration information sent by a base station device; wherein the BWP frequency domain resource configuration information comprises a mapping relationship between BWP identifier and BWP frequency domain resource;
obtaining a BWP activation configuration table; wherein the BWP activation configuration table comprises a mapping relationship between BWP indication information and BWP identifier configuration pair;
receiving a BWP activation configuration from the base station device and obtaining a target BWP identifier configuration pair corresponding to target BWP indication information comprised in the BWP activation configuration from the BWP activation configuration table, and based on the BWP frequency domain resource configuration information, determining a target BWP frequency domain resource associated with the target BWP identifier configuration pair; based on the target BWP frequency domain resource, performing data transmission.

29. The method of claim 28, wherein for each BWP identifier in the mapping relationship between BWP identifier and BWP frequency domain resource, the BWP identifier corresponds to K BWP frequency domain resources, wherein K is a positive integer; if K is greater than 1, the K BWP frequency domain resources are K discontinuous BWP frequency domain resources.

30. The method of claim 28, wherein in the mapping relationship between BWP identifier and BWP frequency domain resource, if a downlink BWP and an uplink BWP correspond to a same BWP identifier, the BWP frequency domain resource of the downlink BWP corresponding to the BWP identifier is identical to or different from the BWP frequency domain resource of the uplink BWP corresponding to the BWP identifier.

31. The method of claim 30, wherein if the downlink BWP and the uplink BWP correspond to a same BWP identifier and the BWP identifier corresponds to at least two BWP frequency domain resources of the downlink BWP, the at least two BWP frequency domain resources of the downlink BWP corresponding to the BWP identifier are discontinuous BWP frequency domain resources; and/or, if the downlink BWP and the uplink BWP correspond to a same BWP identifier and the BWP identifier corresponds to at least two BWP frequency domain resources of the uplink BWP, the at least two BWP frequency domain resources of the uplink BWP corresponding to the BWP identifier are discontinuous BWP frequency domain resources.

32. The method of claim 28, wherein for a first BWP identifier and a second BWP identifier in the mapping relationship between BWP identifier and BWP frequency domain resource, a number of BWPs corresponding to the first BWP identifier is identical to or different from a number of BWPs corresponding to the second BWP identifier; wherein the first BWP identifier corresponds to at least one BWP frequency domain resource of a downlink BWP, or the first BWP identifier corresponds to at least one BWP frequency domain resource of an uplink BWP, or the first BWP identifier corresponds to at least one BWP frequency domain resource of the downlink BWP and at least one BWP frequency domain resource of the uplink BWP; the second BWP identifier corresponds to at least one BWP frequency domain resource of the downlink BWP and the second BWP identifier corresponds to at least one BWP frequency domain resource of the uplink BWP.

33. The method of claim 32, wherein the first BWP identifier corresponds to one BWP frequency domain resource of the downlink BWP, or the first BWP identifier corresponds to one BWP frequency domain resource of the uplink BWP, or the first BWP identifier corresponds to one BWP frequency domain resource of the downlink BWP and one BWP frequency domain resource of the uplink BWP;
the second BWP identifier corresponds to at least two BWP frequency domain resources of the downlink BWP and at least one BWP frequency domain resource of the uplink BWP, and the at least two BWP frequency domain resources of the downlink BWP are discontinuous BWP frequency domain resources; or, the second BWP identifier corresponds to at least one BWP frequency domain resource of the downlink BWP and at least two BWP frequency domain resources of the uplink BWP, and the at least two BWP frequency domain resources of the uplink BWP are discontinuous BWP frequency domain resources.

34. The method of any one of claims 28 to 33, wherein,
obtaining the BWP activation configuration table comprises: obtaining an already-configured BWP activation configuration table; or,
by a Radio Resource Control, RRC, message, receiving a BWP activation configuration table sent by the base station device.

35. The method of claim 34, wherein for each BWP identifier configuration pair in the BWP activation configuration table, the BWP identifier configuration pair is used to indicate a BWP identifier of a downlink BWP and a BWP identifier of an uplink BWP;
wherein if the target BWP identifier configuration pair is used to indicate the first BWP identifier of the downlink BWP and the second BWP identifier of the uplink BWP, and the first BWP identifier and the second BWP identifier are identical or different, the target BWP frequency domain resource comprises the BWP frequency domain resource of the downlink BWP corresponding to the first BWP identifier and the BWP frequency domain resource of the uplink BWP corresponding to the second BWP identifier.

36. The method of claim 34, wherein for each BWP identifier configuration pair in the BWP activation configuration table, the BWP identifier configuration pair comprises a first configuration pair and a second configuration pair; the first configuration pair is used to indicate the BWP identifier of the downlink BWP and the BWP identifier of the uplink BWP, and the downlink BWP and the uplink BWP are used for a downlink slot or symbol, an uplink slot or symbol and a flexible slot or symbol; the second configuration pair is used to indicate the BWP identifier of the downlink BWP and the BWP identifier of the uplink BWP, and the downlink BWP and the uplink BWP are used for a subband full duplex, SBFD, slot or symbol; in the downlink slot or symbol, the uplink slot or symbol and the flexible slot or symbol, if the first configuration pair in the target BWP identifier configuration pair is used to indicate the first BWP identifier of the downlink BWP and the second BWP identifier of the uplink BWP, the target BWP frequency domain resource comprises the BWP frequency domain resource of the downlink BWP corresponding to the first BWP identifier and the BWP frequency domain resource of the uplink BWP corresponding to the second BWP identifier; in the SBFD slot or symbol, if the second configuration pair in the target BWP identifier configuration pair is used to indicate a third BWP identifier of the downlink BWP and a fourth BWP identifier of the uplink BWP, the target BWP frequency domain resource comprises the BWP frequency domain resource of the downlink BWP corresponding to the third BWP identifier and the BWP frequency domain resource of the uplink BWP corresponding to the fourth BWP identifier.

37. The method of any one of claims 28 to 33, wherein,
receiving the BWP activation configuration sent by the base station device comprising:
by a Downlink Control Information, DCI, message, receiving the BWP activation configuration sent by the base station device; or,
by a Media Access Control - Control Element, MAC-CE, message, receiving the BWP activation configuration sent by the base station device; or,
by an RRC message, receiving the BWP activation configuration sent by the base station device.

38. The method of claim 37, wherein,
the BWP activation configuration comprises a switching flag and target BWP indication information;
obtaining the target BWP identifier configuration pair corresponding to the target BWP indication information from the BWP activation configuration table comprises: in a case where the switching flag is a first value, obtaining the target BWP identifier configuration pair corresponding to the target BWP indication information from the BWP activation configuration table; the method further comprises: in a case where the switching flag is a second value, prohibiting obtaining the target BWP identifier configuration pair corresponding to the target BWP indication information from the BWP activation configuration table.

39. The method of claim 37, wherein,
the BWP activation configuration comprises the target BWP indication information;
obtaining the target BWP identifier configuration pair corresponding to the target BWP indication information from the BWP activation configuration table comprises: if the target BWP indication information is not a target value, obtaining the target BWP identifier configuration pair corresponding to the target BWP indication information from the BWP activation configuration table; the method further comprises: if the target BWP indication information is the target value, prohibiting obtaining the target BWP identifier configuration pair corresponding to the target BWP indication information from the BWP activation configuration table.

40. The method of claim 37, wherein,
after receiving the BWP activation configuration sent by the base station device, the method further comprises:
within a BWP switching time, if the BWP frequency domain resource corresponding to the UE changes, receiving an updated BWP activation configuration sent by the base station device, obtaining from the BWP activation configuration table a target BWP identifier configuration pair corresponding to updated target BWP indication information comprised in the updated BWP activation configuration, and based on the BWP frequency domain resource configuration information, determining a target BWP frequency domain resource associated with the target BWP identifier configuration pair.

41. The method of any one of claims 28 to 33, wherein the method further comprises: receiving SBFD frequency domain resource configuration information sent by the base station device, where the SBFD frequency domain resource configuration information comprises a subband frequency domain resource;
performing data transmission based on the target BWP frequency domain resource comprises: based on the target BWP frequency domain resource and the subband frequency domain resource, determining an available frequency domain resource; and based on the available frequency domain resource, performing data transmission.

42. The method of claim 41, wherein,
based on the available frequency domain resource, performing data transmission comprises: during an access process of the UE, performing data transmission based on the available frequency domain resource; or, during an access process of the UE, performing data transmission based on the target BWP frequency domain resource;
after a successful access of the UE, performing data transmission based on the available frequency domain resource.

43. The method of claim 41, wherein the target BWP frequency domain resource comprises the BWP frequency domain resource of the downlink BWP and/or the BWP frequency domain resource of the uplink BWP; the subband frequency domain resource comprises at least one of a downlink subband frequency domain resource, an uplink subband frequency domain resource and a guard subband frequency domain resource; for a downlink symbol for SBFD transmission, based on the target BWP frequency domain resource and the subband frequency domain resource, determining the available frequency domain resource comprises: if the subband frequency domain resource comprises an uplink subband frequency domain resource, and the remaining frequency domain resource other than the uplink subband frequency domain resource in the downlink symbol is a downlink subband frequency domain resource:
if there is an overlapping frequency domain resource between the BWP frequency domain resource of the downlink BWP and the downlink subband frequency domain resource, determining the overlapping frequency domain resource as the available frequency domain resource; if there is an overlapping frequency domain resource between the BWP frequency domain resource of the uplink BWP and the uplink subband frequency domain resource, determining the overlapping frequency domain resource as the available frequency domain resource; or, if the subband frequency domain resource comprises the downlink subband frequency domain resource, and a remaining frequency domain resource other than the downlink subband frequency domain resource in the downlink symbol is a downlink subband frequency domain resource, determining the BWP frequency domain resource of the downlink BWP and/or the downlink subband frequency domain resource as the available frequency domain resource.

44. The method of claim 43, wherein,
if the subband frequency domain resource comprises an uplink subband frequency domain resource, and the remaining frequency domain resource other than the uplink subband frequency domain resource in the downlink symbol is a downlink subband frequency domain resource, the method further comprises:
if there is no overlapping frequency domain resource between the BWP frequency domain resource of the downlink BWP and the downlink subband frequency domain resource, prohibiting determining the available frequency domain resource; if there is no overlapping frequency domain resource between the BWP frequency domain resource of the uplink BWP and the uplink subband frequency domain resource, prohibiting determining the available frequency domain resource.

45. The method of claim 42, wherein the target BWP frequency domain resource comprises a BWP frequency domain resource of the downlink BWP and/or a BWP frequency domain resource of the uplink BWP, and the subband frequency domain resource comprises at least one of a downlink subband frequency domain resource, an uplink subband frequency domain resource and a guard subband frequency domain resource; for an uplink symbol for SBFD transmission, based on the target BWP frequency domain resource and the subband frequency domain resource, determining the available frequency domain resource comprises:
if the subband frequency domain resource comprises the downlink subband frequency domain resource, and the remaining frequency domain resource other than the downlink subband frequency domain resource in the uplink symbol is an uplink subband frequency domain resource, if there is an overlapping frequency domain resource between the BWP frequency domain resource of the downlink BWP and the downlink subband frequency domain resource, determining the overlapping frequency domain resource as the available frequency domain resource; if there is an overlapping frequency domain resource between the BWP frequency domain resource of the uplink BWP and the uplink subband frequency domain resource, determining the overlapping frequency domain resource as the available frequency domain resource; or, if the subband frequency domain resource comprises the uplink subband frequency domain resource, and the remaining frequency domain resource other than the uplink subband frequency domain resource in the uplink symbol is an uplink subband frequency domain resource, determining the BWP frequency domain resource of the uplink BWP and/or the uplink subband frequency domain resource as the available frequency domain resource.

46. The method of claim 45, wherein,
if the subband frequency domain resource comprises a downlink subband frequency domain resource, and the remaining frequency domain resource other than the downlink subband frequency domain resource in the uplink symbol is an uplink subband frequency domain resource, the method further comprises:
if there is no overlapping frequency domain resource between the BWP frequency domain resource of the downlink BWP and the downlink subband frequency domain resource, prohibiting determining the available frequency domain resource; if there is no overlapping frequency domain resource between the BWP frequency domain resource of the uplink BWP and the uplink subband frequency domain resource, prohibiting determining the available frequency domain resource.

47. The method of claim 42, wherein the target BWP frequency domain resource comprises a BWP frequency domain resource of the downlink BWP and/or a BWP frequency domain resource of the uplink BWP, and the subband frequency domain resource comprises at least one of a downlink subband frequency domain resource, an uplink subband frequency domain resource and a guard subband frequency domain resource; for a Flexible symbol for SBFD transmission, based on the target BWP frequency domain resource and the subband frequency domain resource, determining the available frequency domain resource comprises:
if the subband frequency domain resource comprises a downlink subband frequency domain resource and the remaining frequency domain resource other than the downlink subband frequency domain resource in the Flexible symbol is an uplink subband frequency domain resource:
if there is an overlapping frequency domain resource between the BWP frequency domain resource of the downlink BWP and the downlink subband frequency domain resource, determining the overlapping frequency domain resource as the available frequency domain resource; if there is an overlapping frequency domain resource between the BWP frequency domain resource of the uplink BWP and the uplink subband frequency domain resource, determining the overlapping frequency domain resource as the available frequency domain resource;
if the subband frequency domain resource comprises a downlink subband frequency domain resource and the remaining frequency domain resource other than the downlink subband frequency domain resource in the Flexible symbol is a downlink subband frequency domain resource, determining the BWP frequency domain resource of the downlink BWP and/or the downlink subband frequency domain resource as the available frequency domain resource;
if the subband frequency domain resource comprises an uplink subband frequency domain resource and the remaining frequency domain resource other than the uplink subband frequency domain resource in the Flexible symbol is a downlink subband frequency domain resource, if there is an overlapping frequency domain resource between the BWP frequency domain resource of the downlink BWP and the downlink subband frequency domain resource, determining the overlapping frequency domain resource as the available frequency domain resource;
if there is an overlapping frequency domain resource between the BWP frequency domain resource of the uplink BWP and the uplink subband frequency domain resource, determining the overlapping frequency domain resource as the available frequency domain resource;
if the subband frequency domain resource comprises an uplink subband frequency domain resource and the remaining frequency domain resource other than the uplink subband frequency domain resource in the Flexible symbol is an uplink subband frequency domain resource, determining the BWP frequency domain resource of the uplink BWP and/or the uplink subband frequency domain resource as the available frequency domain resource.

48. The method of claim 47, wherein the method further comprises:
if the subband frequency domain resource comprises a downlink subband frequency domain resource and the remaining frequency domain resource other than the downlink subband frequency domain resource in the Flexible symbol is an uplink subband frequency domain resource, or, if the subband frequency domain resource comprises an uplink subband frequency domain resource and the remaining frequency domain resource other than the uplink subband frequency domain resource in the Flexible symbol is a downlink subband frequency domain resource, then,
if there is no overlapping frequency domain resource between the BWP frequency domain resource of the downlink BWP and the downlink subband frequency domain resource, prohibiting determining the available frequency domain resource; if there is no overlapping frequency domain resource between the BWP frequency domain resource of the uplink BWP and the uplink subband frequency domain resource, prohibiting determining the available frequency domain resource.

49. The method of claim 42, wherein the target BWP frequency domain resource comprises a BWP frequency domain resource of the downlink BWP and/or a BWP frequency domain resource of the uplink BWP, and the subband frequency domain resource comprises at least one of a downlink subband frequency domain resource, an uplink subband frequency domain resource and a guard subband frequency domain resource; for a Flexible symbol for SBFD transmission, based on the target BWP frequency domain resource and the subband frequency domain resource, determining the available frequency domain resource comprises:
if the subband frequency domain resource comprises a downlink subband frequency domain resource and the remaining frequency domain resource other than the downlink subband frequency domain resource in the Flexible symbol is an unknown subband frequency domain resource, if there is an overlapping frequency domain resource between the BWP frequency domain resource of the downlink BWP and the downlink subband frequency domain resource, determining the overlapping frequency domain resource as the available frequency domain resource;
if there is an overlapping frequency domain resource between the BWP frequency domain resource of the uplink BWP and the unknown subband frequency domain resource, determining the overlapping frequency domain resource as the available frequency domain resource;
if the subband frequency domain resource comprises an uplink subband frequency domain resource and the remaining frequency domain resource other than the uplink subband frequency domain resource in the Flexible symbol is an unknown subband frequency domain resource, if there is an overlapping frequency domain resource between the BWP frequency domain resource of the downlink BWP and the unknown subband frequency domain resource, determining the overlapping frequency domain resource as the available frequency domain resource;
if there is an overlapping frequency domain resource between the BWP frequency domain resource of the uplink BWP and the uplink subband frequency domain resource, determining the overlapping frequency domain resource as the available frequency domain resource.

50. The method of claim 49, wherein the method comprises:
if the subband frequency domain resource comprises a downlink subband frequency domain resource and the remaining frequency domain resource other than the downlink subband frequency domain resource in the Flexible symbol is an unknown subband frequency domain resource, if there is an overlapping frequency domain resource between the BWP frequency domain resource of the uplink BWP and the unknown subband frequency domain resource, prohibiting determining the available frequency domain resource;
if the subband frequency domain resource comprises an uplink subband frequency domain resource and the remaining frequency domain resource other than the uplink subband frequency domain resource in the Flexible symbol is an unknown subband frequency domain resource, if there is an overlapping frequency domain resource between the BWP frequency domain resource of the downlink BWP and the unknown subband frequency domain resource, prohibiting determining the available frequency domain resource.

51. The method of claim 41, wherein,
receiving the SBFD frequency domain resource configuration information sent by the base station device comprises:
by a broadcast message, receiving the SBFD frequency domain resource configuration information sent by the base station device; or,
by an RRC message, receiving the SBFD frequency domain resource configuration information sent by the base station device; or,
by an MAC-CE message, receiving the SBFD frequency domain resource configuration information sent by the base station device; or,
by a DCI message, receiving the SBFD frequency domain resource configuration information sent by the base station device.

52. The method of claim 51, wherein the subband frequency domain resource comprises at least one of a downlink subband frequency domain resource, an uplink subband frequency domain resource and a guard subband frequency domain resource; if the subband frequency domain resource comprises a downlink subband frequency domain resource, the SBFD frequency domain resource configuration information comprises location information corresponding to the downlink subband frequency domain resource; or, if the subband frequency domain resource comprises an uplink subband frequency domain resource, the SBFD frequency domain resource configuration information comprises location information corresponding to the uplink subband frequency domain resource; or, if the subband frequency domain resource comprises a downlink subband frequency domain resource and an uplink subband frequency domain resource, the SBFD frequency domain resource configuration information comprises location information corresponding to the downlink subband frequency domain resource and the UE derives the location information corresponding to the uplink subband frequency domain resource based on the location information corresponding to the downlink subband frequency domain resource and a frequency domain resource number; or, the SBFD frequency domain resource configuration information comprises the location information corresponding to the uplink subband frequency domain resource and the UE derives the location information corresponding to the downlink subband frequency domain resource based on the location information corresponding to the uplink subband frequency domain resource and the frequency domain resource number; or, the SBFD frequency domain resource configuration information comprises the location information corresponding to the uplink subband frequency domain resource and the location information corresponding to the downlink subband frequency domain resource; or,
if the subband frequency domain resource comprises a downlink subband frequency domain resource, an uplink subband frequency domain resource and a guard subband frequency domain resource, the SBFD frequency domain resource configuration information comprises the location information corresponding to the downlink subband frequency domain resource and the location information corresponding to the guard subband frequency domain resource, and the UE, based on the location information corresponding to the downlink subband frequency domain resource, the location information corresponding to the guard subband frequency domain resource and the frequency domain resource number, derives the location information corresponding to the uplink subband frequency domain resource; or, the SBFD frequency domain resource configuration information comprises the location information corresponding to the uplink subband frequency domain resource and the location information corresponding to the guard subband frequency domain resource, and the UE, based on the location information corresponding to the uplink subband frequency domain resource, the location information corresponding to the guard subband frequency domain resource and the frequency domain resource number, derives the location information corresponding to the downlink subband frequency domain resource; or, the SBFD frequency domain resource configuration information comprises the location information corresponding to the uplink subband frequency domain resource, the location information corresponding to the guard subband frequency domain resource and the location information corresponding to the downlink subband frequency domain resource; or, the SBFD frequency domain resource configuration information comprises the location information corresponding to the uplink subband frequency domain resource and the location information corresponding to the downlink subband frequency domain resource, and the UE, based on the location information corresponding to the uplink subband frequency domain resource, the location information corresponding to the downlink subband frequency domain resource and the frequency domain resource number, derives the location information corresponding to the guard subband frequency domain resource.

53. The method of claim 52, wherein the location information corresponding to the downlink subband frequency domain resource comprises a start location of the downlink subband frequency domain resource and a number of PRBs occupied by the downlink subband frequency domain resource, or comprises the start location of the downlink subband frequency domain resource and an end location of the downlink subband frequency domain resource; the location information corresponding to the uplink subband frequency domain resource comprises a start location of the uplink subband frequency domain resource and a number of PRBs occupied by the uplink subband frequency domain resource, or, comprises the start location of the uplink subband frequency domain resource and an end location of the uplink subband frequency domain resource; the location information corresponding to the guard subband frequency domain resource comprises a start location of the guard subband frequency domain resource and a number of PRBs occupied by the guard subband frequency domain resource or comprises the start location of the guard subband frequency domain resource and an end location of the guard subband frequency domain resource.

54. The method of claim 41, wherein the method further comprises: by a broadcast message or an RRC message, receiving from the base station device SBFD enable information used to enable a SBFD function; wherein the broadcast message is a Master Information Block, MIB, messge or Secondary Information Block, SIB, message.

55. A resource assignment apparatus, applied to a base station device, and comprising:
a determining module, configured to determine Bandwidth Part, BWP, frequency domain resource configuration information; wherein the BWP frequency domain resource configuration information comprises a mapping relationship between BWP identifier and BWP frequency domain resource;
a sending module, configured to send the BWP frequency domain resource configuration information to a User Equipment, UE, and send a BWP activation configuration to the UE, such that the UE obtains a target BWP identifier configuration pair corresponding to target BWP indication information comprised in the BWP activation configuration from a BWP activation configuration table, determines a target BWP frequency domain resource associated with the target BWP identifier configuration pair based on the BWP frequency domain resource configuration information, and performs data transmission based on the target BWP frequency domain resource; wherein the BWP activation configuration table comprises a mapping relationship between BWP indication information and BWP identifier configuration pair.

56. The apparatus of claim 55, wherein for each BWP identifier in the mapping relationship between BWP identifier and BWP frequency domain resource, the BWP identifier corresponds to K BWP frequency domain resources, wherein K is a positive integer; if K is greater than 1, the K BWP frequency domain resources are K discontinuous BWP frequency domain resources.

57. The apparatus of claim 55, wherein in the mapping relationship between BWP identifier and BWP frequency domain resource, if a downlink BWP and an uplink BWP correspond to a same BWP identifier, a BWP frequency domain resource of the downlink BWP corresponding to the BWP identifier is identical to or different from a BWP frequency domain resource of the uplink BWP corresponding to the BWP identifier.

58. The apparatus of claim 57, wherein if the downlink BWP and the uplink BWP correspond to a same BWP identifier and the BWP identifier corresponds to at least two BWP frequency domain resources of the downlink BWP, the at least two BWP frequency domain resources of the downlink BWP corresponding to the BWP identifier are discontinuous BWP frequency domain resources; and/or, if the downlink BWP and the uplink BWP correspond to a same BWP identifier and the BWP identifier corresponds to at least two BWP frequency domain resources of the uplink BWP, the at least two BWP frequency domain resources of the uplink BWP corresponding to the BWP identifier are discontinuous BWP frequency domain resources.

59. The apparatus of claim 55, wherein for a first BWP identifier and a second BWP identifier in the mapping relationship between BWP identifier and BWP frequency domain resource, a number of BWPs corresponding to the first BWP identifier is identical to or different from a number of BWPs corresponding to the second BWP identifier; wherein the first BWP identifier corresponds to at least one BWP frequency domain resource of a downlink BWP, or the first BWP identifier corresponds to at least one BWP frequency domain resource of an uplink BWP, or the first BWP identifier corresponds to at least one BWP frequency domain resource of the downlink BWP and at least one BWP frequency domain resource of the uplink BWP; the second BWP identifier corresponds to at least one BWP frequency domain resource of the downlink BWP and the second BWP identifier corresponds to at least one BWP frequency domain resource of the uplink BWP.

60. The apparatus of claim 59, wherein,
the first BWP identifier corresponds to one BWP frequency domain resource of the downlink BWP, or the first BWP identifier corresponds to one BWP frequency domain resource of the uplink BWP, or the first BWP identifier corresponds to one BWP frequency domain resource of the downlink BWP and one BWP frequency domain resource of the uplink BWP; the second BWP identifier corresponds to at least two BWP frequency domain resources of the downlink BWP and at least one BWP frequency domain resource of the uplink BWP, and the at least two BWP frequency domain resources of the downlink BWP are discontinuous BWP frequency domain resources; or, the second BWP identifier corresponds to at least one BWP frequency domain resource of the downlink BWP and at least two BWP frequency domain resources of the uplink BWP, and the at least two BWP frequency domain resources of the uplink BWP are discontinuous BWP frequency domain resources.

61. The apparatus of any one of claims 55 to 60, wherein the sending module is further configured to, by a Radio Resource Control, RRC, message, send the BWP activation configuration table to the UE.

62. The apparatus of claim 61, wherein, for each BWP identifier configuration pair in the BWP activation configuration table, the BWP identifier configuration pair is used to indicate a BWP identifier of a downlink BWP and a BWP identifier of an uplink BWP; wherein if the target BWP identifier configuration pair is used to indicate a first BWP identifier of the downlink BWP and a second BWP identifier of the uplink BWP, and the first BWP identifier and the second BWP identifier are identical or different, the target BWP frequency domain resource comprises a BWP frequency domain resource of the downlink BWP corresponding to the first BWP identifier and a BWP frequency domain resource of the uplink BWP corresponding to the second BWP identifier.

63. The apparatus of claim 61, wherein, for each BWP identifier configuration pair in the BWP activation configuration table, the BWP identifier configuration pair comprises a first configuration pair and a second configuration pair; the first configuration pair is used to indicate the BWP identifier of the downlink BWP and the BWP identifier of the uplink BWP, and the downlink BWP and the uplink BWP are used for a downlink slot or symbol, an uplink slot or symbol, and a flexible slot or symbol; the second configuration pair is used to indicate the BWP identifier of the downlink BWP and the BWP identifier of the uplink BWP, and the downlink BWP and the uplink BWP are used for a subband full duplex, SBFD, slot or symbol; in the downlink slot or symbol, the uplink slot or symbol, and the flexible slot or symbol, if the first configuration pair in the target BWP identifier configuration pair is used to indicate the first BWP identifier of the downlink BWP and the second BWP identifier of the uplink BWP, the target BWP frequency domain resource comprises the BWP frequency domain resource of the downlink BWP corresponding to the first BWP identifier and the BWP frequency domain resource of the uplink BWP corresponding to the second BWP identifier; in the SBFD slot or symbol, if the second configuration pair in the target BWP identifier configuration pair is used to indicate a third BWP identifier of the downlink BWP and a fourth BWP identifier of the uplink BWP, the target BWP frequency domain resource comprises the BWP frequency domain resource of the downlink BWP corresponding to the third BWP identifier and the BWP frequency domain resource of the uplink BWP corresponding to the fourth BWP identifier.

64. The apparatus of any one of claims 55 to 60, wherein,
when sending the BWP activation configuration to the UE, the sending module is specifically configured to:
send the BWP activation configuration to the UE by a Downlink Control Information, DCI, message; or,
send the BWP activation configuration to the UE by a Media Access Control-Control Element, MAC-CE, message; or,
send the BWP activation configuration to the UE by an RRC message.

65. The apparatus of claim 64, wherein,
the BWP activation configuration comprises a switching flag and target BWP indication information;
in a case where the switching flag is a first value, the UE is indicated to obtain the target BWP identifier configuration pair corresponding to the target BWP indication information from the BWP activation configuration table; in a case where the switching flag is a second value, the UE is indicated prohibited to obtain the target BWP identifier configuration pair corresponding to the target BWP indication information from the BWP activation configuration table.

66. The apparatus of claim 64, wherein,
the BWP activation configuration comprises the target BWP indication information;
wherein in a case where the target BWP indication information is a target value, the UE is indicated prohibited to obtain the target BWP identifier configuration pair corresponding to the target BWP indication information from the BWP activation configuration table;
in a case where the target BWP indication information is not the target value, the UE is indicated to obtain the target BWP identifier configuration pair corresponding to the target BWP indication information from the BWP activation configuration table.

67. The apparatus of claim 64, wherein, the sending module is further configured to, within a BWP switching time, if the BWP frequency domain resource corresponding to the UE changes, send an updated BWP activation configuration to the UE, such that the UE obtains from the BWP activation configuration table the target BWP identifier configuration pair corresponding to updated target BWP indication information comprised in the updated BWP activation configuration, and based on the BWP frequency domain resource configuration information, determines the target BWP frequency domain resource associated with the target BWP identifier configuration pair.

68. The apparatus of any one of claims 55 to 60, wherein the sending module is further configured to send SBFD frequency domain resource configuration information to the UE, wherein the SBFD frequency domain resource configuration information comprises a subband frequency domain resource such that the UE determines an available frequency domain resource based on the target BWP frequency domain resource and the subband frequency domain resource, and performs data transmission based on the available frequency domain resource.

69. The apparatus of claim 68, wherein the determining module is further configured to, based on the target BWP frequency domain resource and the subband frequency domain resource corresponding to the UE, determine an available frequency domain resource corresponding to the UE, and based on the available frequency domain resource, perform data transmission with the UE.

70. The apparatus of claim 69, wherein the target BWP frequency domain resource comprises the BWP frequency domain resource of the downlink BWP and/or the BWP frequency domain resource of the uplink BWP; the subband frequency domain resource comprises at least one of a downlink subband frequency domain resource, an uplink subband frequency domain resource and a guard subband frequency domain resource; for a downlink symbol for SBFD transmission, the determining module is configured to, when based on the target BWP frequency domain resource and the subband frequency domain resource corresponding to the UE, determining the available frequency domain resource corresponding to the UE:
if the subband frequency domain resource comprises an uplink subband frequency domain resource, and a remaining frequency domain resource other than the uplink subband frequency domain resource in the downlink symbol is a downlink subband frequency domain resource, if there is an overlapping frequency domain resource between the BWP frequency domain resource of the downlink BWP and the downlink subband frequency domain resource, determine the overlapping frequency domain resource as the available frequency domain resource corresponding to the UE; if there is an overlapping frequency domain resource between the BWP frequency domain resource of the uplink BWP and the uplink subband frequency domain resource, determine the overlapping frequency domain resource as the available frequency domain resource corresponding to the UE; or, if the subband frequency domain resource comprises a downlink subband frequency domain resource, and the remaining frequency domain resource other than the downlink subband frequency domain resource in the downlink symbol is a downlink subband frequency domain resource, determine the BWP frequency domain resource of the downlink BWP and/or the downlink subband frequency domain resource as the available frequency domain resource corresponding to the UE.

71. The apparatus of claim 70, wherein if the subband frequency domain resource comprises an uplink subband frequency domain resource, and the remaining frequency domain resource other than the uplink subband frequency domain resource in the downlink symbol is a downlink subband frequency domain resource, the determining module is further configured to: if there is no overlapping frequency domain resource between the BWP frequency domain resource of the downlink BWP and the downlink subband frequency domain resource, prohibit determining the available frequency domain resource corresponding to the UE; if there is no overlapping frequency domain resource between the BWP frequency domain resource of the uplink BWP and the uplink subband frequency domain resource, prohibit determining the available frequency domain resource corresponding to the UE.

72. The apparatus of claim 69, wherein the target BWP frequency domain resource comprises a BWP frequency domain resource of the downlink BWP and/or a BWP frequency domain resource of the uplink BWP, and the subband frequency domain resource comprises at least one of a downlink subband frequency domain resource, an uplink subband frequency domain resource and a guard subband frequency domain resource; for an uplink symbol for SBFD transmission, the determining module is configured to, when based on the target BWP frequency domain resource and the subband frequency domain resource corresponding to the UE, determining the available frequency domain resource corresponding to the UE :
if the subband frequency domain resource comprises a downlink subband frequency domain resource, and the remaining frequency domain resource other than the downlink subband frequency domain resource in the uplink symbol is an uplink subband frequency domain resource, if there is an overlapping frequency domain resource between the BWP frequency domain resource of the downlink BWP and the downlink subband frequency domain resource, determine the overlapping frequency domain resource as the available frequency domain resource corresponding to the UE; if there is an overlapping frequency domain resource between the BWP frequency domain resource of the uplink BWP and the uplink subband frequency domain resource, determine the overlapping frequency domain resource as the available frequency domain resource corresponding to the UE; or, if the subband frequency domain resource comprises an uplink subband frequency domain resource, and the remaining frequency domain resource other than the uplink subband frequency domain resource in the uplink symbol is an uplink subband frequency domain resource, determine the BWP frequency domain resource of the uplink BWP and/or the uplink subband frequency domain resource as the available frequency domain resource corresponding to the UE.

73. The apparatus of claim 72, wherein if the subband frequency domain resource comprises a downlink subband frequency domain resource, and the remaining frequency domain resource other than the downlink subband frequency domain resource in the uplink symbol is an uplink subband frequency domain resource, the determining module is further configured to: if there is no overlapping frequency domain resource between the BWP frequency domain resource of the downlink BWP and the downlink subband frequency domain resource, prohibit determining the available frequency domain resource corresponding to the UE; if there is no overlapping frequency domain resource between the BWP frequency domain resource of the uplink BWP and the uplink subband frequency domain resource, prohibit determining the available frequency domain resource corresponding to the UE.

74. The apparatus of claim 69, wherein the target BWP frequency domain resource comprises a BWP frequency domain resource of the downlink BWP and/or a BWP frequency domain resource of the uplink BWP, and the subband frequency domain resource comprises at least one of a downlink subband frequency domain resource, an uplink subband frequency domain resource and a guard subband frequency domain resource; for a Flexible symbol for SBFD transmission, the determining module,when based on the target BWP frequency domain resource and the subband frequency domain resource corresponding to the UE, determining the available frequency domain resource corresponding to the UE, is configured to: if the subband frequency domain resource comprises a downlink subband frequency domain resource and the remaining frequency domain resource other than the downlink subband frequency domain resource in the Flexible symbol is an uplink subband frequency domain resource: if there is an overlapping frequency domain resource between the BWP frequency domain resource of the downlink BWP and the downlink subband frequency domain resource, determine the overlapping frequency domain resource as the available frequency domain resource corresponding to the UE;
if there is an overlapping frequency domain resource between the BWP frequency domain resource of the uplink BWP and the uplink subband frequency domain resource, determine the overlapping frequency domain resource as the available frequency domain resource corresponding to the UE;
if the subband frequency domain resource comprises a downlink subband frequency domain resource and the remaining frequency domain resource other than the downlink subband frequency domain resource in the Flexible symbol is a downlink subband frequency domain resource, determine the BWP frequency domain resource of the downlink BWP and/or the downlink subband frequency domain resource as the available frequency domain resource corresponding to the UE;
if the subband frequency domain resource comprises an uplink subband frequency domain resource and the remaining frequency domain resource other than the uplink subband frequency domain resource in the Flexible symbol is a downlink subband frequency domain resource, if there is an overlapping frequency domain resource between the BWP frequency domain resource of the downlink BWP and the downlink subband frequency domain resource, determine the overlapping frequency domain resource as the available frequency domain resource corresponding to the UE;
if there is an overlapping frequency domain resource between the BWP frequency domain resource of the uplink BWP and the uplink subband frequency domain resource, determine the overlapping frequency domain resource as the available frequency domain resource corresponding to the UE;
if the subband frequency domain resource comprises an uplink subband frequency domain resource and the remaining frequency domain resource other than the uplink subband frequency domain resource in the Flexible symbol is an uplink subband frequency domain resource, determine the BWP frequency domain resource of the uplink BWP and/or the uplink subband frequency domain resource as the available frequency domain resource corresponding to the UE.

75. The apparatus of claim 74, wherein the determining module is further configured to:
if the subband frequency domain resource comprises a downlink subband frequency domain resource and the remaining frequency domain resource other than the downlink subband frequency domain resource in the Flexible symbol is an uplink subband frequency domain resource, or, if the subband frequency domain resource comprises an uplink subband frequency domain resource and the remaining frequency domain resource other than the uplink subband frequency domain resource in the Flexible symbol is a downlink subband frequency domain resource: if there is no overlapping frequency domain resource between the BWP frequency domain resource of the downlink BWP and the downlink subband frequency domain resource, prohibit determining the available frequency domain resource corresponding to the UE; if there is no overlapping frequency domain resource between the BWP frequency domain resource of the uplink BWP and the uplink subband frequency domain resource, prohibit determining the available frequency domain resource corresponding to the UE.

76. The apparatus of claim 69, wherein the target BWP frequency domain resource comprises a BWP frequency domain resource of the downlink BWP and/or a BWP frequency domain resource of the uplink BWP, and the subband frequency domain resource comprises at least one of a downlink subband frequency domain resource, an uplink subband frequency domain resource and a guard subband frequency domain resource; for a Flexible symbol for SBFD transmission, the determining module is configured to, when based on the target BWP frequency domain resource and the subband frequency domain resource corresponding to the UE, determining the available frequency domain resource corresponding to the UE: if the subband frequency domain resource comprises a downlink subband frequency domain resource and the remaining frequency domain resource other than the downlink subband frequency domain resource in the Flexible symbol is an unknown subband frequency domain resource: if there is an overlapping frequency domain resource between the BWP frequency domain resource of the downlink BWP and the downlink subband frequency domain resource, determine the overlapping frequency domain resource as the available frequency domain resource corresponding to the UE;
if there is an overlapping frequency domain resource between the BWP frequency domain resource of the uplink BWP and the unknown subband frequency domain resource, determine the overlapping frequency domain resource as the available frequency domain resource corresponding to the UE;
if the subband frequency domain resource comprises an uplink subband frequency domain resource and the remaining frequency domain resource other than the uplink subband frequency domain resource in the Flexible symbol is an unknown subband frequency domain resource: if there is an overlapping frequency domain resource between the BWP frequency domain resource of the downlink BWP and the unknown subband frequency domain resource, determine the overlapping frequency domain resource as the available frequency domain resource corresponding to the UE;
if there is an overlapping frequency domain resource between the BWP frequency domain resource of the uplink BWP and the uplink subband frequency domain resource, determine the overlapping frequency domain resource as the available frequency domain resource corresponding to the UE.

77. The apparatus of claim 76, wherein the determining module is further configured to:
if the subband frequency domain resource comprises a downlink subband frequency domain resource and the remaining frequency domain resource other than the downlink subband frequency domain resource in the Flexible symbol is an unknown subband frequency domain resource: if there is an overlapping frequency domain resource between the BWP frequency domain resource of the uplink BWP and the unknown subband frequency domain resource, prohibit determining the available frequency domain resource corresponding to the UE;
if the subband frequency domain resource comprises an uplink subband frequency domain resource and the remaining frequency domain resource other than the uplink subband frequency domain resource in the Flexible symbol is an unknown subband frequency domain resource: if there is an overlapping frequency domain resource between the BWP frequency domain resource of the downlink BWP and the unknown subband frequency domain resource, prohibit determining the available frequency domain resource corresponding to the UE.

78. The apparatus of claim 68, wherein,
when sending the SBFD frequency domain resource configuration information to the UE, the sending module is specifically configured to:
send the SBFD frequency domain resource configuration information to the UE by a broadcast message; or,
send the SBFD frequency domain resource configuration information to the UE by an RRC message; or,
send the SBFD frequency domain resource configuration information to the UE by an MAC-CE message; or,
send the SBFD frequency domain resource configuration information to the UE by a DCI message.

79. The apparatus of claim 78, wherein the subband frequency domain resource comprises at least one of a downlink subband frequency domain resource, an uplink subband frequency domain resource and a guard subband frequency domain resource; if the subband frequency domain resource comprises a downlink subband frequency domain resource, the SBFD frequency domain resource configuration information comprises location information corresponding to the downlink subband frequency domain resource; or, if the subband frequency domain resource comprises an uplink subband frequency domain resource, the SBFD frequency domain resource configuration information comprises location information corresponding to the uplink subband frequency domain resource; or, if the subband frequency domain resource comprises a downlink subband frequency domain resource and an uplink subband frequency domain resource, the SBFD frequency domain resource configuration information comprises the location information corresponding to the downlink subband frequency domain resource and the UE derives the location information corresponding to the uplink subband frequency domain resource based on the location information corresponding to the downlink subband frequency domain resource and a frequency domain resource number; or, the SBFD frequency domain resource configuration information comprises the location information corresponding to the uplink subband frequency domain resource and the UE derives the location information corresponding to the downlink subband frequency domain resource based on the location information corresponding to the uplink subband frequency domain resource and the frequency domain resource number; or, the SBFD frequency domain resource configuration information comprises the location information corresponding to the uplink subband frequency domain resource and the location information corresponding to the downlink subband frequency domain resource; or,
if the subband frequency domain resource comprises a downlink subband frequency domain resource, an uplink subband frequency domain resource and a guard subband frequency domain resource, the SBFD frequency domain resource configuration information comprises the location information corresponding to the downlink subband frequency domain resource and the location information corresponding to the guard subband frequency domain resource, and the UE, based on the location information corresponding to the downlink subband frequency domain resource, the location information corresponding to the guard subband frequency domain resource and the frequency domain resource number, derives the location information corresponding to the uplink subband frequency domain resource; or, the SBFD frequency domain resource configuration information comprises the location information corresponding to the uplink subband frequency domain resource and the location information corresponding to the guard subband frequency domain resource, and the UE, based on the location information corresponding to the uplink subband frequency domain resource, the location information corresponding to the guard subband frequency domain resource and the frequency domain resource number, derives the location information corresponding to the downlink subband frequency domain resource; or, the SBFD frequency domain resource configuration information comprises the location information corresponding to the uplink subband frequency domain resource, the location information corresponding to the guard subband frequency domain resource and the location information corresponding to the downlink subband frequency domain resource; or, the SBFD frequency domain resource configuration information comprises the location information corresponding to the uplink subband frequency domain resource and the location information corresponding to the downlink subband frequency domain resource, and the UE, based on the location information corresponding to the uplink subband frequency domain resource, the location information corresponding to the downlink subband frequency domain resource and the frequency domain resource number, derives the location information corresponding to the guard subband frequency domain resource.

80. The apparatus of claim 79, wherein the location information corresponding to the downlink subband frequency domain resource comprises a start location of the downlink subband frequency domain resource and a number of PRBs occupied by the downlink subband frequency domain resource, or comprises the start location of the downlink subband frequency domain resource and an end location of the downlink subband frequency domain resource; the location information corresponding to the uplink subband frequency domain resource comprises a start location of the uplink subband frequency domain resource and a number of PRBs occupied by the uplink subband frequency domain resource, or, comprises the start location of the uplink subband frequency domain resource and an end location of the uplink subband frequency domain resource; the location information corresponding to the guard subband frequency domain resource comprises a start location of the guard subband frequency domain resource and a number of PRBs occupied by the guard subband frequency domain resource or comprises the start location of the guard subband frequency domain resource and an end location of the guard subband frequency domain resource.

81. The apparatus of claim 68, wherein the sending module is further configured to:
by a broadcast message or an RRC message, send to the UE SBFD enable information used to enable a SBFD function; wherein the broadcast message is a Master Information Block, MIB, messge or Secondary Information Block, SIB, message.

82. A resource assignment apparatus, applied to a User Equipment, UE, and comprising:
a receiving module, configured to receive Bandwidth Part, BWP, frequency domain resource configuration information sent by a base station device; wherein the BWP frequency domain resource configuration information comprises a mapping relationship between BWP identifier and BWP frequency domain resource; obtain a BWP activation configuration table; wherein the BWP activation configuration table comprises a mapping relationship between BWP indication information and BWP identifier configuration pair; receive a BWP activation configuration sent by the base station device;
an obtaining module, configured to obtain a target BWP identifier configuration pair corresponding to target BWP indication information comprised in the BWP activation configuration from the BWP activation configuration table, and based on the BWP frequency domain resource configuration information, determine a target BWP frequency domain resource associated with the target BWP identifier configuration pair;
a transmission module, configured to, based on the target BWP frequency domain resource, perform data transmission.

83. The apparatus of claim 82, wherein for each BWP identifier in the mapping relationship between BWP identifier and BWP frequency domain resource, the BWP identifier corresponds to K BWP frequency domain resources, wherein K is a positive integer; if K is greater than 1, the K BWP frequency domain resources are K discontinuous BWP frequency domain resources.

84. The apparatus of claim 82, wherein in the mapping relationship between BWP identifier and BWP frequency domain resource, if a downlink BWP and an uplink BWP correspond to a same BWP identifier, the BWP frequency domain resource of the downlink BWP corresponding to the BWP identifier is identical to or different from the BWP frequency domain resource of the uplink BWP corresponding to the BWP identifier.

85. The apparatus of claim 82, wherein if the downlink BWP and the uplink BWP correspond to a same BWP identifier and the BWP identifier corresponds to at least two BWP frequency domain resources of the downlink BWP, the at least two BWP frequency domain resources of the downlink BWP corresponding to the BWP identifier are discontinuous BWP frequency domain resources; and/or, if the downlink BWP and the uplink BWP correspond to a same BWP identifier and the BWP identifier corresponds to at least two BWP frequency domain resources of the uplink BWP, the at least two BWP frequency domain resources of the uplink BWP corresponding to the BWP identifier are discontinuous BWP frequency domain resources.

86. The apparatus of claim 85, wherein for a first BWP identifier and a second BWP identifier in the mapping relationship between BWP identifier and BWP frequency domain resource, a number of BWPs corresponding to the first BWP identifier is identical to or different from a number of BWPs corresponding to the second BWP identifier; wherein the first BWP identifier corresponds to at least one BWP frequency domain resource of a downlink BWP, or the first BWP identifier corresponds to at least one BWP frequency domain resource of an uplink BWP, or the first BWP identifier corresponds to at least one BWP frequency domain resource of the downlink BWP and at least one BWP frequency domain resource of the uplink BWP; the second BWP identifier corresponds to at least one BWP frequency domain resource of the downlink BWP and the second BWP identifier corresponds to at least one BWP frequency domain resource of the uplink BWP.

87. The apparatus of claim 86, wherein the first BWP identifier corresponds to one BWP frequency domain resource of the downlink BWP, or the first BWP identifier corresponds to one BWP frequency domain resource of the uplink BWP, or the first BWP identifier corresponds to one BWP frequency domain resource of the downlink BWP and one BWP frequency domain resource of the uplink BWP; the second BWP identifier corresponds to at least two BWP frequency domain resources of the downlink BWP and at least one BWP frequency domain resource of the uplink BWP, and the at least two BWP frequency domain resources of the downlink BWP are discontinuous BWP frequency domain resources; or, the second BWP identifier corresponds to at least one BWP frequency domain resource of the downlink BWP and at least two BWP frequency domain resources of the uplink BWP, and the at least two BWP frequency domain resources of the uplink BWP are discontinuous BWP frequency domain resources.

88. The apparatus of any one of claims 82 to 87, wherein when obtaining the BWP activation configuration table, the receiving module is specifically configured to: obtain an already-configured BWP activation configuration table; or, by a Radio Resource Control, RRC, message, receive a BWP activation configuration table sent by the base station device.

89. The apparatus of claim 88, wherein for each BWP identifier configuration pair in the BWP activation configuration table, the BWP identifier configuration pair is used to indicate a BWP identifier of a downlink BWP and a BWP identifier of an uplink BWP;
wherein if the target BWP identifier configuration pair is used to indicate the first BWP identifier of the downlink BWP and the second BWP identifier of the uplink BWP, and the first BWP identifier and the second BWP identifier are identical or different, the target BWP frequency domain resource comprises the BWP frequency domain resource of the downlink BWP corresponding to the first BWP identifier and the BWP frequency domain resource of the uplink BWP corresponding to the second BWP identifier.

90. The apparatus of claim 88, wherein for each BWP identifier configuration pair in the BWP activation configuration table, the BWP identifier configuration pair comprises a first configuration pair and a second configuration pair; the first configuration pair is used to indicate the BWP identifier of the downlink BWP and the BWP identifier of the uplink BWP, and the downlink BWP and the uplink BWP are used for a downlink slot or symbol, an uplink slot or symbol, and a flexible slot or symbol; the second configuration pair is used to indicate the BWP identifier of the downlink BWP and the BWP identifier of the uplink BWP, and the downlink BWP and the uplink BWP are used for a subband full duplex, SBFD, slot or symbol; in the downlink slot or symbol, the uplink slot or symbol and the flexible slot or symbol, if the first configuration pair in the target BWP identifier configuration pair is used to indicate the first BWP identifier of the downlink BWP and the second BWP identifier of the uplink BWP, the target BWP frequency domain resource comprises the BWP frequency domain resource of the downlink BWP corresponding to the first BWP identifier and the BWP frequency domain resource of the uplink BWP corresponding to the second BWP identifier; in the SBFD slot or symbol, if the second configuration pair in the target BWP identifier configuration pair is used to indicate a third BWP identifier of the downlink BWP and a fourth BWP identifier of the uplink BWP, the target BWP frequency domain resource comprises the BWP frequency domain resource of the downlink BWP corresponding to the third BWP identifier and the BWP frequency domain resource of the uplink BWP corresponding to the fourth BWP identifier.

91. The apparatus of any one of claims 82 to 87, wherein,
when receiving the BWP activation configuration sent by the base station device, the receiving module is specifically configured to:
by a Downlink Control Information, DCI, message, receive the BWP activation configuration sent by the base station device; or,
by a Media Access Control - Control Element, MAC-CE, message, receive the BWP activation configuration sent by the base station device; or,
by an RRC message, receive the BWP activation configuration sent by the base station device.

92. The apparatus of claim 91, wherein the BWP activation configuration comprises a switching flag and target BWP indication information; the obtaining module, when obtaining the target BWP identifier configuration pair corresponding to the target BWP indication information from the BWP activation configuration table, is specifically configured to: in a case where the switching flag is a first value, obtain the target BWP identifier configuration pair corresponding to the target BWP indication information from the BWP activation configuration table; in a case where the switching flag is a second value, prohibit obtaining the target BWP identifier configuration pair corresponding to the target BWP indication information from the BWP activation configuration table.

93. The apparatus of claim 91, wherein the BWP activation configuration comprises the target BWP indication information; the obtaining module, when obtaining the target BWP identifier configuration pair corresponding to the target BWP indication information from the BWP activation configuration table, is specifically configured to: if the target BWP indication information is not a target value, obtain the target BWP identifier configuration pair corresponding to the target BWP indication information from the BWP activation configuration table; the obtaining module is further configured to: if the target BWP indication information is the target value, prohibit obtaining the target BWP identifier configuration pair corresponding to the target BWP indication information from the BWP activation configuration table.

94. The apparatus of claim 91, wherein the receiving module is further configured to, within a BWP switching time, if the BWP frequency domain resource corresponding to the UE changes, receive an updated BWP activation configuration from the base station device, obtain from the BWP activation configuration table a target BWP identifier configuration pair corresponding to updated target BWP indication information comprised in the updated BWP activation configuration, and based on the BWP frequency domain resource configuration information, determine a target BWP frequency domain resource associated with the target BWP identifier configuration pair.

95. The apparatus of any one of claims 82 to 87, wherein,
the receiving module is further configured to, receive SBFD frequency domain resource configuration information sent by the base station device, where the SBFD frequency domain resource configuration information comprises a subband frequency domain resource; the transmission module, when performing data transmission based on the target BWP frequency domain resource, is configured to,: based on the target BWP frequency domain resource and the subband frequency domain resource, determine an available frequency domain resource; and based on the available frequency domain resource, perform data transmission.

96. The apparatus of claim 95, wherein,
the transmission module, when based on the available frequency domain resource, performing data transmission, is specifically configured to: during an access process of the UE, perform data transmission based on the available frequency domain resource; or, during an access process of the UE, perform data transmission based on the target BWP frequency domain resource;
after a successful access of the UE, perform data transmission based on the available frequency domain resource.

97. The apparatus of claim 95, wherein the target BWP frequency domain resource comprises the BWP frequency domain resource of the downlink BWP and/or the BWP frequency domain resource of the uplink BWP; the subband frequency domain resource comprises at least one of a downlink subband frequency domain resource, an uplink subband frequency domain resource and a guard subband frequency domain resource; for a downlink symbol for SBFD transmission, the transmission module, when based on the target BWP frequency domain resource and the subband frequency domain resource, determining the available frequency domain resource, is specifically configured to:
if the subband frequency domain resource comprises an uplink subband frequency domain resource, and a remaining frequency domain resource other than the uplink subband frequency domain resource in the downlink symbol is a downlink subband frequency domain resource, then: if there is an overlapping frequency domain resource between the BWP frequency domain resource of the downlink BWP and the downlink subband frequency domain resource, determine the overlapping frequency domain resource as the available frequency domain resource; if there is an overlapping frequency domain resource between the BWP frequency domain resource of the uplink BWP and the uplink subband frequency domain resource, determine the overlapping frequency domain resource as the available frequency domain resource; or, if the subband frequency domain resource comprises a downlink subband frequency domain resource, and the remaining frequency domain resource other than the downlink subband frequency domain resource in the downlink symbol is a downlink subband frequency domain resource, determine the BWP frequency domain resource of the downlink BWP and/or the downlink subband frequency domain resource as the available frequency domain resource.

98. The apparatus of claim 97, wherein,
if the subband frequency domain resource comprises an uplink subband frequency domain resource, and the remaining frequency domain resource other than the uplink subband frequency domain resource in the downlink symbol is a downlink subband frequency domain resource, the transmission module is further configured to: if there is no overlapping frequency domain resource between the BWP frequency domain resource of the downlink BWP and the downlink subband frequency domain resource, prohibit determining the available frequency domain resource; if there is no overlapping frequency domain resource between the BWP frequency domain resource of the uplink BWP and the uplink subband frequency domain resource, prohibit determining the available frequency domain resource.

99. The apparatus of claim 95, wherein the target BWP frequency domain resource comprises a BWP frequency domain resource of the downlink BWP and/or a BWP frequency domain resource of the uplink BWP, and the subband frequency domain resource comprises at least one of a downlink subband frequency domain resource, an uplink subband frequency domain resource and a guard subband frequency domain resource; for an uplink symbol for SBFD transmission, the transmission module, when based on the target BWP frequency domain resource and the subband frequency domain resource, determining the available frequency domain resource, is specifically configured to: if the subband frequency domain resource comprises a downlink subband frequency domain resource, and the remaining frequency domain resource other than the downlink subband frequency domain resource in the uplink symbol is an uplink subband frequency domain resource: if there is an overlapping frequency domain resource between the BWP frequency domain resource of the downlink BWP and the downlink subband frequency domain resource, determine the overlapping frequency domain resource as the available frequency domain resource; if there is an overlapping frequency domain resource between the BWP frequency domain resource of the uplink BWP and the uplink subband frequency domain resource, determine the overlapping frequency domain resource as the available frequency domain resource; or,
if the subband frequency domain resource comprises an uplink subband frequency domain resource, and the remaining frequency domain resource other than the uplink subband frequency domain resource in the uplink symbol is an uplink subband frequency domain resource, determine the BWP frequency domain resource of the uplink BWP and/or the uplink subband frequency domain resource as the available frequency domain resource.

100. The apparatus of claim 99, wherein if the subband frequency domain resource comprises a downlink subband frequency domain resource, and the remaining frequency domain resource other than the downlink subband frequency domain resource in the uplink symbol is an uplink subband frequency domain resource, the transmission module is further confiugured to: if there is no overlapping frequency domain resource between the BWP frequency domain resource of the downlink BWP and the downlink subband frequency domain resource, prohibit determining the available frequency domain resource; if there is no overlapping frequency domain resource between the BWP frequency domain resource of the uplink BWP and the uplink subband frequency domain resource, prohibit determining the available frequency domain resource.

101. The apparatus of claim 95, wherein the target BWP frequency domain resource comprises a BWP frequency domain resource of the downlink BWP and/or a BWP frequency domain resource of the uplink BWP, and the subband frequency domain resource comprises at least one of a downlink subband frequency domain resource, an uplink subband frequency domain resource and a guard subband frequency domain resource; for a Flexible symbol for SBFD transmission, the transmission module, when based on the target BWP frequency domain resource and the subband frequency domain resource, determining the available frequency domain resource, is specifically configured to:
if the subband frequency domain resource comprises a downlink subband frequency domain resource and the remaining frequency domain resource other than the downlink subband frequency domain resource in the Flexible symbol is an uplink subband frequency domain resource, then: if there is an overlapping frequency domain resource between the BWP frequency domain resource of the downlink BWP and the downlink subband frequency domain resource, determine the overlapping frequency domain resource as the available frequency domain resource;
if there is an overlapping frequency domain resource between the BWP frequency domain resource of the uplink BWP and the uplink subband frequency domain resource, determine the overlapping frequency domain resource as the available frequency domain resource;
if the subband frequency domain resource comprises a downlink subband frequency domain resource and the remaining frequency domain resource other than the downlink subband frequency domain resource in the Flexible symbol is a downlink subband frequency domain resource, determine the BWP frequency domain resource of the downlink BWP and/or the downlink subband frequency domain resource as the available frequency domain resource;
if the subband frequency domain resource comprises an uplink subband frequency domain resource and the remaining frequency domain resource other than the uplink subband frequency domain resource in the Flexible symbol is a downlink subband frequency domain resource, then: if there is an overlapping frequency domain resource between the BWP frequency domain resource of the downlink BWP and the downlink subband frequency domain resource, determine the overlapping frequency domain resource as the available frequency domain resource;
if there is an overlapping frequency domain resource between the BWP frequency domain resource of the uplink BWP and the uplink subband frequency domain resource, determine the overlapping frequency domain resource as the available frequency domain resource;
if the subband frequency domain resource comprises an uplink subband frequency domain resource and the remaining frequency domain resource other than the uplink subband frequency domain resource in the Flexible symbol is an uplink subband frequency domain resource, determine the BWP frequency domain resource of the uplink BWP and/or the uplink subband frequency domain resource as the available frequency domain resource.

102. The apparatus of claim 101, the transmission module is further configured to:
if the subband frequency domain resource comprises a downlink subband frequency domain resource and the remaining frequency domain resource other than the downlink subband frequency domain resource in the Flexible symbol is an uplink subband frequency domain resource, or, if the subband frequency domain resource comprises an uplink subband frequency domain resource and the remaining frequency domain resource other than the uplink subband frequency domain resource in the Flexible symbol is a downlink subband frequency domain resource, then,
if there is no overlapping frequency domain resource between the BWP frequency domain resource of the downlink BWP and the downlink subband frequency domain resource, prohibit determining the available frequency domain resource; if there is no overlapping frequency domain resource between the BWP frequency domain resource of the uplink BWP and the uplink subband frequency domain resource, prohibit determining the available frequency domain resource.

103. The apparatus of claim 95, wherein the target BWP frequency domain resource comprises a BWP frequency domain resource of the downlink BWP and/or a BWP frequency domain resource of the uplink BWP, and the subband frequency domain resource comprises at least one of a downlink subband frequency domain resource, an uplink subband frequency domain resource and a guard subband frequency domain resource; for a Flexible symbol for SBFD transmission, the transmission module, when based on the target BWP frequency domain resource and the subband frequency domain resource, determining the available frequency domain resource, is specifically configured to:
if the subband frequency domain resource comprises a downlink subband frequency domain resource and the remaining frequency domain resource other than the downlink subband frequency domain resource in the Flexible symbol is an unknown subband frequency domain resource, then: if there is an overlapping frequency domain resource between the BWP frequency domain resource of the downlink BWP and the downlink subband frequency domain resource, determine the overlapping frequency domain resource as the available frequency domain resource;
if there is an overlapping frequency domain resource between the BWP frequency domain resource of the uplink BWP and the unknown subband frequency domain resource, determine the overlapping frequency domain resource as the available frequency domain resource;
if the subband frequency domain resource comprises an uplink subband frequency domain resource and the remaining frequency domain resource other than the uplink subband frequency domain resource in the Flexible symbol is an unknown subband frequency domain resource, then: if there is an overlapping frequency domain resource between the BWP frequency domain resource of the downlink BWP and the unknown subband frequency domain resource, determine the overlapping frequency domain resource as the available frequency domain resource;
if there is an overlapping frequency domain resource between the BWP frequency domain resource of the uplink BWP and the uplink subband frequency domain resource, determine the overlapping frequency domain resource as the available frequency domain resource.

104. The apparatus of claim 103, wherein the transmission module is further configured to:
if the subband frequency domain resource comprises a downlink subband frequency domain resource and the remaining frequency domain resource other than the downlink subband frequency domain resource in the Flexible symbol is an unknown subband frequency domain resource, if there is an overlapping frequency domain resource between the BWP frequency domain resource of the uplink BWP and the unknown subband frequency domain resource, prohibit determining the available frequency domain resource;
if the subband frequency domain resource comprises an uplink subband frequency domain resource and the remaining frequency domain resource other than the uplink subband frequency domain resource in the Flexible symbol is an unknown subband frequency domain resource, if there is an overlapping frequency domain resource between the BWP frequency domain resource of the downlink BWP and the unknown subband frequency domain resource, prohibit determining the available frequency domain resource.

105. The apparatus of claim 95, wherein when receiving the SBFD frequency domain resource configuration information sent by the base station device, the receiving module is specifically configured to:
by a broadcast message, receive the SBFD frequency domain resource configuration information sent by the base station device; or,
by an RRC message, receive the SBFD frequency domain resource configuration information sent by the base station device; or,
by an MAC-CE message, receive the SBFD frequency domain resource configuration information sent by the base station device; or,
by a DCI message, receive the SBFD frequency domain resource configuration information sent by the base station device.

106. The apparatus of claim 105, wherein the subband frequency domain resource comprises at least one of a downlink subband frequency domain resource, an uplink subband frequency domain resource and a guard subband frequency domain resource; if the subband frequency domain resource comprises a downlink subband frequency domain resource, the SBFD frequency domain resource configuration information comprises location information corresponding to the downlink subband frequency domain resource; or, if the subband frequency domain resource comprises an uplink subband frequency domain resource, the SBFD frequency domain resource configuration information comprises location information corresponding to the uplink subband frequency domain resource; or, if the subband frequency domain resource comprises a downlink subband frequency domain resource and an uplink subband frequency domain resource, the SBFD frequency domain resource configuration information comprises the location information corresponding to the downlink subband frequency domain resource and the UE derives the location information corresponding to the uplink subband frequency domain resource based on the location information corresponding to the downlink subband frequency domain resource and a frequency domain resource number; or, the SBFD frequency domain resource configuration information comprises the location information corresponding to the uplink subband frequency domain resource and the UE derives the location information corresponding to the downlink subband frequency domain resource based on the location information corresponding to the uplink subband frequency domain resource and the frequency domain resource number; or, the SBFD frequency domain resource configuration information comprises the location information corresponding to the uplink subband frequency domain resource and the location information corresponding to the downlink subband frequency domain resource; or,
if the subband frequency domain resource comprises a downlink subband frequency domain resource, an uplink subband frequency domain resource and a guard subband frequency domain resource, the SBFD frequency domain resource configuration information comprises the location information corresponding to the downlink subband frequency domain resource and the location information corresponding to the guard subband frequency domain resource, and the UE, based on the location information corresponding to the downlink subband frequency domain resource, the location information corresponding to the guard subband frequency domain resource and the frequency domain resource number, derives the location information corresponding to the uplink subband frequency domain resource; or, the SBFD frequency domain resource configuration information comprises the location information corresponding to the uplink subband frequency domain resource and the location information corresponding to the guard subband frequency domain resource, and the UE, based on the location information corresponding to the uplink subband frequency domain resource, the location information corresponding to the guard subband frequency domain resource and the frequency domain resource number, derives the location information corresponding to the downlink subband frequency domain resource; or, the SBFD frequency domain resource configuration information comprises the location information corresponding to the uplink subband frequency domain resource, the location information corresponding to the guard subband frequency domain resource and the location information corresponding to the downlink subband frequency domain resource; or, the SBFD frequency domain resource configuration information comprises the location information corresponding to the uplink subband frequency domain resource and the location information corresponding to the downlink subband frequency domain resource, and the UE, based on the location information corresponding to the uplink subband frequency domain resource, the location information corresponding to the downlink subband frequency domain resource and the frequency domain resource number, derives the location information corresponding to the guard subband frequency domain resource.

107. The apparatus of claim 106, wherein the location information corresponding to the downlink subband frequency domain resource comprises a start location of the downlink subband frequency domain resource and a number of PRBs occupied by the downlink subband frequency domain resource, or comprises the start location of the downlink subband frequency domain resource and an end location of the downlink subband frequency domain resource; the location information corresponding to the uplink subband frequency domain resource comprises a start location of the uplink subband frequency domain resource and a number of PRBs occupied by the uplink subband frequency domain resource, or, comprises the start location of the uplink subband frequency domain resource and an end location of the uplink subband frequency domain resource; the location information corresponding to the guard subband frequency domain resource comprises a start location of the guard subband frequency domain resource and a number of PRBs occupied by the guard subband frequency domain resource or comprises the start location of the guard subband frequency domain resource and an end location of the guard subband frequency domain resource.

108. The apparatus of claim 95, wherein the receiving module is further configured to: by a broadcast message or an RRC message, receive from the base station device SBFD enable information used to enable a SBFD function; wherein the broadcast message is a Master Information Block, MIB, message or Secondary Information Block, SIB, message.

109. An electronic device, comprising a processor and a machine readable storage medium, wherein the machine readable storage medium stores machine executable instructions executable by the processor; the processor is configured to execute the machine executable instructions to perform the methods of any one of claims 1 to 54.
